(19) Europäisches Patentamt
European Patent Office
Office européen des brevets

(11) EP 0 493 320 B1

(12) **EUROPEAN PATENT SPECIFICATION**

(45) Date of publication and mention of the grant of the patent:
**31.07.1996 Bulletin 1996/31**

(51) Int Cl.6: **C08F 299/02**, C08F 283/06, G02C 7/04 // (C08F283/06, 214:00)

(21) Application number: **91810967.9**

(22) Date of filing: **11.12.1991**

(54) **Fluorine and/or Silicone containing poly(alkylene-oxide)-block copolymer hydrogels and contact lenses thereof**

Fluorid und/oder Silikon enthaltende Poly(alkylenoxid)-Block-Copolymere und Kontaktlinsen

Copolymères bloc poly(alkylène-oxyde) contenant du fluor et/ou du silicone et lentilles de contact

(84) Designated Contracting States:
**AT BE CH DE DK ES FR GB GR IT LI LU NL SE**

(30) Priority: **20.12.1990 US 630711**

(43) Date of publication of application:
**01.07.1992 Bulletin 1992/27**

(73) Proprietor: **CIBA-GEIGY AG**
**4002 Basel (CH)**

(72) Inventors:
- **Mueller, Karl F.**
  **New York, New York 10024 (US)**
- **Plankl, Walter L.**
  **Yorktown Heights, New York 10598 (US)**

(56) References cited:
**EP-A- 0 084 406**
**EP-A- 0 379 462**
**EP-A- 0 406 161**

EP 0 493 320 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

Two classes of contact lenses can be distinguished by the way they are fitted to the eye. In hard lenses the fit is flatter than the cornea itself and the lens rocks back and forth with each eye lid blink, pumping tear fluid and thereby oxygen, as well as cell debris under and from under the lens. Hard lenses are preferred whenever excellent visual acuity is desired and difficult vision corrections are required, for instance in the case of astigmatism. They are however less comfortable for the wearer than are soft lenses, the second class of contact lenses. Soft contact lenses derive their name from their low modulus and draping quality, which allows them to smoothly cover the cornea surface. They are fitted to match the cornea as closely as possible and they are not much disturbed by the eyelid. Because of their tight adherence to the cornea, they have to possess sufficient oxygen permeability to keep the cornea well supplied with oxygen.

In the most common soft lens material - ~ 40% water containing poly-(2-hydroxyethyl methacrylate) or poly-HEMA - water provides for sufficient oxygen flux to allow poly-HEMA lenses to be worn on a daily basis. The oxygen permeability $O_2$.DK of a poly-HEMA hydrogel with ~ 40% water is 6.5 barrers, and for hydrogels with higher water content, for example poly-(N-vinylpyrrolidone) or poly-(vinyl alcohol) copolymers it is ~ 12.5 at 50% water, 15.5 at 60% water and 25 at 70% water. Such higher water-content hydrogels allow therefore the manufacture of soft contact lenses for extended wear, up to several months, subject only to periodic cleaning. Unfortunately, high water content hydrogels are also very fragile, especially if they are cut very thin, as they often are in order to increase oxygen flux.

Another class of soft contact lens materials are polysiloxane rubbers (PDMSi), which can have $O_2$.DK values up to 500 barrers. Several polysiloxane based soft contact lens materials have been described, among them: conventional PDMSi rubbers produced by a hydrosilation cure; PDMSi-polyurethanes and PDMSi-polyacrylate block copolymers. All these materials suffer from an inherent lack of wettability and therefore require some kind of surface treatment to achieve the wettability required for comfortable and safe in-eye wear.

For non-hydrogel, water free contact lens compositions, siloxane units containing polymers have been used both, for soft contact lenses and hard contact lenses with enhanced oxygen permeability; fluorinated groups, which are another group of oxygenflux enhancing moieties, have only been used in hard contact lens materials although they would be preferable to siloxane groups in non-hydrogel soft lenses as well because of their low lipophilicity and low protein adsorption tendencies.

In hydrogel soft contact lens materials on the other hand, siloxane as well as fluorine has been used to enhance the oxygen permeability and many such silicone or fluorine containing hydrogels have been described in the literature for use as contact lens materials. Such silicone and/or fluorine containing hydrogels can possess oxygen permeabilities 3-8 times that of Si- or F-free hydrogels and at the same time retain some of the good wenability of hydrogels.

Polysiloxane hydrogels which are water swollen copolymers of 2-hydroxyethyl methacrylate or N-vinyl-pyrrolidone (NVP) with di- or tri-methacrylate functional poly-(dimethylsiloxane) have been described in U. S. Patent No. 4,136,250 for use as a drug delivery matrix, but also for contact lenses. Copolymers of tri-siloxy-hydroxy alkyl methacrylate with HEMA and/or NVP are described in U.S. Patent Nos. 4,139,692 and 4, 139,513, and copolymers of $C_1$-$C_4$-dialkylacrylamides with oligosiloxanyl-silylalkyl-methacrylates are described in U.S. Patent Nos. 4,182,822 and 4,343,927, also for use as oxygen permeable hydrogel contact lenses. U.S. Patent No. 4,711,943 describes essentially similar Si-containing acrylic hydrogels.

Fluorinated hydrogels for use as soft contact lens materials are also known:

U.S. Patent Nos. 4,433,111 and 4,493,910 describe hydrogels and contact lenses obtained by copolymerization of 20-40 mol %, substituted or unsubstituted acrylamide or methacrylamide; 25-55 mol % N-vinylpyrrolidone (NVP); 5-20% mol % hydroxyalkyl(meth)-acrylate; 1-10 mol % (meth)-acrylic acid, and 1-9 mol % of a perfluoroalkyl-alkylene (meth)-acrylate; the perfluoroalkyl groups act to to reduce protein deposition.

U.S. Patent No. 4,640,965 describes hydrogels and contact lenses obtained by copolymerization of hydroxyfluoralkylstyrene (5-60%, by weight), with hydroxyalkyl (meth)-acrylates or N-vinylpyrrolidone (40-95%, by weight); the hydroxy groups are necessary to attain the required compatibility.

U.S. Patent No. 4,638,040 describes the synthesis of 1,3-bis(trifluoroacetoxy)propyl-2-methacrylate polymers and their use as hydrogel-contact lens materials or as ocular implants after hydrolysis.

U.S. Patent No. 4,650,843 describes hydrogel contact lens materials consisting essentially of copolymers of 50-95% (by weight) of 2-hydroxyethyl-methacrylate and 5-35% (by weight) of fluorinated methacrylates with up to 5 F-atoms.

Copolymers of N,N-dimethylacrylamide (DMA) with perfluoroalkylacrylates or methacrylates are described in European patent application 351 364 for use as oxygen permeable hydrogel contact lenses.

In all the cited prior-art is the hydrophilic component based of water-soluble vinyl monomers, like HEMA, NVP or DMA, which are copolymerized with silicone and/or fluorine containing monomers or prepolymers. Although a great variety of Si or F containing hydrogels can be prepared with these hydrophilic monomers, they all possess as hydrophilic component a carbon-carbon backbone polymer, for the specific requirements of long-term in-eye use, contact lenses

with poly-(ethylene oxide) (PEO) as hydrophilic component would be preferable since PEO is considered to have better biocompatibility and less lipid and protein adsorption problems. Less protein adsorption generally means less discoloration, better wettability and comfort, and generally a longer uselife for a contact lens.

Poly-(ethylene oxide) as part of a silicone containing hydrogel is included also in U.S. Patent No. 4,136,250, in form of dimethacrylate-(PEO)-(PDMSi)-(PEO) block copolymers, copolymerized with HEMA or NVP; the amount of PEO incorporated into the polymer is limited due to the presence of the other comonomers. Similar poly-(propylene oxide)-PDMSi block copolymers are disclosed in U.S. Patent No. 4,740,533 although this patent is directed toward essentially water free polymers for contact lenses.

Poly-(ethylene oxide) as part of fluorine containing hydrophilic polymers are also described: U.S. Patent No. 3,728,151 describes PEO block copolymer with perfluoroalkyl (- $R_f$) acrylates and -methacrylates, obtained by chain transfer polymerization with PEO-dithiols; by virtue of their synthesis method these polymers are linear, non-crosslinked, low molecular weight polymers of the A-B-A block type; their use is in textile finishing, where they import anti-soiling and soil-releasing, self-washing properties.

U.S. Patent No. 4,046,944 describes block copolyurethane-ureas prepared from PEO-diols and PEO-diamines, bis-perfluoroalkyl substituted butane diols and diisocyanates, also for use in textile finishing as soil-release agents. This polymer too is not crosslinked and therefore not a hydrogel, and of limited molecular weight.

EP-A-379,462 discloses vinylic macromers containing perfluoropolyalkylether and polyalkylether segments, polymers, copolymers and ophthalmic devices made therefrom. In contrast to the present invention, the presence of perfluoropolyalkylether segments, wherein fluorine is bonded to carbon atoms of the polymer backbone, is mandatory according to said reference.

Similarly to the above, EP-A-084,406 discloses ophthalmic devices comprising a polymer of a telechelic perfluoropolyether. Again in contrast to the present invention, the presence of perfluoropolyether segments, wherein fluorine is bonded to carbon atoms of the polymer backbone, is mandatory according to said reference.

EP-A-406,161 discloses fluorine and/or silicone containing poly(alkylene-oxide)-block copolymers and contact lenses thereof, however, said copolymers do not comprise an additional crosslinker. This application has not been published before the first date claimed for the present invention.

No PEO and F-containing hydrogels are described in the prior art for use in biomaterials and contact lenses. This is probably due to the difficulty in making clear compositions of high molecular weight; since the PEO-hydrophile is a pre-polymeric unit of at least 1,000 MW, the F-containing part of the polymer has to be present in a polymeric form as well; block-copolymers of this type are clear only if the blocks are sufficiently short and association between blocks are in size smaller than the wavelenght of light. PEO and F-blocks are especially difficult to combine into a clear copolymer because of the inherent incompatibility of their prepolymeric and monomeric precursors and their very different refraction indices.

It has now unexpectedly been discovered that novel, crosslinked, clear, wettable and highly oxygen permeable poly(ethylene oxide) and fluorine or silicone containing block-copolymers can be prepared, if $\alpha,\omega$-divinyl functionalized PEO-prepolymers are copolymerized with perfluoroalkylacrylates or methacrylates and/or oligosiloxy-silylalkyl acrylates or methacrylates together with a poly-ethylenically unsaturated monomer which acts as a crosslinking monomer for the fluorine or silicone containing phase of the novel polymers. The polymerization is carried out in the presence either of a third comonomer acting as a solvent, or a non-reactive solvent or solvent mixture, capable of dissolving all monomeric components.

After synthesis, the polymers can be transformed by equilibration in water into flexible, clear, wettable and oxygen permeable hydrogels, which are useful in biomedical application, as oxygen permeable films and coatings and especially as deposit resistant, highly oxygen permeable contact lenses.

It has further been discovered, that clear block-copolymers with analogous structures can also be made with polypropylene oxide and poly-tetramethylene oxide as polyether blocks. These block copolymers are strong, flexible, $O_2$-permeable and, despite a low (< 5%) water content, highly wettable and are therefore useful in many of the abovementioned applications.

The instant invention pertains to copolymers which are oxygen permeable, flexible, wettable, biocompatible and suitable for use in ophthalmic devices, such as contact lenses, which copolymers comprise the polymerization product of

(A) 15 to 69.9% by weight of a vinyl-telechelic polyether, or a mixture thereof, wherein said polyether does not contain perfluoropolyalkylether segments,
(B) 30 to 84.9% by weight of
(B-1) a fluorinated, ethylenically unsaturated monomer, or
(B-2) a silicone-containing ethylenically unsaturated monomer, or a mixture of monomer (B-1) and monomer (B-2),
(C) 0 to 40% by weight of an ethylenically unsaturated monomer or mixture of monomers other than monomer (B-1) or monomer (B-2), and

(D) 0.1 to 10% by weight of a polyethylenically unsaturated comonomer of 200 to 1000 molecular weight, such as a di- or polyvinyl monomer of 200 to 1000 molecular weight.

Preferred subembodiments of the invention are disclosed in claims 2 to 44.

Preferred are copolymers wherein component (A) is 15 to 49.5% by weight, (B) is 50 to 84.5% by weight, component (C) is 0 to 20% by weight and component (D) is 0.5 to 7% by weight of said copolymer. It is also preferred that component (A) is 25 to 49.5% by weight.

The vinyl-telechelic polyether (A) preferably has the formula:

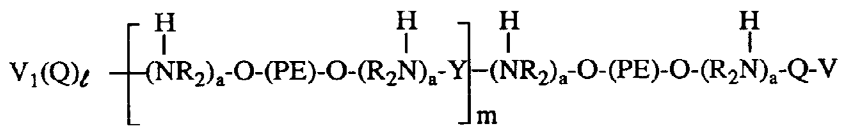 (A)

wherein PE has a number average molecular weight ($MW_n$) of about 500 to about 15000 and preferably has the formula:

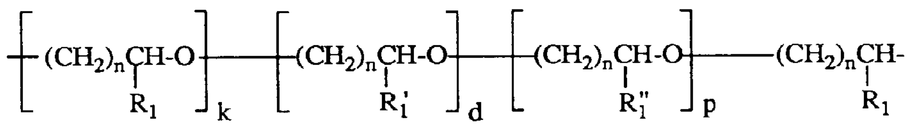 (PE)

wherein n is 1 to 3,
k, d and p are integers from 0 to 300, and the sum of k+d+p is 7 to 300,
$R_1$, $R_1'$ and $R_1''$ are independently of each other hydrogen or methyl, with the proviso that if n is 3, $R_1$, $R_1'$ and $R_1''$ are hydrogen, thus describing the backbones of poly(ethylene oxide), poly-(propylene oxide) and poly-(butylene oxide), but also block-copolymers of the aforementioned alkylene oxides,

a is zero or 1,
m is an integer from zero to 2,
$\ell$ is zero or 1,
$R_2$ is linear or branched alkylene with 2 to 4 carbon atoms;
Y is

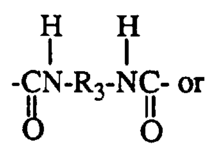 or 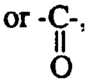,

wherein $R_3$ is a divalent aliphatic group with 2 to 14 carbon atoms, a divalent 5- or 6-membered cycloaliphatic group with 5 to 15 C-atoms, or an arylene group with 6 to 14 C-atoms, with the proviso, that if Y is

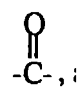,

a is 1;
Q is selected from (shown as attached to V):

$Q_1V$ = 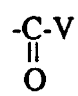

$Q_2V$= 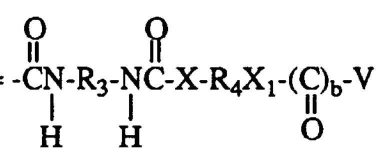

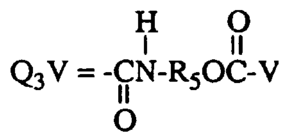

and

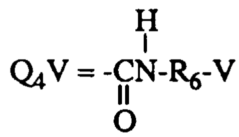

wherein

$R_4$ is alkylene of 2 to 4 carbon atoms,
$R_5$ is alkylene of 2 to 10 carbon atoms,
$R_6$ is arylene or alkyl-substituted arylene of 6 to 20 carbon atoms,
X is -O- or $-NR_7-$, wherein $R_7$ is alkyl of 1 to 5 carbon atoms,
$X_1$ is -O-, -NH- or $-NR_7-$,
b is zero or 1,
V is

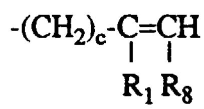

c is zero or 1,
$V_1$ has same meaning as V, or is H or $R_9$, when $\ell$ is zero,
$R_8$ is H or -COOH, with the proviso that, if $R_8$ is -COOH, $R_1$ is H, c is zero, and Q is $Q_1$;
$R_9$ is alkyl of 1 to 18 carbon atoms;
with the further proviso that
when Q is $Q_2$, a is zero;
when Q is $Q_2$, $Q_3$ or $Q_4$, $R_8$ is H;
when c is 1, b is zero, Q is $Q_2$ and $R_1$ and $R_8$ are H; and
when $V_1$ is $R_9$, m is zero.

The foregoing description for (A) thus includes poly(alkylene oxide) diols and $\alpha,\omega$-diaminoalkyl poly(alkylene oxides) (a = 1), of about 500 to about 15000 molecular weight, optionally chain-extended with diisocyanates (m > 0) and endcapped either directly with vinyl unsaturated isocyanates, preferably 2-isocyanatoethyl methacrylate (IEM) or m-isopropenyl-$\alpha,\alpha$-dimethylbenzyl isocyanate (TMI) (Q = $Q_3$ and $Q_4$); included are also the same poly-(alkylene oxides) capped with diisocyanates, followed by reaction with amino- or hydroxy- alkyl acrylates, -methacrylates, -acrylamides or -methacrylamides, hydroxyalkyl vinyl ether or allyl alcohol (Q = $Q_2$);
as well as direct ester or amides (Q = $Q_1$).

If less than equivalent molar amounts of capping reactants are used, some of the vinyltelechelic macromers are terminated by vinyl groups only on one end ($V_1$ = H or $R_9$).

Thus, the vinyl unsaturated groups are bonded to the poly-(alkyleneoxide) chain ends, either directly by ester or amide linkages (Q = $Q_1$); by two urethane or urea linkages and one ester or amide linkage (Q = $Q_2$), or by one urethane or urea and one ester linkage (Q = $Q_3$), or by a urea linkage alone (Q = $Q_4$).

Preferred are poly-(alkylene oxide) vinyl unsaturated prepolymers of structures (A) where Q is of structure $Q_2$, $Q_3$ or $Q_4$; most preferred are prepolymers (A) where PE is poly-(ethylene oxide), poly-(propylene oxide) or poly-(ethylene oxide-co-propylene oxide), and Q is of structures $Q_3$ or $Q_4$ and a is 1.

Preferred vinyl unsaturated groups V are segments of acrylic, methacrylic and styrenic groups, with methacrylic and styrenic groups being most preferred.

Preferred groups $R_3$ are the diradical residues of divalent aliphatic diisocyanates with 6-12 carbon atoms, of divalent cycloaliphatic diisocyanates with 6-15 carbon atoms and of divalent aromatic diisocyanates with 6 to 10 carbon atoms.

Most preferred are the diradical residues of isophorone diisocyanate and of 2,4,4(2,2,4)-trimethylbexane- 1,6-diisocyanate.

Preferred groups $R_5$ are ethylene, propylene and butylene, with ethylene being most preferred.

Preferred groups $R_6$ are phenylene and alpha, alpha-dimethylbenzylene with alpha, alpha-dimethylbenzylene being most preferred.

Useful polyethers PE include: poly-(ethylene oxide) (PEO) diols of 500-12000 MW; poly-(propylene oxide) (PPO) diols of 500-15000 MW; a poly-(ethylene oxide -co-propylene oxide) diol of random or block copolymer structure in ratios of PEO:PPO from 1:30 to 30:1 and with 500-15000 MW; poly-(tetra-methylene oxide) (PTMO) diols with 500-10000MW.

It is within the scope of the present invention to use not only the di-functional polyethers of structure (A), but also a great variety of tri- or tetrafunctional poly-ether alkanols, as they can be easily prepared by alkoxylation of triols, amines or diamines;

tetra-(polyalkylene oxide)-alkanols are for instance known under the tradename TETRONIC (BASF) and are alkylene oxide adducts to ethylene diamine. Also useful are products known as ETHOMEEN (AKZO Chemie) surfactants, which are ethylene oxide adducts to $C_1$-$C_{18}$ alkyl amines. By amination the corresponding tri- or tetra-amines can be prepared, for example, the amination products of propylene oxide adducts to glycerol or trimethylol-propane are available as JEFFAMINE-T from Texaco Chem. Corp. and are also useful in the context of this invention.

Preferred are $\alpha,\omega$-di-(aminopropyl) PEO of 1500-10000 MW; and $\alpha,\omega$-di-(aminopropyl) PPO of 1000-8000 MW and $\alpha,\omega$-di-(aminopropyl)poly-(ethylene oxide-co-propylene oxide) of 1500 to 12000 MW. Most preferred are $\alpha,\omega$-di-(aminopropyl)-PEO and $\alpha,\omega$-di-(aminopropyl)-PPO or $\alpha,\omega$-di-(aminopropyl) (ethyleneoxide-co-propylene oxide) of 2000-10000 MW, where the aminopropyl group $-R_2-NH_2$ is of structure:

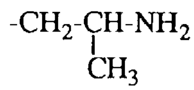

These amino terminated poly(alkylene oxides) are prepared, for example by amination of the corresponding diols and are commercially available under the tradename JEFFAMINE from Texaco Chem. Corp.

Diisocyanates of structure $R_3-(NCO)_2$ useful to form the prepolymer intermediate before capping with a reactive vinyl monomer, are aliphatic, cycloaliphatic or aromatic diisocyanates or mixtures thereof selected from the group consisting of ethylene diisocyanate, 1,2-diisocyanatopropane, 1,3-diisocyanatopropane, 1,6-diisocyanatohexane, 1,2-diisocyanatocyclohexane, 1,3-diisocyanatocyclohexane, 1,4-diisocyanatobenzene, bis(4-isocyanatocyclohexyl) methane, bis (4-isocyanatocyclohexenyl)methane, bis(4-isocyanatophenyl)-methane, 2,6- and 2,4-toluene diisocyanate; 3,3'-dichloro-4,4'-diisocyanatobiphenyl; 1,5-diisocyanatonaphthalene, hydrogenated toluene diisocyanate; 1-isocyanatomethyl-5-isocyanato-1,3,3-trimethylcyclohexane (=isophorone diisocyanate); 2,2,4-(2,4,4)-trimethylhexane-1,6-diisocyanate, 2,2'-diisocyanatodiethyl fumarate; 1,5-diisocyanatol-carboxypentane; 1,2-, 1,3-, 1,6-, 1,7-, 1,8-, 2,7- and 2,3-diisocyanatonaphthalene; 2,4- and 2,7-diisocyanato- 1-methylnaphthalene; 4,4'-diisocyanatobiphenyl; 4,4′-diisocyanato-3,3′-dimethoxy-bisphenyl; 4,4'-diisocyanato-2, 2'-dimethyl biphenyl; bis-(4-isocyanatophenyl) ethane; and bis(4-isocyanatophenyl) ether.

The preferred diisocyanates are isophorone diisocyanate, 2,2,4-(2,4,4)-trimethyl-hexane-1,6-diisocyanate and 2,4- and 2,6-toluene diisocyanate.

Unsaturated, polymerizable vinyl compounds of structure $V-(CO)_b-X_1R_4XH$ useful to react with the NCO-capped poly-(alkylene oxides) contain hydroxy or amino groups and are selected from the groups consisting of acrylic, methacrylic, acrylamido, methacryl-amido, vinyl ether, styrene, allyl, maleate, fumarate and itaconate moieties. Typical examples include: 2-hydroxyethyl acrylate and methacrylate, 2- and 3-hydroxypropyl acrylate and methacrylate; 4-hydroxybutyl acrylate and methacrylate; glycerol dimethacrylate; hydroxyethyl maleate and fumarate; 2-hydroxyethyl- and 4-hydroxy-butyl vinyl ether, N-tert.-butyl-aminoethyl methacrylate, N-(3-hydroxypropyl)-methacrylamide; vinylbenzyl alcohol; allyl alcohol.

Preferred active hydrogen containing vinyl compounds are 2-hydroxyethyl acrylate and methacrylate and N-tert.-butyl-aminoethyl methacrylate.

Vinyl unsaturated isocyanates of structure $V-COOR_5NCO$ or $V-R_6-NCO$ useful to make the vinyl-telechelic poly-(alkylene oxides) in one step include 2-isocyanatoethyl methacrylate, 2-isocyanatoethyl acrylate, 3-isocyanatopropyl methacrylate, 1-methyl-2-isocyanatoethyl methacrylate, and 1,1 -dimethyl-2-isocyanatoethyl acrylate.

Such compounds and their preparation are disclosed, for example, in U.S. Patent No 2,718,516 and British Patent No. 1,252,099.

Other useful isocyanates include isocyanatoalkyl vinyl ethers, such as 2-isocyanatobutyl vinyl ether, and styrene isocyanate and m-isopropenyl-alpha, alpha- dimethylbenzyl isocyanate. Also useful are isocyanates obtained by the reaction of one mole of a hydroxy-or aminoalkyl acrylate or methacrylate with one mole of a diisocyanate of structure $R_3(NCO)_2$. Examples of useful such acrylates and methacrylates include 2-hydroxyethyl methacrylate, 2-hydroxyethyl acrylate, 3-hydroxypropyl methacrylate, or t-butylamino-ethyl methacrylate; suitable diisocyanates include isophorone diisocyanate, (3,3,4)-trimethylhexane-1,6-diisocyanate, toluene diisocyanate, diphenylmethane-4,4′-diisocyanate and the like.

Most preferred are 2-isocyanatoethyl methacrylate and m-isopropenyl-$\alpha,\alpha$-dimethylbenzyl isocyanate.

Vinyl-telechelic polyethers with Q of structure $Q_1$ are made, for example, by esterification with acrylic acid, acroyl chloride, acrylic acid anhydride or the methacrylic analog, or by transesterification with methyl acrylate or methacrylate, or by reaction with maleic- or itaconic anhydride or fumaroyl chloride.

The vinyl-telechelic poly-(alkylene oxides) can be used singly or in combination with each other.

The fluorinated and/or silicone containing monomers (B) useful for making the novel polymers of this invention are acrylic or styrenic monomers. Fluorine-containing monomers (B-1) are vinyl monomers containing at least three fluorine atoms selected from the group consisting of hexafluoroisopropyl acrylate and methacrylate, perfluorocyclohexyl acrylate and methacrylate, pentafluorostyrene and the acrylate or methacrylate esters or amides of the formula

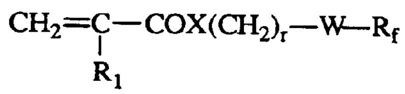 (I)

wherein

$R_f$ is $-(CF_2)_tCF_2L$ or $-(CF_2CF_2)_qOCF(CF_3)_2$
$R_1$ is hydrogen or methyl,
X is oxygen or $-NR_7-$ wherein $R_7$ is an alkyl group with 1-5 carbon atoms,
r is an integer from 1-4,
t is an integer from 0-14,
q is an integer from 1-3;
L is hydrogen or fluorine, with the proviso that, when t is 0, L is fluorine; and
W is a direct bond or a divalent group of the structure $-NR_7-CO-$; $-NR_7SO_2-(CH_2)_r-$; $-NR_7SO_2-$; $-S-(CH_2)_r-$; $-NR_7-(CH_2)_r-NR_7SO_2-$; or -NHCO-.

Typical examples are 1,1,2,2-tetrahydroperfluorodecyl acrylate and methacrylate, 1,1,2,2-tetrahydroperfluorooctyl acrylate and methacrylate and 1,1,2,2 tetrahydroperfluorooctyl methacrylamide or acrylamide.

Other useful fluorinated monomers include hexafluoroisopropyl acrylate, hexafluoroisopropyl methacrylate, perfluorocyclohexyl methacrylate, and 2,3,4,5,6-pentafluoro-styrene; the acrylates and methacrylates of fluoroalkyl substituted amido-alcohols, such as of $C_7F_{15}CON(C_2H_5)C_2H_4OH$; of sulfonamido-alcohols, such as of $C_8F_{17}C_2H_4SO_2N(CH_3)-C_4H_8OH$ and $C_8F_{17}SO_2N(C_2H_5)C_2H_4OH$; of perfluoroether alcohols, such as of $C_3F_7-O(C_3F_6O)_2CF(CF_3)-CH_2OH$ or $(CF_3)_2CFO(CF_2CF_2)_2-CH_2CH_2OH$; and the acrylates and methacrylates of fluorinated thioether alcohols of structure $CF_3$ $(CF_2)_tCH_2CH_2SCH_2CH_2CH_2OH$; acrylates and methacrylates of sulfonamido-amines, such as of $R_fSO_2N(CH_3)CH_2CH_2N(CH_3)(CH_2)_3NH_2$ and $R_fCH_2SO_2NH(CH_2)_2NH_2$; of amido-amines, such as of $R_fCONH(CH_2)_2NH_2$; as well as the vinyl monomers obtained by reaction of these aforementioned fluorinated alcohols and amines with 2-isocyanatoethyl acrylate or methacrylate or m-isopropenyl-1,1-dimethylbenzyl isocyanate.

Preferred are fluorinated monomers in which X is oxygen, W is a direct bond, $R_1$ is hydrogen, r is 2, t is 6 to 10 and L is fluorine; or in which r is 1 or 2, t is 1-4 and L is fluorine, or in which $R_1$ is methyl, r is 2, t is 4 to 10 and L is fluorine.

Preferred are hexafluoroisopropyl methacrylate, trifluoroethyl methacrylate, and 1,1,2,2-tetrahydroperfluorooctyl and 1,1,2,2-tetrahydroperfluorodecyl acrylate and methacrylate, with 1,1,2,2-tetrahydroperfluorooctyl acrylate being most preferred.

Silicone containing vinyl monomers (B-2) are oligosiloxanyl-silylalkyl acrylates and methacrylates containing from 2-10 Si-atoms. Typical representatives include: tris(trimethylsiloxy-silyl)propyl (meth)acrylate, triphenyldimethyl-disiloxanylmethyl (meth)acrylate, pentamethyl-disiloxanylmethyl acrylate, tert-butyl-tetramethyldisiloxanylethyl (meth)acrylate, methyl-di(trimethylsiloxy)silylpropyl-glyceryl (meth)acrylate; pentamethyldi-siloxanyl-methyl methacrylate; heptamethyl-cyclotetrasiloxy methyl methacrylate; heptamethyl-cyclotetrasiloxy-propyl methacrylate; (trimethylsilyl)-decamethyl-pentasiloxy-propyl methacrylate; undecamethyl pentasiloxypropyl methacrylate. Preferably the monomer is tris (trimethylsiloxy-silyl) propyl methacrylate.

The (B-1) fluorine and/or (B-2) silicone containing monomer units as (B) can be present in the polymers of this invention in amounts of 30-84.9%, preferable 30-70%, most preferably 40-60% by weight. When mixtures of (B-1) and (B-2) are used, they are preferably in a weight ratio of 4:1 to 1:4.

The monomers (C) which can be present in the polymers of this invention in amounts from 0-40% can be any copolymerizable vinyl monomer, like an ester or amide of acrylic or methacrylic acid with from 1-20 carbon atoms in a linear or branched aliphatic, cycloaliphatic or aromatic group containing ester or amide group, and which may be interrupted by hetero atoms like sulfur or oxygen; analogous mono- or di-esters of maleic and itaconic acid; alkyl vinyl ethers with 1 to 10 carbon atoms in the alkyl group, vinyl esters of $C_1$ to $C_{12}$- carboxylic acids; styrene and alkyl substituted styrene and $\alpha$-methylstyrene; hydroxyalkyl acrylates, methacrylates, acrylamides and methacrylamides;

alkyl- and dialkyl-amino-alkyl methacrylates and methacrylamides; hydroxyalkyl vinyl ethers, hydroxyalkyl maleates and itaconates.

These comonomers are preferably present in amounts of 0-40%, most preferably in amounts of 0-20% by weight.

Representative examples include: methyl acrylate, ethyl acrylate, n- and isopropyl acrylate, cyclohexyl acrylate, trimethyl-cyclohexyl acrylate, phenyl acrylate, benzyl acrylate and all the corresponding methacrylates; furfuryl acrylate and methacrylate; methoxy-ethyl-, ethoxy-ethyl-, and ethoxy-ethoxy ethyl acrylate and methacrylate; 2-hydroxyethyl acrylate and methacrylate, 3-hydroxypropyl acrylate, methacrylate and methacrylamide; glycidyl methacrylate; N,N-dimethylacrylamide; N-isopropyl- acrylamide; N-vinylacetamide; N-vinyl-pyrrolidone; dimethylamino-ethyl methacrylate and methacrylamide; acrylic and methacrylic acid, vinyl sulfonic acid, 4-styrene sulfonic acid and 2-methacrylamido-2-methyl-propane-sulfonic acid and their salts.

Preferred are methoxy-ethyl acrylate and methoxy-ethyl methacrylate, ethoxy-ethyl acrylate and ethoxy-ethyl methacrylate; methyl methacrylate; methyl acrylate, 2-hydroxyethyl methacrylate; N-vinylpyrrolidone; N,N-dimethylacrylamide and styrene, and ethoxy-ethoxy-ethyl acrylate.

The di- or polyethylenically unsaturated monomers (D) which are essential components of the polymers of this invention contain two or more moieties preferably selected from the groups of acrylates and methacrylates, acrylamides and methacrylamides, vinylethers, styrene, fumarate and itaconate or allyl. Typical representatives include the diacrylates and dimethacrylates of 1,2-ethylene glycol, 1,2- and 1,3-propanediol and of 1,3- and 1,4-butane-, 1,5-pentane- and 1,6-hexanediol; the diacrylates and dimethacrylates of diethylene-, triethylene- and tetraethylene glycol, and of neopentyl glycol, di-(2-hydroxyethyl) sulfone and thiodiethylene glycol; trimethylolpropane triacrylate and trimethacrylate, di-trimethylolpropane tetraacrylate, pentaerythritol tetraacrylate and tetramethacrylate, di-pentaerythritol monohydroxy pentaacrylate; bisphenol-A- and ethoxylated bisphenol-A-dimethacrylate, tris(2-hydroxyethyl)-isocyanurate triacrylate; allyl methacrylate; methylene-bisacrylamide, ethylene-bismethacrylamide, divinylbenzene, allyl methacrylate and butanediol divinylether, also useful are the reaction products of equivalent amounts of aliphatic, cycloaliphatic and aromatic diisocyanates or of vinyl-unsaturated (mono)isocyanates with hydroxy or amino substituted acrylates and methacrylates, for example the reaction products of hexamethylene- 1,6-diisocyanate, 3,3,4(4,4,3)-trimethylhexane-1,6-diisocyanate, 4,4′-diisocyanato-diphenylmethane or isophorone diisocyanate with two moles 2-hydroxyethyl- or N-t-butyl-2-aminoethyl acrylate or methacrylate, 3-hydroxypropyl methacrylamide, or of 1 mol 2-isocyanatoethyl methacrylate with 1 mol hydroxyethyl- or N-t-butyl-2-aminoethyl acrylate or methacrylate, or 3-hydroxypropyl methacrylamide. Also useful are silicone containing diacrylates and dimethacrylates, for example bis(3-methacryloxypropyl)-tetramethyl disiloxane and bis(3-methacryloxypropyl)tetra(trimethylsiloxy) disiloxane, and fluorinated compounds, like 2-(1-thia-2,2,3,3-tetrahydro)tridecafluorononyl butane-1,4-diol di(meth)acrylate.

These crosslinking agents can be present in amounts from 0.1-10 % by weight, preferably in amounts of 0.5-7 % by weight.

Preferred crosslinking comonomers (D) are ethylene glycol diacrylate and methacrylate, neopentyl glycol di(meth) acrylate, trimethylolpropane triacrylate or methacrylate, allyl methacrylate and divinylbenzene.

Most preferred crosslinking comonomers (D) are ethylene glycol di(meth)acrylate, neopentyl glycol di(meth)acrylate and trimethylolpropane triacrylate.

A preferred embodiment of this invention is a copolymer, wherein component (A) is 15 to 49.5 % by weight and the polyether PE is a poly(ethylene oxide) of 1500-10000 MW, or a poly(ethylene oxide-co-propylene oxide) of 1500-10000 MW and wherein a is 1 and $R_2$ is $-CH_2-CHCH_3-$, wherein QV is $Q_3V$ or $Q_4V$, and V-COO-$R_5$-is the radical obtained by removing the -NCO group from 2-isocyanatoethyl methacrylate or 2-isocyanatoethyl acrylate, and wherein V-$R_6$- is the radical obtained by removing the -NCO group from styrene isocyanate or m-isopropenyl-a,a-dimethylbenzyl isocyanate; component (B) is 50 to 84.5 % by weight of component (B-1), wherein (B-1) is a fluorinated monomer selected from the group consisting of hexafluoroisopropyl acrylate, hexafluoroisopropyl methacrylate, or is a fluorine containing monomer containing at least three fluorine atoms and having the formula

$$CH_2=CR_1-COX(CH_2)_r-W-R_f$$

wherein

W is a direct bond, X is oxygen and $R_f$ is $-(CF_2)_tCF_2L$,
$R_1$ is hydrogen or methyl,
r is an integer from 1-4,
t is an integer from 0-10,
L is hydrogen or fluorine, with the proviso that, when t is 0, L is fluorine;
and component (C) is 0 to 20 % by weight and component (D) is 0.5 to 7 % by weight.

The vinyl-telechelic poly-alkylene oxides (A) may be prepared, either, most easily, in one step by the reaction of (poly-alkylene oxide) diols or diamines with the halide, anhydride or lower alkyl ester of acrylic, methacrylic, maleic or

itaconic acid, or an isocyanatoalkyl acrylate or methacrylate or a styrene isocyanate, or alternatively, in two steps, by reaction with, first, an organic diisocyanate followed by, secondly, reaction with a hydroxy- or amino functional alkyl acrylate, alkyl methacrylate, alkyl maleate, alkyl itaconate, alkyl vinyl ether, allyl compound or styrene. Preferably, the vinyl-telechelic poly-(alkylene oxides) are synthesized by reaction of the poly-(alkylene oxide) diols or diamines with vinyl-unsaturated isocyanates. For urethane bond formation, catalysts are used in amounts from 0.01-0.5%. Typical catalysts include stannous octoate or dibutyltin dilaurate (DBTL), or tert.-amines like triethylamine.

Copolymerization of the vinyl-telechelic poly-(alkylene oxides) (A) with comonomers (B), (C) and (D) may be carried out by employing initiators which generate free-radicals on application of an activating energy as is conventionally used in the polymerization of ethylenically unsaturated monomers. Included among free-radical initiators are the conventional thermally activated initiators such as organic peroxides and organic hydroperoxides. Representative examples of such initiators include benzoyl peroxide, tertiary-butyl perbenzoate, diisopropyl peroxydicarbonate, cumene hydroperoxide, azobis(isobutyronitrile), and the like. Generally, from about 0.01 to 5 percent by weight of thermal initiator is used.

Preferably, UV-initiated polymerization is carried out, using photoinitiators. Such initiators are well known and have been described, for example, in polymerization art, e.g., Chapter II of "Photochemistry" by Calvert and Pitts, John Wiley & Sons (1966). The preferred initiators are photoinitiators which facilitate polymerization when the composition is irradiated. Representative examples of such initiators include acyloin and derivatives thereof, such as benzoin, benzoin methyl ether, benzoin ethyl ether, benzoin isopropyl ether, benzoin isobutyl ether and α-methylbenzoin; diketones such as benzil and diacetyl, etc.; ketones such as acetophenone, α,α,α-tribromoacetophenone, α,α-diethoxyacetophenone (DEAP), 2-hydroxy-2-methyl-1-phenyl-1-propanone, o-nitro-α,α,α-tribromoacetophenone, benzophenone and p,p′-tetramethyldiaminobenzophenone; α-acyloxime esters such as benzil-(O-ethoxycarbonyl)-α-monoxime; ketone/amine combinations such as benzophenone/N-methyldiethanolamine, benzophenone/tributylamine and benzophenone/Michler's ketone; and benzil ketals such as benzil dimethyl ketal, benzil diethyl ketal and 2,5-dichlorobenzil dimethyl ketal. Normally, the photoinitiator is used in amounts ranging from about 0.01 to 5% by weight of the total oligomeric composition.

Preferably, about 0.1 to 1.0% of photoinitiator is used in the polymerizable compositions.

Polymerization may be carried out in bulk in a conventional manner or in the presence of a solvent. Especially in case of poly-(ethylene oxide) as (A) building block, cosolvents are usually required to compatibilize components (A) and (B). The amount of solvent required depends on the nature and relative amounts of (A) and (B), but also on the choice of comonomer (C), which can act as a solvent for (A) and (B). Useful solvents to carry out the polymerization include ketones, like acetone, methyl ethyl ketone, methyl propyl ketone, methyl isobutyl ketone and cyclohexanone; alcohols like ethanol, isopropanol or ethyl-cellosolve; ethers like ethylene glycol or diethylene glycol dimethyl ether, esters like ethyl acetate or isopropyl acetate; dimethyl sulfoxide; N-methylpyrrolidone; N,N-dimethylformamide; N,N-dimethylacetamide and the like.

The polymerization is carried out in molds, which can consist of plastics, glass or metal and can be any shape. For making films and sheets, the molds are preferably made of glass plates and lined with MYLAR or other polymer films and held together by clamps, using a spacer of desired thickness. Contact lenses are preferably prepared in UV-permeable plastic molds.

After polymerization is complete, the polymer is removed from the mold and any solvent present is either removed by vacuum drying or extraction with water and with water-soluble solvents, or water-solvent mixtures. Useful solvents are acetone, ethanol, methanol, isopropanol and the like. Azeotropic distillation is also a useful procedure to remove certain solvents. After the solvent is removed the polymer is equilibrated in distilled water and its water content is determined gravimetrically. All subsequent measurements are carried out on the water-equilibrated polymers.

In the following examples bending angle is determined on 2.5 x 0.5 inch 1 mm thick, cast sheets by determining the angle formed by a 2 inch overhang and the horizontal. Oxygen permeability is measured with a $O_2$-Permeometer-Model 201-T (Createch), using buffered saline (pH = 7) as electrolyte and is expressed in units

$$O_2\cdot DK(\text{barrers})=\frac{cm^3\,(STP)\,cm\cdot 10^{-10}}{cm^2\cdot sec\cdot cmHg}\text{ at a given thickness and temperature}$$

Physical-mechanical measurements are carried out with an INSTRON testing apparatus, model 1123 on 0.6-1 mm thick sheets.

Water content is expressed as:

$$\%H_2O=\frac{\text{weight of swollen polymer-weight of dry polymer}}{\text{weight of swollen polymer}}\times 100$$

<u>Example 1:</u> Synthesis of Poly-(ethylene oxide)-urethane Dimethacrylate

120 g (0.0358 m) Poly-ethylene oxide diol (PEO) of MW 3350 are filled into a 500 ml round bottom flask, equipped with a magnetic stirring bar, gas-inlet tube, thermometer and heating mantle. The PEO is heated to 80°C and the molten resin is stirred for 2 hours at a vacuum of ≤ 0.05 - 1 mm Hg; the mixture is slowly cooled to 50°C and the vacuum broken with dry air. 60 g Isopropyl acetate (IPAC) are added and a clear solution is formed.

11.18 g (0.072 m) 2-Isocyanatoethyl methacrylate and 21.8 g isopropyl acetate are filled into an addition funnel and are slowly added to the PEO solution. 50 g IPAC are used to rinse the funnel. After addition is complete, 0.071 g dibutyl-tin dilaurate (DBTL) (0.15 mol %) are added and the mixture is stirred at 50°C under dry air for three hours or until all NCO has been consumed as determined by IR-analysis. The product is allowed to cool down and crystallize and 60 g IPAC are added to form a slurry. The slurry is filtered and dried to a white powder, weighing 128.4 g (98% of theory).

Example 2: Using the same procedure as described in example 1, a PEO-di(urethane-methacrylate) is prepared, using poly-(ethylene oxide) diol of 1450 MW.

Example 3: Synthesis of Si-containing Poly-(ethylene oxide) Block Copolymers 5 g of the PEO-dimethacrylate of example 1 are mixed with 5 g tris-(trimethyl-siloxy)-silyl-propyl methacrylate ($Si_4MA$), 4 g N-methylpyrrolidone (NMP), 6 g methyl ethyl ketone (MEK) and 0.4 % benzoin methyl ether (BME) as UV initiator. The solution is degassed by vacuum which then is broken with dry nitrogen and is filled into a 0.5 mm wide MYLAR lined glass mold held together by clamps, after which it is finally polymerized by exposure to UV radiation from a SYLVANIA Black-Lite Blue lamp for 8 hours.

The clear polymer sheet is removed from the mold and the solvent is exchanged with water first by immersion for 12 hours in distilled water, followed by one hour boiling and equilibration for 48 hours.

A clear, flexible hydrogel is obtained which contains 54.4 % water, has a bending angle of 58° and an oxygen permeability DK of 52 barrers.

Example 4: Synthesis of poly-ethylene oxide urea-dimethacrylate from α,ω-di-(1-methyl-aminoethyl) poly-(ethylene oxide).

57.68 g(0.020 m) of a α,ω-di(1-methyl-aminoethyl) poly-(ethylene oxide) of MW 2884 and 57.7 g of anhydrous methyl propyl ketone are charged into a 3-neck round bottomed flask which has been equipped with a stirrer, nitrogen inlet, condenser, thermometer and dropping funnel. The solution is stirred at room temperature under dry nitrogen. Then 6.20 g (0.04 mole) of 2-isocyanatoethyl methacrylate (MW 155) dissolved in 6.2 g of anhydrous methylpropyl ketone are added slowly from the dropping funnel. The mildly exothermic reaction is maintained at 35°C and below by water bath cooling for 1 hour at which time an IR analysis shows the reaction to be complete.

Example 5-13: Following the procedure of example 3, the PEO-urea dimethacrylate of example 4 is mixed with various fluorinated comonomers (F.-mon) and other comonomers, using methyl propyl ketone (MPK) as a solvent. 0.5% Benzoin methyl ether is added. The mixtures are degassed, filled into 1 mm thick molds and cured for 8 hours by UV. The polymer sheets are removed from the mold, extracted for 24 hours by swelling in ethanol, boiled for 1 hour in distilled water followed by equilibration in water.

Composition and test results are shown in the following table.

Example 5-13

Following the procedure of example 3, fluorine containing PEO-block copolymer hydrogels are synthesized and their properties are determined using the fluorinated monomers and solvent compositions shown in the Table;

| Ex. No. | Monomers, % 1): PEO-dimethacrylate of Ex.; | % | Si, F-containing comonomer | Other % | Solvents: NMP/MEK %/% | [P] 2) % | Properties: $H_2O$ % | Bending Angle° | $O_2$.DK (barrers) |
|---|---|---|---|---|---|---|---|---|---|
| 5 | 1 | 50 | $R_fA$, 50 | - | 35/65 | 40 | 70.0 | 52 | 56 |
| 6 | 1 | 38 | $R_fA$, 39 | MMA 23 | 40/60 | 50 | 49.3 | 25 | 27 |
| 7 | 1 | 40 | $Si_4MA$, 10; $R_fA$, 30 | MMA 20 | 42/58 | 51 | 55.3 | 55 | 37 |
| 8 | 1 | 30 | $R_fA$, 60 | MMA 10 | 26/74 | 47 | 51.6 | 28 | 40 |
| 9 | 2 | 50 | $Si_4MA$, 50 | - | 70/30 | 42 | 44.0 | 22 | 43 |
| 10 | 2 | 50 | $R_fA$, 50 | - | 45/55 | 25 | 55.1 | 50 | 36 |
| 11 | 1 | 59 | $R_fA$, 41 | - | 35/65 | 37 | 71.0 | 43 | 43 |
| 12 | 1 | 50 | $F_7MA$, 50 | - | 50/50 | 50 | 57.2 | 15 | 35 |
| 13 | 1 | 50 | $F_6MA$, 50 | - | 50/50 | 50 | 59.7 | 17 | 34 |

1) $R_fA$ is $C_nF_{2n+1}$-$CH_2CH_2OOC$-$CH{=}CH_2$, with n = 6/8/10/12 in weight percent of 0.5/75./22./2.5
$Si_4MA$ is tris-trimethylsiloxy-silyl-propyl methacrylate
$F_7MA$ is heptafluorobutyl methacrylate
$F_6MA$ is hexafluoroisopropyl methacrylate
MMA is methyl methacrylate
2) [P] is polymer (monomer) concentration in solvent.

Example 14: Using the procedure of example 3, selected PEO-block copolymers are synthesized in 1 mm wide MYLAR lined molds and their physical-mechanical properties are measured and reported in the following table.

| Polymer of Ex. | $H_2O$ % | Tensile Strength Kg/cm$^2$ | Young's Modulus Kg/cm$^2$ | Elongation % |
|---|---|---|---|---|
| 3 | 54.4 | 6.3 | 13.6 | 106 |
| 6 | 49.3 | 33.0 | 93.4 | 63 |
| 11 | 71.0 | 4.6 | 25.0 | 20 |
| 12 | 57.2 | 25.1 | 106.0 | 29 |
| 13 | 59.7 | 16.6 | 69.4 | 28 |

Example 15: The hydrolytic stability of PEO-block copolymers is evaluated by aging in pH 7.4 phosphate-buffered saline solution at 80°C for 132 hours and measuring physical properties before and after aging. The results are shown in the Table.

| Polymer of Example | $H_2O$ % | Tensile Strength kg/cm$^2$ | Young's Modulus kg/cm$^2$ | Elongation % | Bending Angle ° |
|---|---|---|---|---|---|
| 9 | initial : 44 | 8.9 | 28 | 65 | 26 |
| | aged: 43 | 7.0 | 26 | 50 | 30 |
| 10 | initial: 55 | 2.7 | 17 | 38 | 50 |
| | aged:56 | 3.0 | 17 | 25 | 50 |

Example 16-25: Following the procedure of example 3, the PEO-urea dimethacrylate of example 4 is mixed with various fluorinated comonomers (F.-mon) and other comonomers, using methyl-propyl ketone (MPK) as a solvent. 0.5% Benzoin methyl ether is added. The mixtures are degassed, filled into 1 mm thick molds and cured for 8 hours by UV. The polymer sheets are removed from the mold, extracted for 24 hours by swelling in ethanol, boiled for 1 hour in distilled water followed by equilibration in water.

Compositions and test results are shown in the following table.

Example 16-25

| Ex. No. | Macromer of Ex.4 % | F-mon % | MMA % | MOEA % | XL % | [Pol] % | $H_2O$ % | Bending ° | Tensile Strength $Kg/cm^2$ | Young's Modulus $Kg/cm^2$ | Elongation % | $O_2$ . DK Barrers at mm/°C |
|---|---|---|---|---|---|---|---|---|---|---|---|---|
| | Composition | | | | | | | INSTRON Data | | | | |
| 16 | 40 | $C_6FA$ 40 | 20 | - | - | 57.8 | 44.7 | 37 | 9.3 | 23.8 | 117 | 21 0.4/20 |
| 17 | 30 | $R_fA$, 50 | 20 | - | - | 55.5 | 48.8 | 58 | 5.3 | 6.3 | 274 | 30 0.4/20 |
| 18 | 30 | $C_6FA$ 50 | 20 | - | - | 67.1 | 32.7 | 33 | 17.8 | 31.9 | 253 | 41 0.1/21 |
| 19 | 30 | $R_fA$ 50 | 19.8 | - | 0.2 | 56.6 | 41.1 | 44 | 10.8 | 22.2 | 242 | 41 0.1/23 |
| 20 | 30 | $R_fA$ 60 | 9.8 | - | 0.2 | 50.2 | 44.2 | 43 | 7.6 | 17.6 | 87 | 55 0.1/23 |
| 21 | 30 | $R_fA$ 60 | - | 10 | 0.2 | 51.8 | 46.3 | 49 | 6.3 | 14.1 | 88 | 33 0.45/20 |
| 22 | 30 | $R_fA$ 50 | - | 19.8 | 0.2 | 54.1 | 43.9 | 38 | 3.7 | 12.9 | 47 | 45 0.1/23 |
| 23 | 35 | $R_fA$ 45 | - | 20 | - | 54.6 | 47.9 | 55 | 3.1 | 13.2 | 34 | 35 0.99/20 |
| 24 | 40 | $R_fA$ 40 | - | 20 | - | 56.3 | 51.3 | 45 | 2.4 | 15.5 | 18 | 33 0.97/20 |
| 25 | 30 | $R_fA$ 45 | - | 25 | - | 55.7 | 44.6 | 55 | 4.8 | 10.7 | 117 | 35 0.96/22 |
| p-HEMA, for comparison | | | | | | | 39.0 | 60 | 3.0 | 5.5 | 90 | 6 0.25/22 |

Abbreviations:

- MMA = methyl methacrylate
- MOEA = methoxy-ethyl acrylate
- XL = ethyleneglycol dimethacrylate
- $R_fA$ = $R_f$-ethyl acrylate
- $R_f$ = $C_nF_{2n+1}^-$, n = 6/8/10/12 = 5.4/72.8/20.8/0.9, in% (w/w).
- $C_6FA$ = $R_fA$ with n = 6
- [PoL] = polymer % in MPK

Examples 26-50 describe the synthesis of silicone and/or fluorine containing poly-(propylene oxide) block copolymers.

Example 26: 41.98 g (0.020 m) α,ω-Bis-(aminopropyl)-poly(propylene oxide) of MW 2099 are charged into a 3-necked round bottomed flask, equipped with stirrer, nitrogen inlet, condenser, thermometer and dropping funnel. The liquid is stirred at room temperature under dry nitrogen while 6.20 g (0.040 m 2-isocyanatoethyl methacrylate (IEM) are slowly added. The mildly exothermic reaction mixture is maintained at 35° C by water bath cooling for one hour after which time IR analysis-shows the reaction to be complete.

Example 27: Following the procedure of example 26, a methacrylate terminated poly(propylene oxide) prepolymer is prepared from α,ω-bis-(1-methyl-amino ethyl)-poly(propylene oxide) of MW 4408.

Example 28: The procedure of example 26 is repeated, but using m-isopropenyl-α,α-dimethylbenzyl isocyanate (TMI) as the vinyl-unsaturated isocyanate.

Example 29: The procedure of example 27 is repeated, but using m-isopropenyl-α,α-dimethylbenzyl isocyanate (TMI) as the vinyl-unsaturated isocyanate.

Examples 30-32: Synthesis of chain extended, methacrylate-terminated poly- (propylene oxide).

100.75 g (0.048 m) of α,ω-Di-(aminopropyl)-poly-(propylene oxide) of MW 2099 (Jeffamine-ED2000, Texaco Chem. Corp.) are charged into a 3-necked round bottomed flask which is equipped with a stirrer, nitrogen inlet, condenser, thermometer and dropping funnel. The solution is stirred at room temperature under dry nitrogen. 1.26 g (0.006 m) 2,2,4(2,4,4) Trimethylhexane-1,6diisocyanate (TMDI) are added and the reaction mixture is kept at 28°C for 2 hours, by which time all NCO-groups are reacted, as determined by IR-analysis, yielding a partially chain extended prepolymer containing PPO and TMDI in a mol ratio of 8:1. Then 13.03 g (0.084 m) of 2-isocyanatoethyl methacrylate (IEM) (MW 155) are added slowly from the dropping funnel. The mildly exothermic reaction is maintained at 35°C and below by water bath cooling for 1 hour, at which time an IR analysis shows the reaction to be complete.

By the same procedure, chain extended IEM-capped PPO-prepolymers are prepared, containing PPO and TMDI in mol ratios of

Example 31: 5/1 (PPO/TMDI)

Example 32: 4/1 (PPO/TMDI)

Examples 33-40: Following the procedure of example 3, the poly(propylene oxide)-dimethacrylates of example 26-32 are mixed and reacted with fluorinated comonomers and other comonomers, in the presence of methyl-propyl ketone (MPK) as a solvent; 0.4% benzoin methyl ether (BME) and 8 hours UV-exposure are used for curing. After polymerization, the clear polymer sheets are removed, boiled in water for one hour to strip off unreacted monomer and solvent, and equilibrated in distilled water.

The polymer compositions thus prepared and their properties are shown in the table.

Example 33-40

| Ex. No. | Macromer of Ex. | % | F-mon % | M-3 % | [P] % | $H_2O$ % | Tensile Strength $Kg/cm^2$ | Young's Modulus $Kg/cm^2$ | Elongation % | $O_2$.DK Barrers, at mm/°C | |
|---|---|---|---|---|---|---|---|---|---|---|---|
| 33 | 26 | 40 | $R_fA$ 40 | DMA 20 | 69 | 21.4 | 3.5 | 23.5 | 20 | 36 | 0.92/24 |
| 34 | 26 | 40 | $R_fA$ 40 | MMA 20 | 75 | 3.1 | 11.9 | 30.9 | 98 | 20 | 0.95/24 |
| 35 | 27 | 50 | $C_8FA$ 30 | MOEA 20 | 90 | 3.2 | 5.3 | 9.0 | 254 | 45 | 0.95/22 |
| 36 | 27 | 50 | $C_6FA$ 50 | - - | 80 | 3.5 | 8.6 | 11.0 | 183 | 55 | 0.45/22 |
| 37 | 32 | 40 | $R_fA$, 40 | MMA 20 | 75 | 2.6 | 25.7 | 43.3 | 278 | 23 | 0.95/25 |
| 38 | 27 | 40 | $R_fA$, 40 | MOEA 20 | 74 | 2.3 | 8.0 | 14.0 | 122 | 48 | 0.92/24 |
| 39 | 27 | 40 | $C_8FA$ 40 | MOEA 20 | 74 | 2.9 | 7.2 | 12.6 | 175 | 37 | 0.4/22 |
| 40 | 27 | 40 | $C_6FA$ 40 | EOEMA 20 | 75 | 1.9 | 4.8 | 6.8 | 151 | 51 | 0.87/22 |

$R_fA$, MMA, MOEA, are as described in example 16.
[P] is as described in example 5
DMA is dimethylacrylamide
$C_8FA$ and $C_6FA$ are $R_f$-A with n = 6 and 8
M-3 are other comonomers
EOEMA is ethoxy-ethyl methacrylate

Example 41-50: Following the procedure of example 3, the poly(propylene oxide)-dimethacrylates of examples 26, 27 and 28 are mixed and reacted with fluorinated comonomers and other comonomers, but no solvent is used. To the clear mixtures are added 0.2% benzoin methyl ether (BME), and 5 hour UV exposure is used for the polymerization step. After polymerization, the clear polymer sheets are removed from the molds, immersed in boiling water for one hour and equilibrated in distilled water.

The polymer compositions thus prepared and their properties are listed in the table.

Example 41-50

| Ex. No. | Macromer of Ex. | Macromer % | F-mon | F-mon % | M-3 | M-3 % | $H_2O$ % | Tensile Strength $Kg/cm^2$ | Young's Modulus $Kg/cm^2$ | Elongation % | $O_2$.DK Barrers, at mm/°C |
|---|---|---|---|---|---|---|---|---|---|---|---|
| | Composition | | | | | | | | | | |
| 41 | 28 | 22.2 | $R_fA$ | 22.2 | MA | 55.6 | 4.4 | 4.0 | 11.5 | 50 | 42, 0.91/23 |
| 42 | 28 | 22.3 | $R_fA$ | 22.2 | MOEA | 55.6 | 3.1 | 8.0 | 17.6 | 115 | 40, 0.90/23 |
| 43 | 28 | 22.2 | $R_fA$ | 22.2 | EOEA | 55.6 | 3.1 | 2.6 | 9.7 | 33 | 40, 1.0/23 |
| 44 | 28 | 25 | $R_fA$ | 25 | EOEMA | 50 | 2.6 | 4.8 | 11.9 | 69 | 35, 0.95/23 |
| 45 | 26 | 25 | $C_6FA$ | 25 | EOEA | 50 | 2.2 | 5.3 | 11.2 | 78 | 35, 0.97/22 |
| 46 | 26 | 25 | $C_6FA$ | 25 | EOEMA | 50 | 2.4 | 8.3 | 12.7 | 125 | 23, 0.95/22 |
| 47 | 27 | 33 | $C_6FA$ | 33 | EOEA | 34 | 2.2 | 5.5 | 9.0 | 123 | 58, 1/23 |
| 48 | 27 | 33 | $C_6FA$ | 33 | EOEMA | 34 | 2.1 | 5.3 | 9.2 | 129 | 44, 1/23 |
| 49 | 27 | 33 | $C_6FA$ | 32 | MOEA | 36 | 2.8 | 4.8 | 9.2 | 104 | 45, 1/23 |
| 50 | 27 | 31 | $C_6FA$ | 31 | EOEOEA | 34 | 3.0 | 4.6 | 9.3 | 86 | 68, 1/24 |

$R_fA$, $C_6FA$ and MOEA are as described in Example 16;
EOEA is ethoxy-ethyl acrylate
EOEMA is ethoxy-ethyl methacrylate
EOEOEA is ethoxy-ethoxy ethyl acrylate
MA is methyl acrylate

Example 51: 99.0 g (0.050 m) Poly-(butylene oxide) diol of MW 1980 are charged into a 3-necked round bottomed flask, equipped with stirrer, nitrogen inlet tube, condenser thermometer and dropping funnel. 0.03 g Dibutyltin dilaurate are added and the solution is stirred at room temperature under dry nitrogen while 16.28 g (0.105 m) 2-isocyanatoethyl methacrylate (IEM) are slowly added. The mildly exothermic reaction mixture is maintained at 35°C for one hour, after which time IR-analysis shows no free remaining NCO-groups.

A 0.5 mm thick polymer sheet is cast following the procedure of example 3 and having the following composition and properties:

| | |
|---|---|
| poly-butyleneoxide-dimethacrylate | : 25% |
| $C_6F_{13}CH_2CH_2OOC\text{-}CH=CH_2$ | : 25% |
| methoxyethyl acrylate | :50 % |
| Physical properties | |
| Tensile Strength | : 6.8 kg/cm$^2$ |
| Youngs Modulus | : 16.7kg/cm$^2$ |
| Elongation | : 66% |
| $O_2$.DK | : 13 barrers (0.45 mm/20°C) |

Water absorption is 1.4%

Example 52: 428.0 g (0.2223 m) Poly-(butylene oxide) diol of MW 1925 are charged into a 3-necked round bottomed flask, equipped with stirrer, nitrogen inlet tube, condenser thermometer and dropping funnel. 0.050 g Dibutyltin dilaurate are added and the solution is stirred at room temperature under dry nitrogen while 98.7 g (0.447 m) isophorone diisocyanate (IPDI) are slowly added. The mildly exothermic reaction mixture is maintained at 35°C for 1 1/3 hour, after which time NCO-titration shows the free remaining NCO-groups to be one half of their original concentration. 60.3 g (0.463 m) 2-Hydroxyethyl methacrylate are added to the reaction mixture which is then stirred at 30-35°C for 22 hours, after which time no free NCO can be detected by IR analysis.

A 0.5 mm thick polymer sheet is cast following the procedure of example 3 and having the following composition and properties:

| | |
|---|---|
| poly-butyleneoxide-dimethacrylate | : 33% |
| $C_6F_{13}CH_2CH_2OOC\text{-}CH=CH_2$ | : 33% |
| methoxyethyl acrylate | :34% |
| Physical properties | |
| Tensile Strength | : 6.9 kg/cm$^2$ |
| Youngs Modulus | : 14.7kg/cm$^2$ |
| Elongation | : 74% |
| $O_2$.DK | : 20 barrers (0.4 mm/20°C) |

Water absorption is 1.8%

Example 53 and 54: Synthesis of PEO-di(urea-methacrylate) copolymers with $R_f$-ethyl acrylate or tris (trimethylsiloxy)-silyl-propyl methacrylate.

1. Synthesis of PEO ($MW_N$ 6000) di(urethane-methacrylate)

59.95 g (0.010 m) α,ω-Di(1-methyl-aminoethyl) poly-(ethylene oxide-co-propyleneoxide) of MW 5995 (Jeffamine-ED 5000, Texaco Corp.) and 59.95 g of anhydrous methyl propyl ketone are charged into a 3-necked round bottomed flask equipped with a stirrer, nitrogen inlet, condenser, thermometer and dropping funnel. The solution is stirred at room temperature under dry nitrogen. Then 3.10 g (0.020 mole) of 2-isocyanatoethyl methacrylate (MW 155) dissolved in 3.1 g of anhydrous methyl propyl ketone are added slowly from the dropping funnel. The mildly exothermic reaction is maintained at 35°C and below by water bath cooling for 1 hour at which time IR analysis shows the reaction to be complete.

2. Following the procedure of example 3, the PEO-dimethacrylate is reacted with a fluorinated and a silicone containing comonomer, using methyl-propyl ketone as a solvent. The clear polymer sheets are worked up as described and tested ($C_6FA$ is $C_6F_{13}$-ethyl-acrylate; $Si_4MA$ is tris-(trimethylsiloxy)-silyl-propyl methacrylate; [POL] is concentration of monomer/polymer in methyl propyl ketone).

| Composition % | | | | | | | | INSTRON Data | | |
|---|---|---|---|---|---|---|---|---|---|---|
| Ex. No. | Macromer | $C_6FA$ | $Si_4MA$ | MOEA | [POL] % | $H_2O$ % | Tensile Strength Kg/cm$^2$ | Young's Modulus Kg/cm$^2$ | Elongation % | $O_2$.DK Barrers, at mm/ °C |
| 53 | 30 | 50 | - | 20 | 70 | 51.3 | 2.3 | 3.1 | 119 | 51 0.5/20 |
| 54 | 40 | - | 40 | 20 | 63 | 57.7 | 3.3 | 3.3 | 227 | 47 0.5/20 |

$C_6FA$, $Si_4MA$, MOEA, [POL] are defined in example 5 and 16

Example 55: Synthesis of PEO (MW ~ 6000) di(urea-alpha-methyl styrene)

59.95 g (0.010 m) of α,ω-Di-(1-methyl-aminoethyl)-poly-(ethylene oxide) of MW-5995 (Jeffamine-ED 6000) and 59.95 g of anhydrous methyl propyl ketone are charged into a 3-necked round bottomed flask which has been equipped with a stirrer, nitrogen inlet, condenser, thermometer and dropping funnel. The solution is stirred at room temperature under dry nitrogen, then 4.02 g (0.020 mole) of m-isopropenyl-alpha,alpha-dimethyl-benzyl isocyanate (MW 201) dissolved in 3.1 g of anhydrous methylpropyl ketone are added slowly from the dropping funnel. The mildly exothermic reaction is maintained at 35°C and below by water bath cooling for 1 hour, at which time an IR analysis shows the reaction to be complete.

Example 56-59: Following the general procedure of example 3, but using 25% methyl-propyl ketone as solvent, and using the PEO-macromers of example 53 and 55, fluorinated copolymer hydrogels are prepared and their properties measured.

| Ex. No. | Macromer of Ex. | % | $C_6FA$ % | M-3 % | $H_2O$ % | Tensile Strength Kg/cm$^2$ | Young's Modulus Kg/cm$^2$ | Elongation % | $O_2$. DK Barrers, at mm/ °C |
|---|---|---|---|---|---|---|---|---|---|
| 56 | 53 | 40 | 40 | MOMA 20 | 58.0 | 4.8 | 3.9 | 298 | 41 0.5/17 |
| 57 | 53 | 40 | 40 | MOA 20 | 58.2 | 2.3 | 4.2 | 70 | 42 0.5/17 |
| 58 | 55 | 40 | 40 | MOMA 20 | 61.6 | 2.4 | 1.8 | 261 | 40 0.5/17 |
| 59 | 55 | 40 | 40 | MOA 20 | 60.5 | 3.7 | 5.9 | 102 | 41 0.5/17 |

$C_6FA$ is

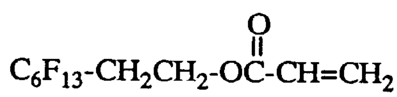

MOMA is methoxy-ethyl methacrylate

MOA is methoxy-ethyl acrylate

Example 60: Synthesis of PEO ($MW_N$ 8000 di(urethane-methacrylate)

Following the procedure of example 54/1, 80.7 g (0.010 m) alpha,omega-di(1-methyl-aminoethyl) poly-(ethyleneoxide-co-propyleneoxide) (Jeffamine-ED 6000, Texaco Corp.) of MW 8069 and 3.10 g (0.020 mole) of 2-isocyanatoethyl methacrylate (MW 155) are reacted to give the corresponding polyether-dimethacrylate.

Example 61: Using the procedure described above, 80.7 g (0.010 m) alpha,omega-di(1-methyl-aminoethyl) poly-(ethyleneoxide-co-propyleneoxide) (Jeffamine-ED 6000, Texaco Corp.) of MW 8069 and 4.02 g (0.020 mole) of m-isopropenyl-alpha,alpha-dimethyl-benzyl isocyanate (MW 201) are reacted to give the corresponding alpha-methylstyrene terminated polyether.

Synthesis of polymers with crosslinked hydrophobic domains:

Examples 62 to 73: Following the procedure of example 3, the PEO-urea dimethacrylate (PEO-MAC) of example 4 is mixed with tridecafluorohexyl-ethyl acrylate ($C_6FA$) and, in addition, various amounts of ethyleneglycol dimethacrylate (EDMA) as crosslinking comonomer, resulting in the polymer compositions shown in the table. Methyl propyl ketone (MPK) is used as solvent and 0.5 % benzoin methyl ether as initiator. Polymerization and work-up of the polymer sheets is carried out as described.

Compositions and test results are shown in the following two tables.

| Example Nr. | Composition % | | | Water % | $O_2$-DK | Appearance |
|---|---|---|---|---|---|---|
| | PEO-MAC | $C_6$FA | EDMA | | | |
| 62 | 30 | 70 | - | 53 | 57 | clear |
| 63 | 29.97 | 69.93 | 0.1 | 53 | 57 | clear |
| 64 | 29.94 | 69.86 | 0.2 | 53 | 58 | clear |
| 65 | 29.85 | 69.65 | 0.5 | 51 | 56 | clear |
| 66 | 29.7 | 69.7 | 1.0 | 52 | 50 | clear |
| 67 | 29.4 | 68.6 | 2.0 | 48 | 43 | clear |
| 68 | 28.5 | 66.5 | 5.0 | 45 | 31 | hazy |
| 69 | 24.5 | 73.5 | 2.0 | 44 | 51 | clear |
| 70 | 33.6 | 62.4 | 4.0 | 52 | 33 | clear |
| 71 | 38 | 57.0 | 5.0 | 55 | 46 | hazy |
| 72 | 38.4 | 57.6 | 4.0 | 58 | 48 | clear |
| 73 | 47.5 | 47.5 | 5.0 | 61 | 42 | clear |

Physical properties:

| Example Nr. | EDMA % | INSTRON test results | | |
|---|---|---|---|---|
| | | T. Str. $kg/cm^2$ | Y. Mod. $kg/cm^2$ | Elong. % |
| 65 | 1.0 | 4.6 | 3.8 | 350 |
| 66 | 2.0 | 4.9 | 4.8 | 250 |
| 67 | 3.0 | 7.3 | 6.6 | 200 |
| 68 | 5.0 | 11.7 | 13.8 | 150 |
| 69 | 2.0 | 7.0 | 3.7 | 280 |

The following examples show the synthesis of contact lenses.

Example 74: The monomer-macromer solutions in methyl propyl ketone of examples 63, 64, 65, 66, 67 and 68 are filled into poly-propylene contact lens molds which are closed and clamped together in a metal mold-holder. The molds are exposed to UV light from a SILVANIA Blacklite-Blue lamp for four hours, after which time the molds are disassembled and the molded lenses are released into a 50 % aqueous isopropanol solution for a 12 hour extraction of unreacted monomers. Following that the lenses are in three diluting steps equilibrated in deionized water and finally equilibrated in phosphate-buffered saline solution.

The lenses have an average thickness of 100 microns; ease of handling and combination of flexibility and stiffness the lenses are rated by comparing their ability to hold their shape and remain smooth and flexible, with that of a commercial poly-HEMA type lens (ILLUSIONS; 86 microns center diameter, from CIBA VISION); in a rating from 1 to 5, 1 equals poly-HEMA, while 5 is the lowest rating, indicating a complete collapse of the lens shape due to insufficient modulus. The cast lenses are rated: Examples 67 and 64: 1; Examples 63 and 66: 3; examples 68 and 65: 4.

Example 75-88: Following the procedure of example 74, lenses are prepared from monomer-macromer solutions of examples 60 and 61. In the table, $C_6$FA is $C_6F_{13}CH_2CH_2OOC\text{-}CH{=}CH_2$, EDMA is ethyleneglycol dimethacrylate; $F_{ex}$ is the expansion factor of the lens after equilibration in saline solution and defined as lens diameter/mold diameter, oxygen permeabilities are measured only on lenses with a quality rating of at least 2 and are expressed as DK-Ratio of: sample lens DK/poly-HEMA lens DK; $DK_{p\text{-}HEMA}$ is 5.3 at 86 microns.

| Example Nr. | PEO-MAC Ex.Nr.; % | $C_6FA$ % | EDMALens | | $F_{ex}$ | DK Ratio | $H_2O$ % in saline |
|---|---|---|---|---|---|---|---|
| | | | % | rating | | | |
| 75 | 60; 38.4 | 57.6 | 4 | 1 | 1.06 | 3.3 | 55 |
| 76 | 60; 33.6 | 62.4 | 4 | 1 | 1.01 | 3.3 | 50 |
| 77 | 60; 30 | 70 | - | 5 | 1.06 | - | 51 |
| 78 | 60; 29.9 | 69.2 | 0.5 | 5 | 1.05 | - | 49 |
| 79 | 60; 29.7 | 69.3 | 1 | 4 | 1.04 | - | 49 |
| 80 | 60; 29.4 | 68.6 | 2 | 4 | 1.01 | 3.4 | 46 |
| 81 | 60; 29.1 | 68.6 | 3 | 2 | 1.00 | 3.6 | 44 |
| 82 | 60; 24.5 | 73.5 | 2 | 3 | 0.96 | 3.8 | 46 |
| 83 | 61; 20 | 80 | - | 5 | 1.01 | - | 42 |
| 84 | 61; 19.6 | 78.4 | 2 | 2 | 0.90 | 3.2 | 24 |
| 85 | 61; 19.5 | 77.5 | 3 | 1 | 0.92 | 3.4 | 27 |
| 86 | 61; 30 | 70 | - | 3 | 1.01 | - | 47 |
| 87 | 61; 29.4 | 68.6 | 2 | 1 | 1.00 | 3.85 | 42 |
| 88 | 61; 29 | 68 | 3 | 1 | 0.97 | 2.56 | 38 |

The results show, that without additional crosslinking agent no high quality lenses can be obtained.

## Claims

**Claims for the following Contracting States : AT, BE, CH, DE, DK, FR, GB, GR, IT, LI, LU, NL, SE**

**1.** A copolymer which is oxygen permeable, flexible, wettable, biocompatible and suitable for use in ophthalmic devices, such as contact lenses, which copolymer comprises the polymerization product of

(A) 15 to 69.9% by weight of a vinyl-telechelic polyether, or a mixture thereof, wherein said polyether does not contain perfluoropolyalkylether segments,
(B) 30 to 84.9% by weight of
(B-1) a fluorinated, ethylenically unsaturated monomer, or
(B-2) a silicone-containing ethylenically unsaturated monomer, or a mixture of monomer (B-1) and monomer (B-2),
(C) 0 to 40% by weight of an ethylenically unsaturated monomer or mixture of monomers other than monomer (B-1) or monomer (B-2), and
(D) 0.1 to 10% by weight of a polyethylenically unsaturated comonomer of 200 to 1000 molecular weight.

**2.** A copolymer according to claim 1 wherein the vinyl-telechelic polyether (A) has the formula (A):

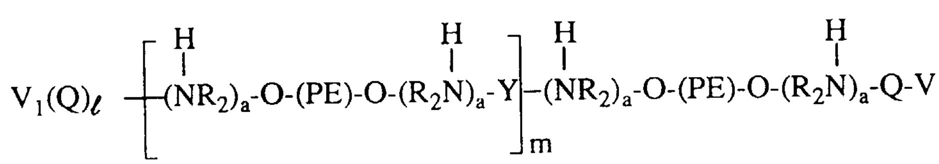

(A)

wherein PE has a number average molecular weight ($MW_n$) of about 500 to about 15000 and has the formula:

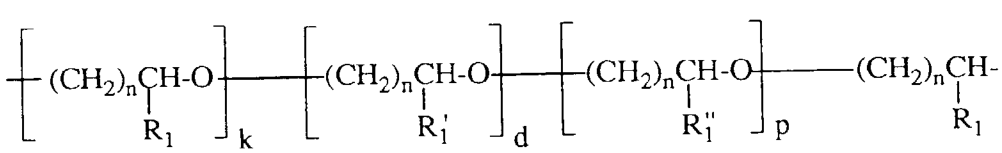

(PE)

wherein

n is 1 to 3,
k, d and p are integers from 0 to 300, and the sum of k+d+p is 7 to 300,
$R_1$, $R_1'$ and $R_1''$ are independently of each other hydrogen or methyl, with the proviso that if n is 3, $R_1$, $R_1'$and $R_1''$ are hydrogen,
a is zero or 1,
m is an integer from zero to 2,
$\ell$ is zero or 1,
$R_2$ is linear or branched alkylene with 2 to 4 carbon atoms;
Y is

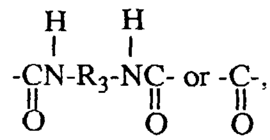

wherein $R_3$ is a divalent aliphatic group with 2 to 14 carbon atoms, a divalent 5- or 6-membered cycloaliphatic group with 5 to 15 C-atoms, or an arylene group with 6 to 14 C-atoms, with the proviso, that if Y is

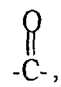

a is 1;
Q is selected from (shown as attached to V):

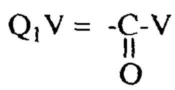

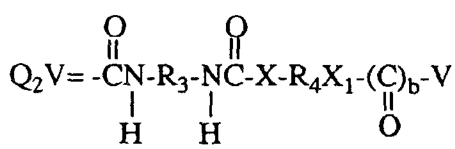

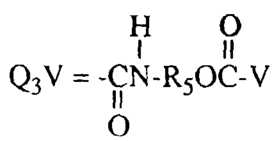

and

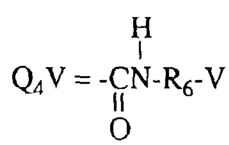

wherein $R_4$ is alkylene of 2 to 4 carbon atoms,
$R_5$ is alkylene of 2 to 10 carbon atoms,
$R_6$ is arylene or alkyl-substituted arylene of 6 to 20 carbon atoms,
X is -O- or $-NR_7-$, wherein $R_7$ is alkyl of 1 to 5 carbon atoms,
$X_1$ is -O-, -NH- or $-NR_7-$,
b is zero or 1,
V is

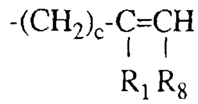

c is zero or 1,
$V_1$ has same meaning as V, or is H or $R_9$, when $\ell$ is zero;
$R_8$ is H or -COOH, with the proviso that, if $R_8$ is -COOH, $R_1$ is H, c is zero, and Q is $Q_1$ ;
$R_9$ is alkyl of 1 to 18 carbon atoms;
with the further proviso that
when Q is $Q_2$, a is zero;
when Q is $Q_2$, $Q_3$ or $Q_4$, $R_8$ is H;
when c is 1, b is zero, Q is $Q_2$ and $R_1$ and $R_8$ are H; and
when $V_1$ is $R_9$, m is zero.

**3.** A copolymer according to claim 2 wherein the polyether PE is a poly(ethylene oxide) (PEO) of 500-12000 MW, a poly(propylene oxide) (PPO) of 500-15000 MW, a poly(ethylene oxide-co-propylene oxide) of random or block copolymer structure in ratios of PEO:PPO from 1:30 to 30:1 of 500-15000 MW, or a poly(tetramethylene oxide) of 500-10000 MW.

**4.** A copolymer according to claim 3 wherein the polyether PE is a poly(ethylene oxide) of 1500-10000 MW, or a poly (ethylene oxide-co-propylene oxide) of 1500-12000 MW and wherein a is 1 and $R_2$ is

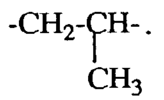

**5.** A copolymer according to claim 3 wherein the polyether is an poly(propylene oxide) of 1000-8000 MW, a is 1 and $R_2$ is

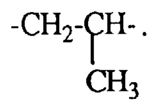

**6.** A copolymer according to claim 3 wherein QV is $Q_2V$, wherein in $Q_2$ $R_3$ is a divalent radical obtained by removing the two -NCO groups from a diisocyanate selected from the group consisting of ethylene diisocyanate, 1,2-diisocyanatopropane, 1,3-diisocyanatopropane, 1,6-diisocyanatohexane, 1,2-diisocyanatocyclohexane, 1,3-diisocyanatocyclohexane, 1,4-diisocyanatobenzene, bis(4-isocyanatocyclohexyl)methane, bis (4-isocyanatocyclohexenyl)methane, bis(4-isocyanatophenyl)-methane, 2,6- and 2,4-toluene diisocyanate; 3,3'-dichloro-4,4'-diisocyanatobiphenyl; 1,5-diisocyanatonaphthalene, hydrogenated toluene diisocyanate; 1-isocyanatomethyl-5-isocyanato-1,3, 3-trimethylcyclohexane (=isophorone diisocyanate); 2,2,4-(2,4,4)-trimethylhexane-1,6-diisocyanate, 2,2'-diisocyanatodiethyl fumarate; 1,5-diisocyanato-1-carboxypentane; 1,2-, 1,3-, 1,6-, 1,7-, 1,8-, 2,7- and 2,3-diisocyanatonaphthalene; 2,4- and 2,7-diisocyanato-1-methylnaphthalene; 4,4'-diisocyanatobiphenyl; 4,4'-diisocyanato-3,3'-dimethoxy-bisphenyl"; 4,4'-diisocyanato-2,2'-dimethyl biphenyl; bis-(4-isocyanatophenyl) ethane; and bis (4-isocyanatophenyl) ether, and V-$(CO)_b$-$X_1$-$R_4$-X- is the radical obtained by removing the active hydrogen atom from a hydroxyl or amino group of a compound selected from the group consisting of 2-hydroxyethyl acrylate and methacrylate, 2- and 3-hydroxypropyl acrylate and methacrylate; 4-hydroxybutyl acrylate and methacrylate; glycerol dimethacrylate; hydroxyethyl maleate and fumarate; 2-hydroxyethyl- and 4-hydroxy-butyl vinyl ether;N-tert.-butyl-aminoethyl methacrylate, N-(3-hydroxypropyl)-methacrylamide; vinyl-benzyl alcohol; and allyl alcohol.

**7.** A copolymer according to claim 6 wherein diisocyanate is isophorone diisocyanate, 2,2,4-(2,4,4)-trimethylhexane-1,6-diisocyanate, 2,4-toluene diisocyanate or 2,6-toluene diisocyanate, and the active hydrogen containing vinyl compound is 2-hydroxyethyl methacrylate, 2-hydroxyethyl acrylate or N-tert. butyl-amino ethyl methacrylate.

**8.** A copolymer according to claim 3 wherein QV is $Q_3V$ and V-COO-$R_5$- is the radical obtained by removing the -NCO group from an isocyanate compound selected from the group consisting of 2-isocyanatoethyl methacrylate, 2-isocyanatoethyl acrylate, 3-isocyanatopropyl methacrylate, 1-methyl-2-isocyanatoethyl methacrylate, and 1,1-dimethyl-2-isocyanatoethyl acrylate.

**9.** A copolymer according to claim 8 wherein the isocyanate compound is 2-isocyanatoethyl methacrylate.

**10.** A copolymer according to claim 3 wherein QV is $Q_4V$ and V-$R_6$- is the radical obtained by removing the -NCO group from 2-isocyanatobutyl vinyl ether, styrene isocyanate, or m-isopropenyl-alpha,alpha-dimethylbenzyl isocyanate.

**11.** A copolymer according to claim 10 wherein the isocyanate is m-isopropenyl-alpha, alpha-dimethylbenzyl isocyanate.

**12.** A copolymer according to claim 4 wherein QV is $Q_3V$ and V-COO-$R_5$- is the radical obtained by removing the -NCO group from an isocyanate compound selected from the group consisting of 2-isocyanatoethyl methacrylate, 2-isocyanatoethyl acrylate, 3-isocyanatopropyl methacrylate, 1-methyl-2-isocyanatoethyl methacrylate, and 1,1-dimethyl-2-isocyanatoethyl acrylate.

**13.** A copolymer according to claim 4 wherein QV is $Q_4V$ and V-$R_6$- is the radical obtained by removing the -NCO group from 2-isocyanatobutyl vinyl ether, styrene isocyanate, or m-isopropenyl-alpha,alphadfinlethylbenzyl isocyanate.

**14.** A copolymer according to claim 5 wherein QV is $Q_3V$ and V-COO-$R_5$- is the radical obtained by removing the -NCO group from an isocyanate compound selected from the group consisting of 2-isocyanatoethyl methacrylate, 2-isocyanatoethyl acrylate, 3-isocyanatopropyl methacrylate, 1-methyl-2-isocyanatoethyl methacrylate, and 1,1-dimethyl-2-isocyanatoethyl acrylate.

**15.** A copolymer according to claim 5 wherein QV is $Q_4V$ and V-$R_6$- is the radical obtained by removing the -NCO group from 2-isocyanatobutyl vinyl ether, styrene isocyanate, or m-isopropenyl-alpha,alpha-dimethylbenzyl isocyanate.

**16.** A copolymer according to claim 12, wherein the isocyanate compound is 2-isocyanatoethyl methacrylate.

**17.** A copolymer according to claim 13, wherein the isocyanate is m-isopropenyl-alpha, alpha-dimethyl benzyl isocyanate.

**18.** A copolymer according to claim 14, wherein the isocyanate is 2-isocyanatoethyl methacrylate.

**19.** A copolymer according to claim 15, wherein the isocyanate is m-isopropenyl-alpha, alpha-dimethyl benzyl isocyanate.

**20.** A copolymer according to claim 2 wherein PE is poly(ethylene oxide), poly(propylene oxide) or poly(ethylene oxide-co-propylene oxide) and QV is $Q_2V$, $Q_3V$ or $Q_4V$.

**21.** A copolymer according to claim 20 wherein QV is $Q_3V$ or $Q_4V$ and a is 1.

**22.** A copolymer according to claim 1 wherein (B-1) is a fluorine containing monomer containing at least three fluorine atoms selected from the group consisting of hexafluoroisopropyl acrylate and methacrylate, perfluorocyclohexyl acrylate and methacrylate, pentafluorostyrene and the acrylate or methacrylate esters or amides of the formula

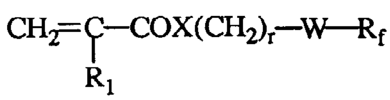

(I)

wherein

$R_f$ is $-(CF_2)_tCF_2L$ or $-(CF_2CF_2)_qOCF(CF_3)_2$,
$R_1$ is hydrogen or methyl,
X is oxygen or $-NR_7-$ wherein $R_7$ is an alkyl group with 1-5 carbon atoms,

r is an integer from 1-4,
t is an integer from 0-14,
q is an integer from 1-3;
L is hydrogen or fluorine, with the proviso that, when t is 0, L is fluorine; and
W is a direct bond or a divalent group of the structure $-NR_7-CO-$; $-NR_7SO_2-(CH_2)_r-$;$-NR_7SO_2-$;$-S-(CH_2)_r-$;$-NR_7-(CH_2)_r-NR_7SO_2-$; or -NHCO-.

**23.** A copolymer according to claim 1 wherein (B-1) is a fluorinated monomer selected from the group consisting of hexafluoroisopropyl acrylate, hexafluoroisopropyl methacrylate or a compound of structure (I), as defined in claim 22, wherein W is a direct bond, X is oxygen, $R_f$ is $-(CF_2)_tCF_2L$ and L is fluorine.

**24.** A copolymer according to claim 23 wherein in the compound of formula (I) $R_1$ is hydrogen, r is 2, and t is 6 to 10; or in which $R_1$ is hydrogen, r is 1 or 2, and t is 1 to 4, or in which $R_1$ is methyl, r is 2, and t is 4 to 10.

**25.** A copolymer according to claim 23 wherein r is 1 or 2, and t is 4 to 8.

**26.** A copolymer according to claim 23 wherein $R_1$ is methyl, r is 2 and t is 4 to 10.

**27.** A copolymer according to claim 1 wherein (B-2) is a silicone-containing vinyl monomer which is an oligosiloxanyl-silyl-alkyl acrylate or methacrylate containing 2 to 10 silicon atoms.

**28.** A copolymer according to claim 27 wherein the monomer is selected from the group consisting of tris(trimethylsiloxy)-silyl-propyl (meth)acrylate, triphenyldimethyl-disiloxanylmethyl (meth)acrylate, pentamethyl-disiloxanylmethyl acrylate, tert-butyltetramethyldisiloxanylethyl (meth)acrylate, methyl-di(trimethylsiloxy)silylprcpyl-glyceryl (meth)acrylate; pentamethyldi-siloxanyl-methyl methacrylate; heptamethyl-cyclotetrasiloxy methyl methacrylate; heptamethyl-cyclotetrasiloxy-propyl methacrylate; (trimethyl-silyl)-decamethyl-pentasiloxy-propyl methacrylate; and undecamethyl pentasiloxypropyl methacrylate.

**29.** A copolymer according to claim 28 wherein the monomer is tris(trimethylsiloxy)-silyl-propyl methacrylate.

**30.** A copolymer according to claim 1 wherein component (B) is 50 to 84.5% by weight of said copolymer, component (C) is 0 to 20% by weight and component (D) is 0.5 to 7% by weight.

**31.** A copolymer according to claim 2 wherein component (A) is 15 to 49.5% by weight and the polyether PE is a poly (ethylene oxide) of 1500-10000 MW, or a poly(ethylene oxide-co-propylene oxide) of 1500-10000 MW and wherein a is 1 and $R_2$ is $-CH_2-CHCH_3-$, wherein QV is $Q_3V$ or $Q_4V$, and $V-COO-R_5-$ is the radical obtained by removing the -NCO group from 2-isocyanatoethyl methacrylate or 2-isocyanatoethyl acrylate, and wherein $V-R_6-$ is the radical obtained by removing the -NCO group from styrene isocyanate or m-isopropenyl-alpha,alpha-dimethylbenzyl isocyanate; component (B) is 50 to 84.5% by weight of component (B-1), wherein (B-1) is a fluorine containing monomer containing at least three fluorine atoms selected from the group consisting of hexafluoroisopropyl acrylate and methacrylate, perfluorocyclohexyl acrylate and methacrylate, pentafluorostyrene and the acrylate or methacrylate esters of the formula

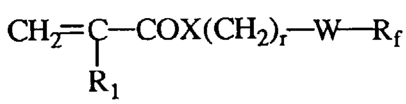

(I)

wherein

W is a direct bond, X is oxygen and $R_f$ is $-(CF_2)_tCF_2L$,
$R_1$ is hydrogen or methyl,
r is an integer from 1-4,
t is an integer from 0-10,
L is hydrogen or fluorine, with the proviso that, when t is 0, L is fluorine; and
component (C) is 0 to 20% by weight and component (D) is 0.5 to 7% by weight.

**32.** A copolymer according to claim 30 wherein component (D) is 0.5 to 7% by weight of the diacrylates and dimethacrylates of 1,2-ethylene glycol, 1,2- and 1,3-propanediol and of 1,3- and 1,4-butane-, 1,5-pentane- and 1,6-hexanediol; the diacrylates and dimethacrylates of diethylene-, triethylene- and tetraethylene glycol, and of neopentyl glycol, di-(2-hydroxyethyl) sulfone and thiodiethylene glycol; trimethylolpropane triacrylate and tri-methacrylate, di-trimethylolpropane tetraacrylate, pentaerythritol tetraacrylate and tetramethacrylate, di-pentaerythritol monohydroxy pentaacrylate; bisphenol-A- and ethoxylated bisphenol-A-dimethacrylate, tris(2-hydroxyethyl)-isocyanurate triacrylate; allyl (meth)acrylate; methylene-bisacrylamide, ethylene-bismethacrylamide, divinylbenzene, allyl methacrylate and butanediol divinylether; and the reaction products of equivalent amounts of aliphatic, cycloaliphatic and aromatic diisocyanates or of vinyl-unsaturated (mono)isocyanates with hydroxy or amino substituted acrylates and methacrylates.

**33.** A copolymer according to claim 1 wherein component (C) is selected from methoxy-ethyl acrylate and methoxy-ethyl methacrylate, ethoxy-ethyl acrylate, ethoxy-ethyl methacrylate, and ethoxy-ethoxy-ethyl acrylate; methyl methacrylate, methyl acrylate, 2-hydroxyethyl methacrylate; N-vinylpyrrolidone; N,N-dimethyl-acrylamide and styrene, or mixtures thereof, and component (D) is ethylene glycol diacrylate or dimethacrylate, trimethylolpropane triacrylate or methacrylate, neopentyl glycol diacrylate or methacrylate, allyl methacrylate or divinyl benzene.

**34.** A copolymer according to claim 1 wherein component (D) is 0.5 to 7% by weight of said copolymer.

**35.** A copolymer according to claim 1 wherein component (D) is 0.1 to 0.5% by weight of said copolymer.

**36.** A copolymer according to claim 1 which is in the form of a contact lens.

**37.** A copolymer according to claim 4 wherein the amount of component (C) is zero.

**38.** A copolymer according to claim 4 wherein component (A) is 15-30% by weight of said copolymer.

**39.** A copolymer according to claim 5 wherein component (A) is 30-60% by weight of said copolymer.

**40.** A copolymer according to claim 37 which is in the form of a contact lens.

**41.** A process for the manufacture of a copolymer according to claim 1 characterized in conventional copolymerizing the monomer mixture in the presence of an initiator which generates free radicals on application of activating energy.

**42.** Use of a copolymer according to claim 1 for the manufacture of a contact lens.

**43.** A contact lens comprising a copolymer as defined in claim 1.

**44.** A contact lens consisting essentially of a copolymer as defined in claim 1.

**Claims for the following Contracting State : ES**

**1.** A process for the manufacture of a copolymer which is oxygen permeable, flexible, wettable, biocompatible and suitable for use in ophthalmic devices, such as contact lenses, which copolymer comprises the polymerization product of

(A) 15 to 69.9% by weight of a vinyl-telechelic polyether, or a mixture thereof, wherein said polyether does not contain perfluoropolyalkylether segments,
(B) 30 to 84.9% by weight of
(B-1) a fluorinated, ethylenically unsaturated monomer, or
(B-2) a silicone-containing ethylenically unsaturated monomer, or a mixture of monomer (B-1) and monomer (B-2),
(C) 0 to 40% by weight of an ethylenically unsaturated monomer or mixture of monomers other than monomer (B-1) or monomer (B-2), and
(D) 0.1 to 10% by weight of a polyethylenically unsaturated comonomer of 200 to 1000 molecular weight,

characterized in conventional copolymerizing the monomer mixture in the presence of an initiator which generates free radicals on application of activating energy.

**2.** A process according to claim 1 wherein the vinyl-telechelic polyether (A) has the formula (A):

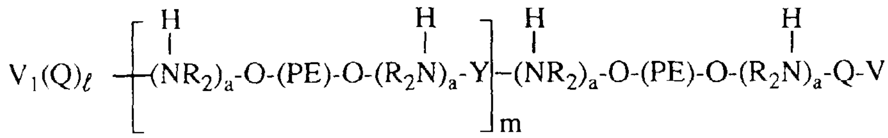 (A)

wherein PE has a number average molecular weight ($MW_n$) of about 500 to about 15000 and has the formula:

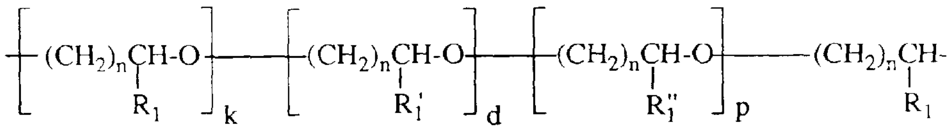 (PE)

wherein

n is 1 to 3,
k, d and p are integers from 0 to 300, and the sum of k+d+p is 7 to 300,
$R_1$, $R_1$' and $R_1$" are independently of each other hydrogen or methyl, with the proviso that if n is 3, $R_1$, $R_1$' and $R_1$" are hydrogen,
a is zero or 1,
m is an integer from zero to 2,
$\ell$ is zero or 1,
$R_2$ is linear or branched alkylene with 2 to 4 carbon atoms; Y is

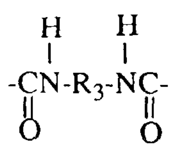 or 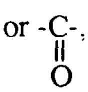

wherein $R_3$ is a divalent aliphatic group with 2 to 14 carbon atoms, a divalent 5- or 6-membered cycloaliphatic group with 5 to 15 C-atoms, or an arylene group with 6 to 14 C-atoms, with the proviso, that if Y is

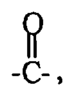

a is 1;
Q is selected from (shown as attached to V):

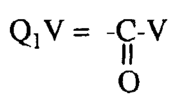

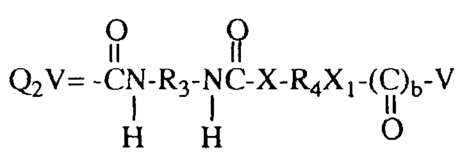

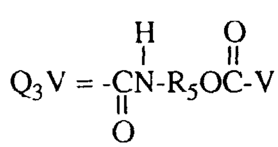

and

$Q_4V$ = 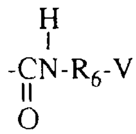

wherein

$R_4$ is alkylene of 2 to 4 carbon atoms,
$R_5$ is alkylene of 2 to 10 carbon atoms,
$R_6$ is arylene or alkyl-substituted arylene of 6 to 20 carbon atoms,
X is -O- or $-NR_7-$, wherein $R_7$ is alkyl of 1 to 5 carbon atoms,
$X_1$ is -O-, -NH- or $-NR_7-$,
b is zero or 1,
V is

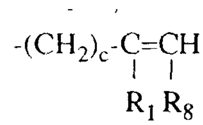

c is zero or 1,
$V_1$ has same meaning as V, or is H or $R_9$, when $\ell$ is zero;
$R_8$ is H or -COOH, with the proviso that, if $R_8$ is -COOH, $R_1$ is H, c is zero, and Q is $Q_1$;
$R_9$ is alkyl of 1 to 18 carbon atoms;

with the further proviso that

when Q is $Q_2$, a is zero;
when Q is $Q_2$, $Q_3$ or $Q_4$, $R_8$ is H;
when c is 1, b is zero, Q is $Q_2$ and $R_1$ and $R_8$ are H; and
when $V_1$ is $R_9$, m is zero.

**3.** A process according to claim 2 wherein the polyether PE is a poly(ethylene oxide) (PEO) of 500-12000 MW, a poly (propylene oxide) (PPO) of 500-15000 MW, a in ratios poly(ethylene oxide-co-propylene oxide) of random or block copolymer structure in ratios of PEO:PPO from 1:30 to 30:1 of 500-15000 MW, or a poly(tetramethylene oxide) of 500-10000 MW.

**4.** A process according to claim 3 wherein the polyether PE is a poly(ethylene oxide) of 1500-10000 MW, or a poly (ethylene oxide-co-propylene oxide) of 1500-12000 MW and wherein a is 1 and $R_2$ is

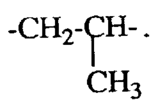

**5.** A process according to claim 3 wherein the polyether is an poly(propylene oxide) of 1000-8000 MW, a is 1 and $R_2$ is

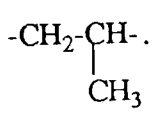

**6.** A process according to claim 3 wherein QV is $Q_2V$, wherein in $Q_2$ $R_3$ is a divalent radical obtained by removing the two -NCO groups from a diisocyanate selected from the group consisting of ethylene diisocyanate, 1,2-diisocyanatopropane, 1,3-diisocyanatopropane, 1,6-diisocyanatohexane, 1,2-diisocyanatocyclohexane, 1,3-diisocyanatocyclohexane, 1,4-diisocyanatobenzene, bis(4-isocyanatocyclohexyl)methane, bis (4-isocyanatocyclohexenyl)methane, bis(4-isocyanatophenyl)-methane, 2,6- and 2,4-toluene diisocyanate; 3,3'-dichloro-4,4'-diisocyanatobiphenyl; 1,5-diisocyanatonaphthalene, hydrogenated toluene diisocyanate; 1-isocyanatomethyl-5-isocyanato-1,3, 3-trimethylcyclohexane (=isophorone diisocyanate); 2,2,4-(2,4,4)-trimethylhexane-1,6-diisocyanate, 2,2'-diisocyanatodiethyl fumarate; 1,5-diisocyanato-1-carboxypentane; 1,2-, 1,3-, 1,6-, 1,7-, 1,8-, 2,7- and 2,3-diisocyanatonaphthalene; 2,4- and 2,7-diisocyanato-1-methyl-naphthalene; 4,4'-diisocyanatobiphenyl; 4,4'-diisocyanato-3,3"-dimethoxy-bisphenyl"; 4,4'-diisocyanato-2,2'-dimethyl biphenyl; bis-(4-isocyanatophenyl) ethane; and bis (4-isocyanatophenyl) ether, and V-$(CO)_b$-$X_1$-$R_4$-X- is the radical obtained by removing the active hydrogen atom from a hydroxyl or amino group of a compound selected from the group consisting of 2-hydroxyethyl acrylate and methacrylate, 2- and 3-hydroxypropyl acrylate and methacrylate; 4-hydroxybutyl acrylate and methacrylate; glycerol dimethacrylate; hydroxyethyl maleate and fumarate; 2-hydroxyethyl- and 4-hydroxy-butyl vinyl ether; N-tert.-butyl-aminoethyl methacrylate, N-(3-hydroxypropyl)-methacrylamide; vinyl-benzyl alcohol; and allyl alcohol.

**7.** A process according to claim 6 wherein diisocyanate is isophorone diisocyanate, 2,2,4-(2,4,4)-trimethylhexane-1,6-diisocyanate, 2,4-toluene diisocyanate or 2,6-toluene diisocyanate, and the active hydrogen containing vinyl compound is 2-hydroxyethyl methacrylate, 2-hydroxyethyl acrylate or N-tert. butyl-amino ethyl methacrylate.

**8.** A process according to claim 3 wherein QV is $Q_3V$ and V-COO-$R_5$- is the radical obtained by removing the -NCO group from an isocyanate compound selected from the group consisting of 2-isocyanatoethyl methacrylate, 2-isocyanatoethyl acrylate, 3-isocyanatopropyl methacrylate, 1-methyl-2-isocyanatoethyl methacrylate, and 1,1-dimethyl-2-isocyanatoethyl acrylate.

**9.** A process according to claim 8 wherein the isocyanate compound is 2-isocyanatoethyl methacrylate.

**10.** A process according to claim 3 wherein QV is $Q_4V$ and V-$R_6$- is the radical obtained by removing the -NCO group from 2-isocyanatobutyl vinyl ether, styrene isocyanate, or m-isopropenyl-alpha,alpha-dimethylbenzyl isocyanate.

**11.** A process according to claim 10 wherein the isocyanate is m-isopropenyl-alpha, alpha-dimethylbenzyl isocyanate.

**12.** A process according to claim 4 wherein QV is $Q_3V$ and V-COO-$R_5$- is the radical obtained by removing the -NCO group from an isocyanate compound selected from the group consisting of 2-isocyanatoethyl methacrylate, 2-isocyanatoethyl acrylate, 3-isocyanatopropyl methacrylate, 1-methyl-2-isocyanatoethyl methacrylate, and 1,1-dimethyl-2-isocyanatoethyl acrylate.

**13.** A process according to claim 4 wherein QV is $Q_4V$ and V-$R_6$- is the radical obtained by removing the -NCO group from 2-isocyanatobutyl vinyl ether, styrene isocyanate, or m-isopropenyl-alpha,alpha-dimethylbenzyl isocyanate.

**14.** A process according to claim 5 wherein QV is $Q_3V$ and V-COO-$R_5$- is the radical obtained by removing the -NCO group from an isocyanate compound selected from the group consisting of 2-isocyanatoethyl methacrylate, 2-isocyanatoethyl acrylate, 3-isocyanatopropyl methacrylate, 1-methyl-2-isocyanatoethyl methacrylate, and 1,1-dimethyl-2-isocyanatoethyl acrylate.

**15.** A process according to claim 5 wherein QV is $Q_4V$ and V-$R_6$- is the radical obtained by removing the -NCO group from 2-isocyanatobutyl vinyl ether, styrene isocyanate, or m-isopropenyl-alpha,alpha-dimethylbenzyl isocyanate.

**16.** A process according to claim 12, wherein the isocyanate compound is 2-isocyanatoethyl methacrylate.

**17.** A process according to claim 13, wherein the isocyanate is m-isopropenyl-alpha, alpha-dimethyl benzyl isocyanate.

**18.** A process according to claim 14, wherein the isocyanate is 2-isocyanatoethyl methacrylate.

**19.** A process according to claim 15, wherein the isocyanate is m-isopropenyl-alpha, alpha-dimethyl benzyl isocyanate.

**20.** A process according to claim 2 wherein PE is poly(ethylene oxide), poly(propylene oxide) or poly(ethylene oxide-co-propylene oxide) and QV is $Q_2V$, $Q_3V$ or $Q_4V$.

**21.** A process according to claim 20 wherein QV is $Q_3V$ or $Q_4V$ and a is 1.

**22.** A process according to claim 1 wherein (B-1) is a fluorine containing monomer containing at least three fluorine atoms selected from the group consisting of hexafluoroisopropyl acrylate and methacrylate, perfluorocyclohexyl acrylate and methacrylate, pentafluorostyrene and the acrylate or methacrylate esters or amides of the formula

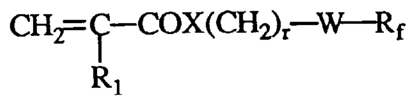 (I)

wherein

$R_f$ is $-(CF_2)_tCF_2L$ or $-(CF_2CF_2)_qOCF(CF_3)_2$,
$R_1$ is hydrogen or methyl,
X is oxygen or $-NR_7-$ wherein $R_7$ is an alkyl group with 1-5 carbon atoms,
r is an integer from 1-4,
t is an integer from 0-14,
q is an integer from 1-3;
L is hydrogen or fluorine, with the proviso that, when t is 0, L is fluorine; and
W is a direct bond or a divalent group of the structure $-NR_7-CO-$; $-NR_7SO_2-(CH_2)_r-$;$-NR_7SO_2-$; $-S-(CH_2)_r-$;$-NR_7-(CH_2)_r-NR_7SO_2-$; or -NHCO-.

**23.** A process according to claim 1 wherein (B-1) is a fluorinated monomer selected from the group consisting of hexafluoroisopropyl acrylate, hexafluoroisopropyl methacrylate or a compound of structure (I), as defined in claim 22, wherein W is a direct bond, X is oxygen, $R_f$ is $-(CF_2)_tCF_2L$ and L is fluorine.

**24.** A process according to claim 23 wherein in the compound of formula (I) $R_1$ is hydrogen, r is 2, and t is 6 to 10; or in which $R_1$ is hydrogen, r is 1 or 2, and t is 1 to 4, or in which $R_1$ is methyl, r is 2, and t is 4 to 10.

**25.** A process according to claim 23 wherein r is 1 or 2, and t is 4 to 8.

**26.** A process according to claim 23 wherein $R_1$ is methyl, r is 2 and t is 4 to 10.

**27.** A process according to claim 1 wherein (B-2) is a silicone-containing vinyl monomer which is an oligosiloxanyl-silyl-alkyl acrylate or methacrylate containing 2 to 10 silicon atoms.

**28.** A process according to claim 27 wherein the monomer is selected from the group consisting of tris(trimethylsiloxy)-silyl-propyl (meth)acrylate, triphenyldimethyl-disiloxanylmethyl (meth)acrylate, pentamethyl-disiloxanylmethyl acrylate, tert-butyl-tetramethyldisiloxanylethyl (meth)acrylate, methyl-di(trimethylsiloxy)silylpropyl-glyceryl (meth)acrylate; pentamethyldi-siloxanyl-methyl methacrylate; heptamethyl-cyclotetrasiloxy methyl methacrylate; heptamethyl-cyclotetrasiloxy-propyl methacrylate; (trimethyl-silyl)-decamethyl-pentasiloxy-propyl methacrylate; and undecamethyl pentasiloxypropyl methacrylate.

**29.** A process according to claim 28 wherein the monomer is tris(trimethylsiloxy)-silyl-propyl methacrylate.

**30.** A process according to claim 1 wherein component (B) is 50 to 84.5% by weight of said copolymer, component (C) is 0 to 20% by weight and component (D) is 0.5 to 7% by weight.

**31.** A process according to claim 2 wherein component (A) is 15 to 49.5% by weight and the polyether PE is a poly (ethylene oxide) of 1500-10000 MW, or a poly(ethylene oxide-co-propylene oxide) of 1500-10000 MW and wherein a is 1 and $R_2$ is $-CH_2-CHCH_3-$, wherein QV is $Q_3V$ or $Q_4V$, and $V-COO-R_5-$ is the radical obtained by removing the -NCO group from 2-isocyanatoethyl methacrylate or 2-isocyanatoethyl acrylate, and wherein $V-R_6-$ is the radical obtained by removing the -NCO group from styrene isocyanate or m-isopropenyl-alpha,alpha-dimethylbenzyl isocyanate; component (B) is 50 to 84.5% by weight of component (B-1), wherein (B-1) is a fluorine containing monomer containing at least three fluorine atoms selected from the group consisting of hexafluoroisopropyl acrylate and methacrylate, perfluorocyclohexyl acrylate and methacrylate, pentafluorostyrene and the acrylate or methacrylate esters of the formula

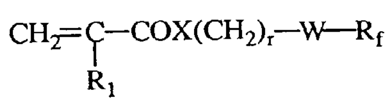 (I)

wherein

W is a direct bond, X is oxygen and $R_f$ is $-(CF_2)_tCF_2L$,
$R_1$ is hydrogen or methyl,
r is an integer from 1-4,
t is an integer from 0-10,
L is hydrogen or fluorine, with the proviso that, when t is 0, L is fluorine; and
component (C) is 0 to 20% by weight and component (D) is 0.5 to 7% by weight.

**32.** A process according to claim 30 wherein component (D) is 0.5 to 7% by weight of the diacrylates and dimethacrylates of 1,2-ethylene glycol, 1,2- and 1,3-propanediol and of 1,3- and 1,4-butane-, 1,5-pentane- and 1,6-hexanediol; the diacrylates and dimethacrylates of diethylene-, triethylene- and tetraethylene glycol, and of neopentyl glycol, di-(2-hydroxyethyl) sulfone and thiodiethylene glycol; trimethylolpropane triacrylate and tri-methacrylate, di-trimethylolpropane tetraacrylate, pentaerythritol tetraacrylate and tetramethacrylate, di-pentaerythritol monohydroxy pentaacrylate; bisphenol-A- and ethoxylated bisphenol-A-dimethacrylate, tris(2-hydroxyethyl)-isocyanurate triacrylate; allyl (meth)acrylate; methylene-bisacrylamide, ethylene-bismethacrylamide, divinylbenzene, allyl methacrylate and butanediol divinylether; and the reaction products of equivalent amounts of aliphatic, cycloaliphatic and aromatic diisocyanates or of vinyl-unsaturated (mono)isocyanates with hydroxy or amino substituted acrylates and methacrylates.

**33.** A process according to claim 1 wherein component (C) is selected from methoxy-ethyl acrylate and methoxy-ethyl methacrylate, ethoxy-ethyl acrylate, ethoxy-ethyl methacrylate, and ethoxy-ethoxy-ethyl acrylate; methyl methacrylate, methyl acrylate, 2-hydroxyethyl methacrylate; N-vinylpyrrolidone; N,N-dimethyl-acrylamide and styrene, or mixtures thereof, and component (D) is ethylene glycol diacrylate or dimethacrylate, trimethylolpropane triacrylate or methacrylate, neopentyl glycol diacrylate or methacrylate, allyl methacrylate or divinyl benzene.

**34.** A process according to claim 1 wherein component (D) is 0.5 to 7% by weight of said copolymer.

**35.** A process according to claim 1 wherein component (D) is 0.1 to 0.5% by weight of said copolymer.

**36.** A process according to claim 1 wherein the resulting copolymer is in the form of a contact lens.

**37.** A process according to claim 4 wherein the amount of component (C) is zero.

**38.** A process according to claim 4 wherein component (A) is 15-30% by weight of said copolymer.

**39.** A process according to claim 5 wherein component (A) is 30-60% by weight of said copolymer.

**40.** A process according to claim 37 wherein the resulting copolymer is in the form of a contact lens.

**41.** Use of a copolymer as defined in claim 1 for the manufacture of a contact lens.

**42.** A contact lens comprising a copolymer as defined in claim 1.

**43.** A contact lens consisting essentially of a copolymer as defined in claim 1.

**Patentansprüche**

**Patentansprüche für folgende Vertragsstaaten: AT, DE, CH, DE, DK, FR, GB, GR, IT, LI, LU, NL, SE**

**1.** Copolymeres, das sauerstoffdurchlässig, elastisch, benetzbar, biokompatibel und zur Verwendung in ophthalmologischen Vorrichtungen, wie Kontaktlinsen, geeignet ist, dadurch **gekennzeichnet**, daß es das Polymerisationsprodukt aus

(A) 15 bis 69,9 Gew.-% eines Vinyl-telechelen Polyethers oder eines Gemisches daraus, wobei der Polyether keine Perfluorpolyalkylethersegmente enthält
(B) 30 bis 84,9 Gew.-%
(B-1) eines fluorierten, ethylenisch ungesättigten Monomeren, oder

(B-2) eines Silicon-enthaltenden ethylenisch ungesättigten Monomeren oder eines Gemisches aus Monomer (B-1) und Monomer (B-2),

(C) 0 bis 40 Gew.-% eines ethylenisch ungesättigten Monomeren oder eines Gemisches der Monomeren, ausgenommen Monomeres (B-1) oder Monomeres (B-2), und

(D) 0,1 bis 10 Gew.-% eines polyethylenisch ungesättigten Comonomeren mit einem Molekulargewicht von 200 bis 1000 umfaßt.

**2.** Copolymeres nach Anspruch 1, worin der Vinyl-telechele Polyether (A) die Formel (A) besitzt:

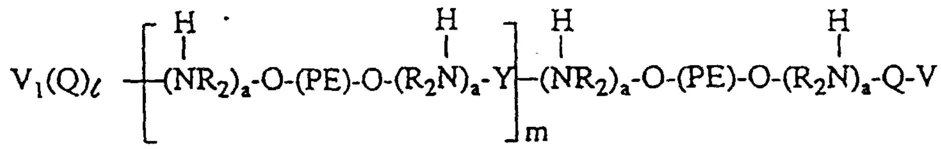 (A)

worin PE ein zahlendurchschnittliches Molekulargewicht ($MG_n$) von etwa 500 bis etwa 15.000 besitzt und die Formel

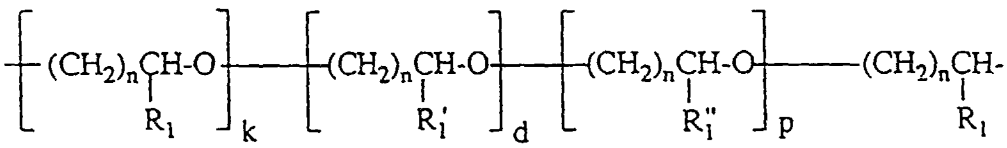 (PE)

besitzt, worin n den Wert 1 bis 3 besitzt,

k, d und p ganze Zahlen von 0 bis 300 sind, und die Summe aus k+d+p 7 bis 300 beträgt,

$R_1$, $R_1'$ und $R_1''$ unabhängig voneinander für ein Wasserstoffatom oder eine Methylgruppe stehen, mit der Maßgabe, daß wenn n den Wert 3 hat, $R_1$, $R_1'$ und $R_1''$ Wasserstoff bedeuten,

a den Wert 0 oder 1 besitzt,

m eine ganze Zahl von 0 bis 2 ist,

l den Wert 0 oder 1 besitzt,

$R_2$ ein lineares oder verzweigtes Alkylen mit 2 bis 4 Kohlenstoffatomen ist,

Y 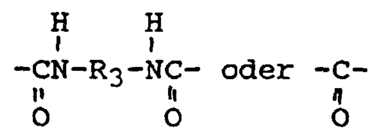 oder

bedeutet, worin $R_3$ eine zweiwertige aliphatische Gruppe mit 2 bis 14 Kohlenstoffatomen, eine zweiwertige 5- oder 6-gliedrige cycloaliphatische Gruppe mit 5 bis 15 Kohlenstoffatomen oder eine Arylengruppe mit 6 bis 14 Kohlenstoffatomen ist, mit der Maßgabe, daß, wenn

Y

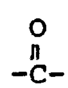

ist,

a den Wert 1 hat;

Q ausgewählt ist aus (gezeigt in Bindung an V):

$Q_1V$ = 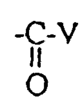

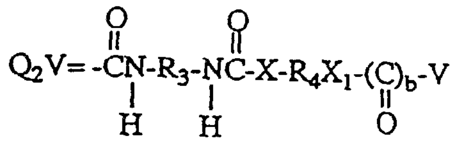

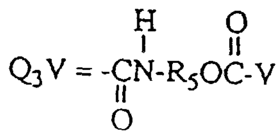

und

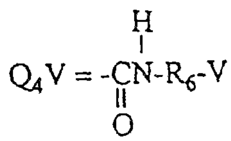

worin

$R_4$ ein Alkylen mit 2 bis 4 Kohlenstoffatomen ist,
$R_5$ ein Alkylen mit 2 bis 10 Kohlenstoffatomen ist,
$R_6$ ein Arylen oder ein Alkyl-substituiertes Arylen mit 6 bis 20 Kohlenstoffatomen ist,
X -O- oder $-NR_7-$ bedeutet, worin $R_7$ ein Alkyl mit 1 bis 5 Kohlenstoffatomen ist,
$X_1$ -O-, -NH- oder $-NR_7-$ bedeutet,
b den Wert 0 oder 1 besitzt,

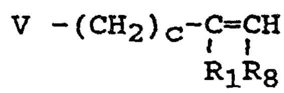

bedeutet,
c den Wert 0 oder 1 besitzt,
$V_1$ die gleiche Bedeutung wie V besitzt, oder für H oder $R_9$ steht, wenn 1 den Wert 0 hat,
$R_8$ für H oder -COOH steht, mit der Maßgabe, daß, wenn $R_8$ -COOH ist, $R_1$ H, c 0 und Q $Q_1$ bedeutet,
$R_9$ ein Alkyl mit 1 bis 18 Kohlenstoffatomen ist;
mit der weiteren Maßgabe, daß, wenn Q $Q_2$ ist, a für 0 steht;
wenn Q $Q_2$, $Q_3$ oder $Q_4$ ist, $R_8$ für H steht;
wenn c 1 bedeutet, b 0 ist, Q $Q_2$ ist und $R_1$ und $R_8$ H bedeuten; und
wenn $V_1$ $R_9$ ist, m den Wert 0 hat.

**3.** Copolymeres nach Anspruch 2, worin der Polyether PE ein Poly(ethylenoxid) (PEO) mit einem Molekulargewicht von 500 bis 12.000, ein Poly(propylenoxid) (PPO) mit einem Molekulargewicht von 500 bis 15.000, ein Poly(ethylenoxid-copropylenoxid) mit einer Random- oder Blockcopolymerstruktur in den Verhältnissen von PEO:PPO von 1:30 bis 30:1 mit einem Molekulargewicht von 500 bis 15.000 oder ein Poly(tetramethylenoxid) mit einem Molekulargewicht von 500 bis 10.000 ist.

**4.** Copolymeres nach Anspruch 3, worin der Polyether PE ein Poly(ethylenoxid) mit einem Molekulargewicht von 1500 bis 10.000 oder ein Poly(ethylenoxidcopropylenoxid) mit einem Molekulargewicht von 1500 bis 12.000 ist, und worin a den Wert 1 hat, und $R_2$

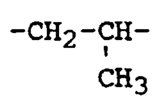

bedeutet.

**5.** Copolymeres nach Anspruch 3, worin der Polyether ein Poly(propylenoxid) mit einem Molekulargewicht von 1000

bis 8000 ist, a den Wert 1 hat, und $R_2$ für

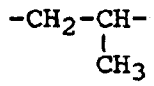

steht.

6. Copolymeres nach Anspruch 3, worin QV $Q_2$V ist, worin in $Q_2$ $R_3$ ein zweiwertiger Rest ist, erhalten durch Entfernen der zwei NCO-Gruppen aus einem Diisocyanat, ausgewählt aus der Gruppe bestehend aus Ethylendiisocyanat, 1,2-Diisocyanatopropan, 1,3-Diisocyanatopropan, 1,6-Diisocyanatohexan, 1,2-Diisocyanatocyclohexan, 1,3-Diisocyanatocyclohexan, 1,4-Diisocyanatobenzol, Bis-(4-isocyanatocyclohexyl)methan, Bis-(4-isocyanatocyclohexenyl)methan, Bis-(4-isocyanatophenyl)methan, 2,6- und 2,4-Toluoldiisocyanat; 3,3'-Dichlor-4,4'-diisocyanatobiphenyl; 1,5-Diisocyanatonaphthalin, hydriertem Toluoldiisocyanat; 1-Isocyanatomethyl-5-isocyanato-1,3,3-trimethylcyclohexan (=Isophorondiisocyanat); 2,2,4-(2,4,4)-Trimethylhexan-1,6-diisocyanat, 2,2'-Diisocyanatodiethylfumarat; 1,5-Di-isocyanato-1-carboxypentan; 1,2, 1,3-, 1,6-, 1,7-, 1,8-, 2,7- und 2,3-Diisocyanatonaphthalin; 2,4- und 2,7-Di-isocyanato-l-methylnaphthalin; 4,4'-Diisocyanatobiphenyl; 4,4'-Diisocyanato-3,3'-dimethoxybisphenyl"; 4,4'-Diisocyanato-2,2'-dimethylbiphenyl; Bis-(4-isocyanatophenyl)ethan; und Bis-(4-isocyanato-phenyl) ether, und V-$(CO)_b$-$X_1$-$R_4$-X- der Rest, erhalten durch Entfernen des aktiven Wasserstoffatoms aus einer Hydroxyl- oder Aminogruppe einer Verbindung, ausgewählt aus der Gruppe, bestehend aus 2-Hydroxyethylacrylat und -methacrylat, 2-und 3-Hydroxypropylacrylat und -methacrylat; 4-Hydroxybutylacrylat und -methacrylat; Glycerin-dimethacrylat; Hydroyethylmaleat und -fumarat; 2-Hydroxyethyl- und 4-Hydroxybutylvinylether; N-tert.-Butylaminoethylmethacrylat, N-(3-Hydroxypropyl)methacryl-amid; Vinylbenzylalkohol; und Allylalkohol, ist.

7. Copolymeres nach Anspruch 6, worin das Diisocyanat Isophorondiisocyanat, 2,2,4-(2,4,4)-Trimethylhexan-1,6-diisocyanat, 2,4-Toluoldiisocyanat oder 2,6-Toluoldiisocyanat ist, und die den aktiven Wasserstoff enthaltende Vinylverbindung 2-Hydroxyethylmethacrylat, 2-Hydroxyethylacrylat oder N-tert.-Butylaminoethylmethacrylat ist.

8. Copolymeres nach Anspruch 3, worin QV $Q_3$V ist, und V-COO-$R_5$- der Rest, erhalten durch Entfernen der NCO-Gruppe von einer Isocyanatverbindung, ausgewählt aus der Gruppe, bestehend aus 2-Isocyanatoethylmethacrylat, 2-Isocyanatoethylacrylat, 3-Isocyanatopropylmethacrylat, 1-Methyl-2-isocyanatoethylmethacrylat, und 1,1-Dimethyl-2-isocyanatoethylacrylat, ist.

9. Copolymeres nach Anspruch 8, worin die Isocyanatverbindung 2-Isocyanatoethylmethacrylat ist.

10. Copolymeres nach Anspruch 3, worin QV $Q_4$V ist, und V-$R_6$- der Rest, erhalten durch Entfernen der NCO-Gruppe aus 2-Isocyanatobutylvinylether, Styrolisocyanat oder m-Isopropenyl-$\alpha,\alpha$-dimethylbenzylisocyanat, ist.

11. Copolymeres nach Anspruch 10, worin das Isocyanat m-Isopropenyl-$\alpha,\alpha$-dimethylbenzylisocyanat ist.

12. Copolymeres nach Anspruch 4, worin QV $Q_3$V ist, und V-COO-$R_5$- der Rest, erhalten durch Entfernen der NCO-Gruppe von einer Isocyanatverbindung, ausgewählt aus der Gruppe, bestehend aus 2-Isocyanatoethylmethacrylat, 2-Isocyanatoethylacrylat, 3-Isocyanatopropylmethacrylat, 1-Methyl-2-isocyanatoethylmethacrylat, und 1,1-Dimethyl-2-isocyanatoethylacrylat, ist.

13. Copolymeres nach Anspruch 4, worin QV $Q_4$V ist, und V-$R_6$- der Rest, erhalten durch Entfernen der NCO-Gruppe von 2-Isocyanatobutylvinylether, Styrolisocyanat, oder m-Isopropenyl-$\alpha,\alpha$-dimethylbenzylisocyanat, ist.

14. Copolymeres nach Anspruch 5, worin QV $Q_3$V ist, und V-COO-$R_5$- der Rest, erhalten durch Entfernen der NCO-Gruppe von einer Isocyanatverbindung, ausgewählt aus der Gruppe, bestehend aus 2-Isocyanatoethylmethacrylat, 2-Isocyanatoethylacrylat, 3-Isocyanatopropylmethacrylat, 1-Methyl-2-isocyanatoethylmethacrylat und 1,1-Dimethyl-2-isocyanatoethylacrylat, ist.

15. Copolymeres nach Anspruch 5, worin QV $Q_4$V ist und V-$R_6$- der Rest, erhalten durch Entfernen der NCO-Gruppe aus 2-Isocyanatobutylvinylether, Styrolisocyanat oder m-Isopropenyl-$\alpha,\alpha$-dimethylbenzylisocyanat, ist.

16. Copolymeres nach Anspruch 12, worin die Isocyanatverbindung 2-Isocyanatoethylmethacrylat ist.

17. Copolymeres nach Anspruch 13, worin das Isocyanat m-Isopropenyl-$\alpha,\alpha$-dimethylbenzylisocyanat ist.

**18.** Copolymeres nach Anspruch 14, worin das Isocyanat 2-Isocyanatoethylmethacrylat ist.

**19.** Copolymeres nach Anspruch 15, worin das Isocyanat m-Isopropenyl-α,α-dimethylbenzylisocyanat ist.

**20.** Copolymeres nach Anspruch 2, worin das PE Poly-(ethylenoxid), Poly(propylenoxid) oder Poly(ethylenoxid-co-propylenoxid) ist, und QV $Q_2V$, $Q_3V$ oder $Q_4V$ ist.

**21.** Copolymeres nach Anspruch 20, worin QV $Q_3V$ oder $Q_4V$ bedeutet, und a den Wert 1 hat.

**22.** Copolymeres nach Anspruch 1, worin (B-1) ein Fluor-enthaltendes Monomeres ist, das mindestens 3 Fluoratome enthält, ausgewählt aus der Gruppe, bestehend aus Hexafluorisopropylacrylat und -methacrylat, Perfluorcyclohexylacrylat und -methacrylat, Pentafluorstyrol und den Acrylat- oder Methacrylatestern oder -amiden der Formel

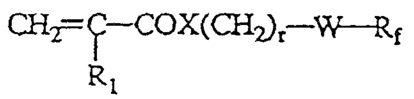

(I)

worin

$R_f$ $-(CF_2)_tCF_2L$ oder $-(CF_2CF_2)_qOCF(CF_3)_2$ bedeutet,
$R_1$ für ein Wasserstoffatom oder eine Methylgruppe steht,
X für ein Sauerstoffatom oder $-NR_7-$ steht, worin $R_7$ eine Alkylgruppe mit 1-5 Kohlenstoffatomen bedeutet,
r eine ganze Zahl von 1-4 ist,
t eine ganze Zahl von 0-14 ist,
q eine ganze Zahl von 1-3 ist;
L für ein Wasserstoff- oder ein Fluoratom steht, mit der Maßgabe, daß, wenn t den Wert 0 hat, L für ein Fluoratom steht; und W eine direkte Bindung oder eine zweiwertige Gruppe der Struktur $-NR_7-CO-$; $-NR_7SO_2-(CH_2)_r-$; $-NR_7SO_2-$; $-S-(CH_2)_r-$; $-NR_7-(CH_2)_r-NR_7SO_2-$, oder -NHCO- ist.

**23.** Copolymeres nach Anspruch 1, worin (B-1) ein fluoriertes Monomeres, ausgewählt aus der Gruppe, bestehend aus Hexafluorisopropylacrylat, Hexafluorisopropyl-methacrylat oder eine Verbindung der Struktur (I), wie in Anspruch 22 definiert, worin W eine direkte Bindung, X ein Sauerstoffatom, $R_f$ $-(CF_2)_tCF_2L$ ist, und L ein Fluoratom ist, ist.

**24.** Copolymeres nach Anspruch 23, worin in der Verbindung der Formel (I) $R_1$ ein Wasserstoffatom ist, r 2 ist, und t 6 bis 10 bedeutet, oder worin $R_1$ ein Wasserstoffatom ist, r 1 oder 2 ist, und t 1 bis 4 ist, oder worin $R_1$ Methyl ist, r 2 ist und t 4 bis 10 bedeutet.

**25.** Copolymeres nach Anspruch 23, worin r 1 oder 2 bedeutet, und t 4 bis 8 bedeutet.

**26.** Copolymeres nach Anspruch 23, worin $R_1$ für eine Methylgruppe steht, r den Wert 2 besitzt und t den Wert 4 bis 10 besitzt.

**27.** Copolymeres nach Anspruch 1, worin (B-2) ein Silicon-enthaltendes Vinylmonomeres ist, das ein Oligosiloxanylsilylalkylacrylat oder -methacrylat mit 2 bis 10 Siliciumatomen ist.

**28.** Copolymeres nach Anspruch 27, worin das Monomere aus der Gruppe, bestehend aus Tris(trimethylsiloxy)silylproypl(meth)acrylat, Triphenyldimethyldisiloxanylmethyl-(meth)acrylat, Pentamethyldisiloxanylmethylacrylat, tert.-Butyltetramethyldisiloxanylethyl(meth)acrylat, Methyldi-(trimethylsiloxy)silylpropylglyceryl(meth)acrylat; Pentamethyldisiloxanylmethylmethacrylat; Heptamethylcyclotetrasiloxymethylmethacrylat; Heptamethylcyclotetrasiloxy-propylmethacrylat; (Trimethylsilyl)decamethylpentasiloxy-propylmethacrylat; und Undecamethylpentasiloxypropyl-methacrylat, ist.

**29.** Copolymeres nach Anspruch 28, worin das Monomere Tris(trimethylsiloxy)silylpropylmethacrylat ist.

**30.** Copolymeres nach Anspruch 1, worin die Komponente (B) 50 bis 84,5 Gew.-% des Copolymeren, die Komponente (C) 0 bis 20 Gew.-% und die Komponente (D) 0,5 bis 7 Gew.-% beträgt.

**31.** Copolymeres nach Anspruch 2, worin die Komponente (A) 15 bis 49,5 Gew.-% beträgt, und der Polyether PE ein Poly(ethylenoxid) mit einem Molekulargewicht von 1500 bis 10.000 oder ein Poly(ethylenoxid-copropylenoxid) mit einem Molekulargewicht von 1500 bis 10.000 ist, und worin a den Wert 1 hat und $R_2$ -$CH_2$-$CHCH_3$- ist, worin QV $Q_3V$ oder $Q_4V$ bedeutet, und V-COO-$R_5$- der Rest ist, der durch Entfernen der -NCO-Gruppe von 2-Isocyanatoethylmethacrylat oder 2-Isocyanatoethylacrylat erhalten wird, und worin V-$R_6$- der Rest ist, der durch Entfernen der -NCO-Gruppe von Styrolisocyanat oder m-Isopropenyl-α,α-dimethylbenzyl-isocyanat erhalten wird; die Komponente (B) 50 bis 84,5 Gew.-% der Komponente (B-1) beträgt, wobei (B-1) ein Fluor-enthaltendes Monomeres mit mindestens drei Fluoratomen, ausgewählt aus der Gruppe, bestehend aus Hexafluorisopropylacrylat und -methacrylat, Perfluor-cyclohexylacrylat und -methacrylat, Pentafluorstyrol und den Acrylat- und Methacrylatestern der Formel

$$CH_2{=}\underset{\displaystyle R_1}{\underset{|}{C}}{-}COX(CH_2)_r{-}W{-}R_f$$

ist, worin

W eine direkte Bindung ist, X Sauerstoff bedeutet und $R_f$-$(CF_2)_tCF_2L$ ist,
$R_1$ Wasserstoff oder Methyl bedeutet,
r eine ganze Zahl von 1 bis 4 ist,
t eine ganze Zahl von 0 bis 10 ist,
L Wasserstoff oder Fluor bedeutet, mit der Maßgabe, daß wenn t den Wert 0 hat, L Fluor bedeutet;
und die Komponente (C) 0 bis 20 Gew.-% beträgt, und die Komponente (D) 0,5 bis 7 Gew.-% beträgt.

**32.** Copolymeres nach Anspruch 30, worin die Komponente (D) 0,5 bis 7 Gew.-% der Diacrylate und Dimethacrylate von 1,2-Ethylenglycol, 1,2- und 1,3-Propandiol und von 1,3-und 1,4-Butan-, 1,5-Pentan- und 1,6-Hexandiol; der Diacrylate und Dimethacrylate von Diethylen-, Triethylen-und Tetraethylenglycol, und von Neopentylglycol, Di-(2-hydroxyethyl)sulfon und Thiodiethylenglycol; Trimethylolpropantriacrylat und -trimethacrylat, Ditrimethylol-propantetraacrylat, Pentaerythrittetraacrylat und -tetramethacrylat, Dipentaerythritmonohydroxypentaacrylat; Bisphenol-A- und ethoxyliertem Bisphenol-A-dimethacrylat, Tris-(2-hydroxyethyl)isocyanurattriacrylat; Allyl(meth)-acrylat, Methylenbisacrylamid, Ethylenbismethacrylamid, Divinylbenzol, Allylmethacrylat und Butandioldivinylether; und der Reaktionsprodukte äquivalenter Mengen an aliphatischen, cycloaliphatischen oder aromatischen Diisocyanaten oder von Vinyl-ungesättigten (Mono)-isocyanaten mit Hydroxy- oder Amino-substituierten Acrylaten oder Methacrylaten ist.

**33.** Copolymeres nach Anspruch 1, worin die Komponente (C) aus Methoxyethylacrylat und Methoxy-ethylmethacrylat, Ethoxyethylacrylat, Ethoxyethylmethacrylat und Ethoxyethoxyethylacrylat, Methylmethacrylat, Methylacrylat, 2-Hydroxyethylmethacrylat, N-Vinylpyrrolidon, N,N-Dimethylacrylamid und Styrol oder Gemischen davon ausgewählt ist, und die Komponente (D) Ethylenglycoldiacrylat oder -dimethacrylat, Trimethylolpropantriacrylat oder -methacrylat, Neopentylglycol-diacrylat oder -methacrylat, Allylmethacrylat oder Divinylbenzol ausgewählt ist.

**34.** Copolymeres nach Anspruch 1, worin die Komponente (D) 0,5 bis 7 Gew.-% des Copolymeren beträgt.

**35.** Copolymeres nach Anspruch 1, worin die Komponente (D) 0,1 bis 0,5 Gew.-% des Copolymeren beträgt.

**36.** Copolymeres nach Anspruch 1, welches in Form einer Kontaktlinse vorliegt.

**37.** Copolymeres nach Anspruch 4, worin die Menge der Komponente (C) Null beträgt.

**38.** Copolymeres nach Anspruch 4, worin die Komponente (A) 15 bis 30 Gew.-% des Copolymeren beträgt.

**39.** Copolymeres nach Anspruch 5, worin die Komponente (A) 30 bis 60 Gew.-% des Copolymeren beträgt.

**40.** Copolymeres nach Anspruch 37, welches in Form einer Kontaktlinse vorliegt.

**41.** Verfahren zur Herstellung eines Copolymeren nach Anspruch 1, dadurch **gekennzeichnet** , daß man in an sich bekannter Weise das Monomerengemisch in Anwesenheit eines Starters, der freie Radikale bei Anwendung einer Aktivierungsenergie erzeugt, copolymerisiert.

**42.** Verwendung eines Copolymeren nach Anspruch 1 zur Herstellung einer Kontaktlinse.

**43.** Kontaktlinse, umfassend ein Copolymeres nach Anspruch 1.

**44.** Kontaktlinse, bestehend im wesentlichen aus einem Copolymeren nach Anspruch 1.

**Patentansprüche für folgenden Vertragsstaat : ESD**

**1.** Verfahren zur Herstellung eines Copolymeren, das sauerstoffdurchlässig, elastisch, benetzbar, biokompatibel und zur Verwendung in ophthalmologischen Vorrichtungen, wie Kontaktlinsen, geeignet ist, welches das Polymerisationsprodukt aus

(A) 15 bis 69,9 Gew.-% eines Vinyl-telechelen Polyethers oder eines Gemisches daraus, wobei der Polyether keine Perfluorpolyalkylethersegmente enthält
(B) 30 bis 84,9 Gew.-%
(B-1) eines fluorierten, ethylenisch ungesättigten Monomeren, oder
(B-2) eines Silicon-enthaltenden ethylenisch ungesättigten Monomeren oder eines Gemisches aus Monomer (B-1) und Monomer (B-2),
(C) 0 bis 40 Gew.-% eines ethylenisch ungesättigten Monomeren oder eines Gemisches der Monomeren, ausgenommen Monomeres (B-1) oder Monomeres (B-2), und
(D) 0,1 bis 10 Gew.-% eines polyethylenisch ungesättigten Comonomeren mit einem Molekulargewicht von 200 bis 1000 umfaßt, dadurch **gekennzeichnet**, daß man in an sich bekannter Weise das Monomerengemisch in Anwesenheit eines Starters, der freie Radikale bei Anwendung einer Aktivierungsenergie erzeugt, copolymerisiert.

**2.** Verfahren nach Anspruch 1, wobei der Vinyl-telechele Polyether (A) die Formel (A) besitzt:

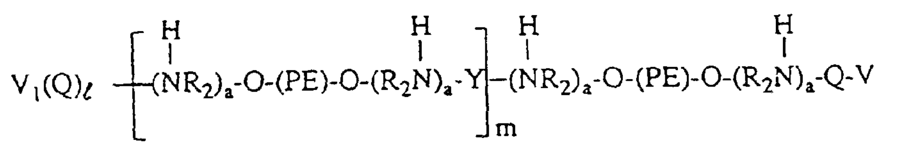 (A)

worin PE ein zahlendurchschnittliches Molekulargewicht ($MG_n$) von etwa 500 bis etwa 15.000 besitzt und die Formel

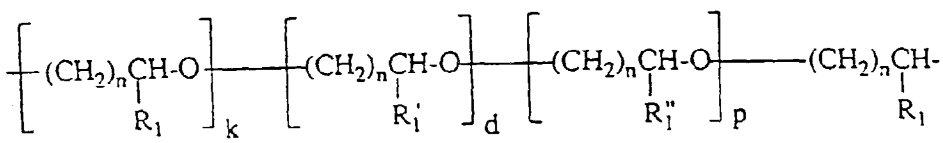 (PE)

besitzt, worin n den Wert 1 bis 3 besitzt,

k, d und p ganze Zahlen von 0 bis 300 sind, und die Summe aus k+d+p 7 bis 300 beträgt,
$R_1$, $R_1$' und $R_1$" unabhängig voneinander für ein Wasserstoffatom oder eine Methylgruppe stehen, mit der Maßgabe, daß wenn n den Wert 3 hat, $R_1$, $R_1$' und $R_1$" Wasserstoff bedeuten,
a den Wert 0 oder 1 besitzt,
m eine ganze Zahl von 0 bis 2 ist,
l den Wert 0 oder 1 besitzt,
$R_2$ ein lineares oder verzweigtes Alkylen mit 2 bis 4 Kohlenstoffatomen ist,

Y 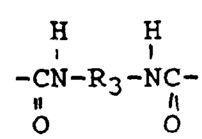 oder 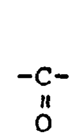

bedeutet, worin $R_3$ eine zweiwertige aliphatische Gruppe mit 2 bis 14 Kohlenstoffatomen, eine zweiwertige 5-

oder 6-gliedrige cycloaliphatische Gruppe mit 5 bis 15 Kohlenstoffatomen oder eine Arylengruppe mit 6 bis 14 Kohlenstoffatomen ist, mit der Maßgabe, daß, wenn
Y

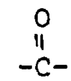

ist, a den Wert 1 hat;
Q ausgewählt ist aus (gezeigt in Bindung an V):

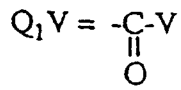

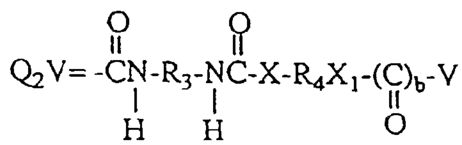

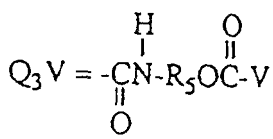

und

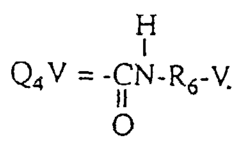

worin

$R_4$ ein Alkylen mit 2 bis 4 Kohlenstoffatomen ist,
$R_5$ ein Alkylen mit 2 bis 10 Kohlenstoffatomen ist,
$R_6$ ein Arylen oder ein Alkyl-substituiertes Arylen mit 6 bis 20 Kohlenstoffatomen ist,
X -O- oder $-NR_7-$ bedeutet, worin $R_7$ ein Alkyl mit 1 bis 5 Kohlenstoffatomen ist,
$X_1$ -O-, -NH- oder $-NR_7-$ bedeutet,
b den Wert 0 oder 1 besitzt,
V

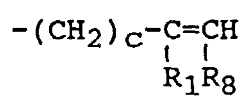

bedeutet,
c den Wert 0 oder 1 besitzt,
$V_1$ die gleiche Bedeutung wie V besitzt, oder für H oder $R_9$ steht, wenn 1 den Wert 0 hat,
$R_8$ für H oder -COOH steht, mit der Maßgabe, daß, wenn $R_8$ -COOH ist, $R_1$ H, c 0 und Q $Q_1$ bedeutet,
$R_9$ ein Alkyl mit 1 bis 18 Kohlenstoffatomen ist;
mit der weiteren Maßgabe, daß, wenn Q $Q_2$ ist, a für O steht;
wenn Q $Q_2$, $Q_3$ oder $Q_4$ ist, $R_8$ für H steht;
wenn c 1 bedeutet, b 0 ist, Q $Q_2$ ist und $R_1$ und $R_8$ H bedeuten; und
wenn $V_1$ $R_9$ ist, m den Wert 0 hat.

**3.** Verfahren nach Anspruch 2, wobei der Polyether PE ein Poly(ethylenoxid) (PEO) mit einem Molekulargewicht von 500 bis 12.000, ein Poly(propylenoxid) (PPO) mit einem Molekulargewicht von 500 bis 15.000, ein Poly(ethylenoxid-copropylenoxid) mit einer Random- oder Blockcopolymerstruktur in den Verhältnissen von PEO:PPO von 1:

30 bis 30:1 mit einem Molekulargewicht von 500 bis 15.000 oder ein Poly(tetramethylenoxid) mit einem Molekulargewicht von 500 bis 10.000 ist.

**4.** Verfahren nach Anspruch 3, wobei der Polyether PE ein Poly(ethylenoxid) mit einem Molekulargewicht von 1500 bis 10.000 oder ein Poly(ethylenoxidcopropylenoxid) mit einem Molekulargewicht von 1500 bis 12.000 ist, und worin a den Wert 1 hat, und $R_2$

$$-CH_2-\underset{CH_3}{\underset{|}{CH}}-$$

bedeutet.

**5.** Verfahren nach Anspruch 3, wobei der Polyether ein Poly(propylenoxid) mit einem Molekulargewicht von 1000 bis 8000 ist, a den Wert 1 hat, und $R_2$ für

$$-CH_2-\underset{CH_3}{\underset{|}{CH}}-\text{steht.}$$

**6.** Verfahren nach Anspruch 3, wobei QV $Q_2V$ ist, worin in $Q_2$ $R_3$ ein zweiwertiger Rest ist, erhalten durch Entfernen der zwei NCO-Gruppen aus einem Diisocyanat, ausgewählt aus der Gruppe bestehend aus Ethylendiisocyanat, 1,2-Diisocyanatopropan, 1,3-Diisocyanatopropan, 1,6-Diisocyanatohexan, 1,2-Diisocyanatocyclohexan, 1,3-Diisocyanatocyclohexan, 1,4-Diisocyanatobenzol, Bis-(4-isocyanatocyclohexyl)methan, Bis-(4-isocyanatocyclohexenyl)methan, Bis-(4-isocyanatophenyl)methan, 2,6- und 2,4-Toluoldiisocyanat; 3,3'-Dichlor-4,4'-diisocyanatobiphenyl; 1,5-Diisocyanatonaphthalin, hydriertem Toluoldiisocyanat; 1-Isocyanatomethyl-5-isocyanato-1,3,3-trimethylcyclohexan (=Isophorondiisocyanat); 2,2,4-(2,4,4)-Trimethylhexan-1,6-diisocyanat, 2,2'-Diisocyanatodiethylfumarat; 1,5-Di-isocyanato-1-carboxypentan; 1,2, 1,3-, 1,6-, 1,7-, 1,8-, 2,7- und 2,3-Diisocyanatonaphthalin; 2,4- und 2,7-Diisocyanato-1-methylnaphthalin; 4,4'-Diisocyanatobiphenyl; 4,4'-Diisocyanato-3,3'-dimethoxybisphenyl"; 4,4'-Diisocyanato-2,2'-dimethylbiphenyl; Bis-(4-isocyanatophenyl)ethan; und Bis-(4-isocyanatophenyl)ether, und $V-(CO)_b-X_1-R_4-X-$ der Rest, erhalten durch Entfernen des aktiven Wasserstoffatoms aus einer Hydroxyl- oder Aminogruppe einer Verbindung, ausgewählt aus der Gruppe, bestehend aus 2-Hydroxyethylacrylat und -methacrylat, 2-und 3-Hydroxypropylacrylat und -methacrylat; 4-Hydroxybutylacrylat und -methacrylat; Glycerin-dimethacrylat; Hydroyethylmaleat und -fumarat; 2-Hydroxyethyl- und 4-Hydroxybutylvinylether; N-tert.-Butylaminoethylmethacrylat, N-(3-Hydroxypropyl)methacryl-amid; Vinylbenzylalkohol; und Allylalkohol, ist.

**7.** Verfahren nach Anspruch 6, wobei das Diisocyanat Isophorondiisocyanat, 2,2,4-(2,4,4)-Trimethylhexan-1,6-diisocyanat, 2,4-Toluoldiisocyanat oder 2,6-Toluoldiisocyanat ist, und die den aktiven Wasserstoff enthaltende Vinylverbindung 2-Hydroxyethylmethacrylat, 2-Hydroxyethylacrylat oder N-tert.-Butylaminoethylmethacrylat ist.

**8.** Verfahren nach Anspruch 3, wobei QV $Q_3V$ ist, und $V-COO-R_5-$ der Rest, erhalten durch Entfernen der NCO-Gruppe von einer Isocyanatverbindung, ausgewählt aus der Gruppe, bestehend aus 2-Isocyanatoethylmethacrylat, 2-Isocyanatoethylacrylat, 3-Isocyanatopropylmethacrylat, 1-Methyl-2-isocyanatoethylmethacrylat, und 1,1-Dimethyl-2 -isocyanatoethylacrylat, ist.

**9.** Verfahren nach Anspruch 8, wobei die Isocyanatverbindung 2-Isocyanatoethylmethacrylat ist.

**10.** Verfahren nach Anspruch 3, wobei QV $Q_4V$ ist, und $V-R_6-$ der Rest, erhalten durch Entfernen der NCO-Gruppe aus 2-Isocyanatobutylvinylether, Styrolisocyanat oder m-Isopropenyl-$\alpha,\alpha$-dimethylbenzylisocyanat, ist.

**11.** Verfahren nach Anspruch 10, wobei das Isocyanat m-Isopropenyl-$\alpha,\alpha$-dimethylbenzylisocyanat ist.

**12.** Verfahren nach Anspruch 4, wobei QV $Q_3V$ ist, und $V-COO-R_5-$ der Rest, erhalten durch Entfernen der NCO-Gruppe von einer Isocyanatverbindung, ausgewählt aus der Gruppe, bestehend aus 2-Isocyanatoethylmethacrylat, 2-Isocyanatoethylacrylat, 3-Isocyanatopropylmethacrylat, 1-Methyl-2-isocyanatoethylmethacrylat, und 1,1-Dimethyl-2-isocyanatoethylacrylat, ist.

**13.** Verfahren nach Anspruch 4, wobei QV $Q_4V$ ist, und $V-R_6-$ der Rest, erhalten durch Entfernen der NCO-Gruppe von 2-Isocyanatobutylvinylether, Styrolisocyanat, oder m-Isopropenyl-$\alpha,\alpha$-dimethylbenzylisocyanat, ist.

**14.** Verfahren nach Anspruch 5, wobei QV $Q_3V$ ist, und V-COO-$R_5$- der Rest, erhalten durch Entfernen der NCO-Gruppe von einer Isocyanatverbindung, ausgewählt aus der Gruppe, bestehend aus 2-Isocyanatoethylmethacrylat, 2-Isocyanatoethylacrylat, 3-Isocyanatopropylmethacrylat, 1-Methyl-2-isocyanatoethylmethacrylat und 1, 1-Dimethyl-2-isocyanatoethylacrylat, ist.

**15.** Verfahren nach Anspruch 5, wobei QV $Q_4V$ ist und V-$R_6$- der Rest, erhalten durch Entfernen der NCO-Gruppe aus 2-Isocyanatobutylvinylether, Styrolisocyanat oder m-Isopropenyl-$\alpha,\alpha$-dimethylbenzylisocyanat, ist.

**16.** Verfahren nach Anspruch 12, wobei die Isocyanatverbindung 2-Isocyanatoethylmethacrylat ist.

**17.** Verfahren nach Anspruch 13, wobei das Isocyanat m-Isopropenyl-$\alpha,\alpha$-dimethylbenzylisocyanat ist.

**18.** Verfahren nach Anspruch 14, wobei das Isocyanat 2-Isocyanatoethylmethacrylat ist.

**19.** Verfahren nach Anspruch 15, wobei das Isocyanat m-Isopropenyl-$\alpha,\alpha$-dimethylbenzylisocyanat ist.

**20.** Verfahren nach Anspruch 2, wobei das PE Poly-(ethylenoxid), Poly(propylenoxid) oder Poly(ethylenoxidrcH propylenoxid) ist, und QV $Q_2V$, $Q_3V$ oder $Q_4V$ ist.

**21.** Verfahren nach Anspruch 20, wobei QV $Q_3V$ oder $Q_4V$ bedeutet, und a den Wert 1 hat.

**22.** Verfahren nach Anspruch 1, wobei (B-1) ein Fluor-enthaltendes Monomeres ist, das mindestens 3 Fluoratome enthält, ausgewählt aus der Gruppe, bestehend aus Hexafluorisopropylacrylat und -methacrylat, Perfluorcyclohexylacrylat und -methacrylat, Pentafluorstyrol und den Acrylat- oder Methacrylatestern oder -amiden der Formel

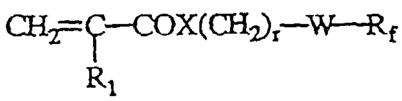

worin

$R_f$ -$(CF_2)_tCF_2L$ oder -$(CF_2CF_2)_qOCF(CF_3)_2$ bedeutet,
$R_1$ für ein Wasserstoffatom oder eine Methylgruppe steht,
X für ein Sauerstoffatom oder -$NR_7$- steht, worin $R_7$ eine Alkylgruppe mit 1-5 Kohlenstoffatomen bedeutet,
r eine ganze Zahl von 1-4 ist,
t eine ganze Zahl von 0-14 ist,
q eine ganze Zahl von 1-3 ist;
L für ein Wasserstoff- oder ein Fluoratom steht, mit der Maßgabe, daß, wenn t den Wert O hat, L für ein Fluoratom steht; und W eine direkte Bindung oder eine zweiwertige Gruppe der Struktur -$NR_7$-CO-; -$NR_7SO_2$-$(CH_2)_r$-; -$NR_7SO_2$-; -S-$(CH_2)_r$-; -$NR_7$-$(CH_2)_r$-$NR_7SO_2$-, oder -NHCO- ist.

**23.** Verfahren nach Anspruch 1, wobei (B-1) ein fluoriertes Monomeres, ausgewählt aus der Gruppe, bestehend aus Hexafluorisopropylacrylat, Hexafluorisopropyl-methacrylat oder eine Verbindung der Struktur (I), wie in Anspruch 22 definiert, worin W eine direkte Bindung, X ein Sauerstoffatom, $R_f$ -$(CF_2)_tCF_2L$ ist, und L ein Fluoratom ist, ist.

**24.** Verfahren nach Anspruch 23, wobei in der Verbindung der Formel (I) $R_1$ ein Wasserstoffatom ist, r 2 ist, und t 6 bis 10 bedeutet, oder worin $R_1$ ein Wasserstoffatom ist, r 1 oder 2 ist, und t 1 bis 4 ist, oder worin R1 Methyl ist, r 2 ist und t 4 bis 10 bedeutet.

**25.** Verfahren nach Anspruch 23, wobei r 1 oder 2 bedeutet, und t 4 bis 8 bedeutet.

**26.** Verfahren nach Anspruch 23, wobei $R_1$ für eine Methylgruppe steht, r den Wert 2 besitzt und t den Wert 4 bis 10 besitzt.

**27.** Verfahren nach Anspruch 1, wobei (B-2) ein Silicon-enthaltendes Vinylmonomeres ist, das ein Oligosiloxanylsilylalkylacrylat oder -methacrylat mit 2 bis 10 Siliciumatomen ist.

**28.** Verfahren nach Anspruch 27, wobei das Monomere aus der Gruppe, bestehend aus Tris(trimethylsiloxy)silyl-proypl (meth)acrylat, Triphenyldimethyldisiloxanylmethyl-(meth)acrylat, Pentamethyldisiloxanylmethylacrylat, tert.-Butyltetramethyldisiloxanylethyl(meth)acrylat, Methyldi-(trimethylsiloxy)silylpropylglyceryl(meth)acrylat; Pentamethyldisiloxanylmethylmethacrylat; Heptamethylcyclotetrasiloxymethylmethacrylat; Heptamethylcyclotetrasiloxypropylmethacrylat; (Trimethylsilyl)decamethylpentasiloxy-propylmethacrylat; und Undecamethylpentasiloxypropyl-methacrylat, ist.

**29.** Verfahren nach Anspruch 28, wobei das Monomere Tris(trimethylsiloxy)silylpropylmethacrylat ist.

**30.** Verfahren nach Anspruch 1, wobei die Komponente (B) 50 bis 84,5 Gew.-% des Copolymeren, die Komponente (C) o bis 20 Gew.-% und die Komponente (D) 0,5 bis 7 Gew.-% beträgt.

**31.** Verfahren nach Anspruch 2, wobei die Komponente (A) 15 bis 49,5 Gew.-% beträgt, und der Polyether PE ein Poly(ethylenoxid) mit einem Molekulargewicht von 1500 bis 10.000 oder ein Poly(ethylenoxid-copropylenoxid) mit einem Molekulargewicht von 1500 bis 10.000 ist, und worin a den Wert 1 hat und $R_2$ $-CH_2-CHCH_3-$ ist, worin QV $Q_3V$ oder $Q_4V$ bedeutet, und $V-COO-R_5-$ der Rest ist, der durch Entfernen der -NCO-Gruppe von 2-Isocyanatoethylmethacrylat oder 2-Isocyanatoethylacrylat erhalten wird, und worin $V-R_6-$ der Rest ist, der durch Entfernen der -NCO-Gruppe von Styrolisocyanat oder m-Isopropenyl-α,α-dimethylbenzyl-isocyanat erhalten wird; die Komponente (B) 50 bis 84,5 Gew.-% der Komponente (B-1) beträgt, wobei (B-1) ein Fluor-enthaltendes Monomeres mit mindestens drei Fluoratomen, ausgewählt aus der Gruppe, bestehend aus Hexafluorisopropylacrylat und -methacrylat, Perfluorcyclohexylacrylat und -methacrylat, Pentafluorstyrol und den Acrylat- und Methacrylatestern der Formel

$$CH_2{=}\underset{\displaystyle R_1}{\underset{|}{C}}{-}COX(CH_2)_r{-}W{-}R_f$$

ist, worin

W eine direkte Bindung ist, X Sauerstoff bedeutet und $R_f$-$(CF_2)_tCF_2L$ ist,
$R_1$ Wasserstoff oder Methyl bedeutet,
r eine ganze Zahl von 1 bis 4 ist,
t eine ganze Zahl von 0 bis 10 ist,
L Wasserstoff oder Fluor bedeutet, mit der Maßgabe, daß wenn t den Wert 0 hat, L Fluor bedeutet;
und die Komponente (C) 0 bis 20 Gew.-% beträgt, und die Komponente (D) 0,5 bis 7 Gew.-% beträgt.

**32.** Verfahren nach Anspruch 30, wobei die Komponente (D) 0,5 bis 7 Gew.-% der Diacrylate und Dimethacrylate von 1,2-Ethylenglycol, 1,2- und 1,3-Propandiol und von 1,3-und 1,4-Butan-, 1,5-Pentan- und 1,6-Hexandiol; der Diacrylate und Dimethacrylate von Diethylen-, Triethylen-und Tetraethylenglycol, und von Neopentylglycol, Di-(2-hydroxyethyl)sulfon und Thiodiethylenglycol; Trimethylol-propantriacrylat und -trimethacrylat, Ditrimethylol-propantetraacrylat, Pentaerythrittetraacrylat und -tetramethacrylat, Dipentaerythritmonohydroxypentaacrylat; Bis-phenol-A- und ethoxyliertem Bisphenol-A-dimethacrylat, Tris-(2-hydroxyethyl)isocyanurattriacrylat; Allyl(meth)-acrylat, Methylenbisacrylamid, Ethylenbismethacrylamid, Divinylbenzol, Allylmethacrylat und Butandioldivinylether; und der Reaktionsprodukte äquivalenter Mengen an aliphatischen, cycloaliphatischen oder aromatischen Diisocyanaten oder von vinyl-ungesättigten (Mono)-isocyanaten mit Hydroxy- oder Amino-substituierten Acrylaten oder Methacrylaten ist.

**33.** Verfahren nach Anspruch 1, wobei die Komponente (C) aus Methoxyethylacrylat und Methoxy-ethylmethacrylat, Ethoxyethylacrylat, Ethoxyethylmethacrylat und Ethoxyethoxyethylacrylat, Methylmethacrylat, Methylacrylat, 2-Hydroxyethylmethacrylat, N-Vinylpyrrolidon, N,N-Dimethylacrylamid und Styrol oder Gemischen davon ausgewählt ist, und die Komponente (D) Ethylenglycoldiacrylat oder -dimethacrylat, Trimethylolpropantriacrylat oder -methacrylat, Neopentylglycol-diacrylat oder -methacrylat, Allylmethacrylat oder Divinylbenzol ausgewählt wird.

**34.** Verfahren nach Anspruch 1, wobei die Komponente (D) 0,5 bis 7 Gew.-% des Copolymeren beträgt.

**35.** Verfahren nach Anspruch 1, wobei die Komponente (D) 0,1 bis 0,5 Gew.-% des Copolymeren beträgt.

**36.** Verfahren nach Anspruch 1, wobei das erhaltene Copolymere in Form einer Kontaktlinse vorliegt.

**37.** Verfahren nach Anspruch 4, wobei die Menge der Komponente (C) Null beträgt.

**38.** Verfahren nach Anspruch 4, wobei die Komponente (A) 15 bis 30 Gew.-% des Copolymeren beträgt.

**39.** Verfahren nach Anspruch 5, wobei die Komponente (A) 30 bis 60 Gew.-% des Copolymeren beträgt.

**40.** Verfahren nach Anspruch 37, wobei das erhaltene Copolymere in Form einer Kontaktlinse vorliegt.

**41.** Verwendung eines Copolymeren nach Anspruch 1 zur Herstellung einer Kontaktlinse.

**42.** Kontaktlinse, umfassend ein Copolymeres nach Anspruch 1.

**43.** Kontaktlinse, bestehend im wesentlichen aus einem Copolymeren nach Anspruch 1.

## Revendications

### Revendications pour les Etats contractants suivants : AT, BE, CH, DE, DK, FR, GB, GR, IT, LI, LU, NL, SE

**1.** Copolymère qui est perméable à l'oxygène, souple, mouillable, biocompatible et convient à une utilisation dans des dispositifs ophtalmiques, tels que des lentilles de contact, ce copolymère étant constitué du produit de polymérisation de

(A) 15 à 69,9 % en poids d'un polyéther téléchélique vinylique, ou un mélange de celui-ci, ledit polymère ne contenant pas de segments perfluoropolyalkyléther
(B) 30 à 84,9 % en poids de
(B-1) un monomère éthyléniquement insaturé fluoré, ou
(B-2) un monomère éthyléniquement insaturé contenant du silicone, ou un mélange de monomère (B-1) et de monomère (B-2), et
(C) 0 à 40 % en poids d'un monomère éthyléniquement insaturé ou d'un mélange de monomères autres que le monomère (B-1) ou le monomère (B-2).
D) 0,1 à 10 % en poids d'un comonomère polyéthyléniquement insaturé de poids moléculaire de 200 à 1000.

**2.** Copolymère selon la revendication 1, dans lequel le polyéther téléchélique vinylique (A) a la formule (A) :

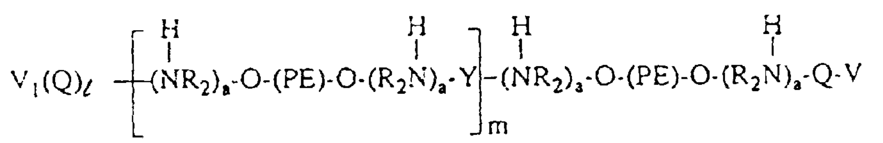
(A)

dans laquelle PE a un poids moléculaire moyen ($PM_n$) d'environ 500 à environ 15 000 et a la formule :

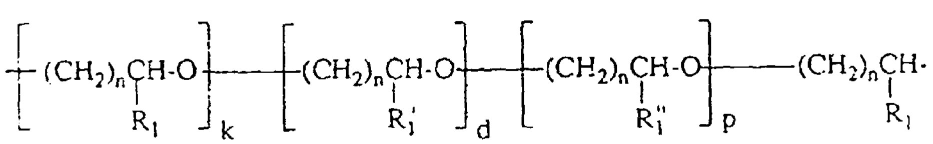
(PE)

dans laquelle

n est compris entre 1 et 3,
k, d et p sont des nombres entiers de 0 à 300, et la somme k+d+p est comprise entre 7 et 300,
$R_1$, $R_1$' et $R_1$" représentent indépendamment les uns des autres des atomes d'hydrogène ou des groupes méthyle, à la condition que si n est égal à 3, $R_1$, $R_1$' et $R_1$" représentent des atomes d'hydrogène,
a est égal à zéro ou 1,
m est un nombre entier de zéro à 2,
l est égal à zéro ou 1

$R_2$ représente un groupe alkylène linéaire ou ramifié avec 2 à 4 atomes de carbone ;
Y représente

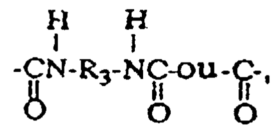

dans lequel $R_3$ est un groupe aliphatique divalent avec 2 à 14 atomes de carbone, un groupe cycloaliphatique divalent à 5 ou 6 membres avec 5 à 15 atomes de C, ou un groupe arylène avec 6 à 14 atomes de C, à la condition que si Y représente

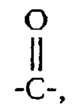

a est égal à 1;
Q est choisi parmi (présenté attaché à V)

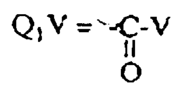

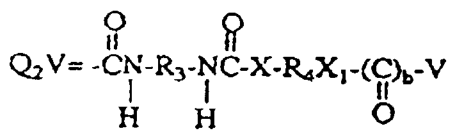

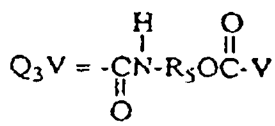

et

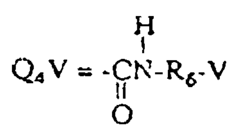

dans lesquels

$R_4$ représente un groupe alkylène de 2 à 4 atomes de carbone,
$R_5$ représente un groupe alkylène de 2 à 10 atomes de carbone,
$R_6$ représente un groupe arylène ou arylène substitué par des groupes alkyle de 6 à 20 atomes de carbone,
X représente -O- ou -$NR_7$-, dans lequel $R_7$ représente un groupe alkyle de 1 à 5 atomes de carbone,
$X_1$ représente -O-, -NH- ou -$NR_7$-,
b est égal à zéro ou 1
V représente

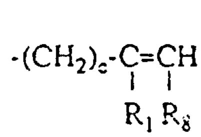

c est égal à zéro ou 1
$V_1$ a la même signification que V, ou représente H ou $R_9$, quand 1 est égal à zéro,
$R_8$ représente H ou -COOH, à la condition que, si $R_8$ représente -COOH,
$R_1$ représente H, c est égal à zéro, et Q est $Q_1$;
$R_9$ représente un groupe alkyle de 1 à 18 atomes de carbone ;
avec la condition supplémentaire que
quand Q représente $Q_2$, a est égal à zéro ;
quand Q représente $Q_2$, $Q_3$ ou $Q_4$, $R_8$ représente H;

quand c est égal à 1, b est égal à 0, Q est $Q_2$ et $R_1$ et $R_8$ représentent H ; et quand $V_1$ est $R_9$, m est égal à zéro.

3. Copolymère selon la revendication 2, dans lequel le polyéther PE est un poly(oxyde d'éthylène) (PEO) de PM 500 à 12 000, un poly(oxyde propylène) (PPO) de PM 500 à 15 000, un poly(oxyde d'éthylène-co-oxyde de propylène) de structure copolymère aléatoire ou bloc dans les rapports de PEO:PPO de 1:30 à 30:1 et de PM 500 à 15 000 ou un poly(oxyde de tétraméthylène) de PM 500 à 10 000.

4. Copolymère selon la revendication 3, dans lequel le polyéther PE est un poly(oxyde d'éthylène) de PM 1500 à 10 000, ou un poly(oxyde d'éthylène-co-oxyde de propylène) de PM 1500 à 12 000 et dans lequel a est égal à 1 et $R_2$ représente

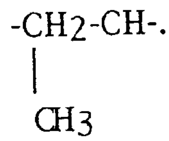

5. Un copolymère selon la revendication 3, dans lequel le polyéther est un poly(oxyde de propylène) de PM 1000 à 8000, a est égal à 1 et $R_2$ représente

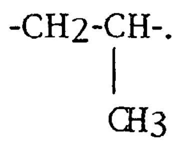

6. Copolymère selon la revendication 3, dans lequel QV est $Q_2V$, dans lequel $Q_2R_3$ est un radical divalent obtenu en retirant les deux groupes -NCO d'un diisocyanate choisi dans l'ensemble constitué de diisocyanate d'éthylène, 1,2-diisocyanatopropane, 1,3-diisocyanatopropane, 1,6-diisocyanatohexane, 1,2-diisocyanatocyclohexane, 1,3-diisocyanatocyclohexane, 1,4-diisocyanatobenzène, bis(4-isocyanatocyclohexyl)méthane, bis(4-isocyanatocyclohexényl) méthane, bis(4-isocyanatophényl)méthane, diisocyanate de 2,6- et 2,4-toluène, 3,3'-dichloro-4,4'-diisocyanatobiphényle ; 1,5-diisocyanatonaphtalène, diisocyanate de toluène hydrogéné ; 1-isocyanatométhyl-5-isocyanato-1,3,3-triméthylcyclohexane (= diisocyanate d'isophorone) ; 2,2,4-(2,4,4)-triméthylhexane-1,6-diisocyanate, fumarate de 2,2'-diisocyanatodiéthyle; 1,5-diisocyanato-1-carboxypentane; 1,2-, 1,3-, 1,6-, 1,7-, 1,8-, 2,7- et 2,3-diisocyanatonaphtalène ; 2,4- et 2,7-diisocyanato-1-méthylnaphtalène ; 4,4'-diisocyanatobiphényle; 4,4'-diisocyanato-3,3'-diméthoxy-bisphényle ; 4,4'-diisocyanato-2,2'-diméthylbiphényle ; bis-(4-isocyanatophényl)éthane; et bis(4-isocyanatophényl)éther, et $V\text{-}(CO)_b\text{-}X_1\text{-}R_4\text{-}X\text{-}$ est le radical obtenu en retirant l'atome d'hydrogène actif d'un groupe hydroxyle ou amino d'un composé choisi dans l'ensemble constitué d'acrylate et méthacrylate de 2-hydroxyéthyle, acrylate et méthacrylate de 2- et 3-hydroxypropyle ; acrylate et méthacrylate de 4-hydroxybutyle ; diméthacrylate de glycérol ; maléate et fumarate d'hydroxyéthyle ; éther vinylique de 2-hydroxyéthyle et 4-hydroxybutyle ; méthacrylate de N-tertiobutylaminoéthyle, N-(3-hydroxypropyl)-méthacrylamide ; alcool vinylbenzylique ; et alcool allylique.

7. Copolymère selon la revendication 6, dans lequel le diisocyanate est le diisocyanate d'isophorone, le 2,2,4-(2,4,4)-triméthylhexane-1,6-diisocyanate, le diisocyanate de 2,4-toluène ou le diisocyanate de 2,6-toluène, et le composé vinylique contenant l'hydrogène actif est le méthacrylate de 2-hydroxyéthyle, l'acrylate de 2-hydroxyéthyle ou le méthacrylate de N-tertiobutylaminoéthyle.

8. Copolymère selon la revendication 3, dans lequel QV est $Q_3V$ et $V\text{-}COO\text{-}R_5\text{-}$ est le radical obtenu en retirant le groupe -NCO d'un composé isocyanate choisi dans l'ensemble constitué de méthacrylate de 2-isocyanatoéthyle, acrylate de 2-isocyanatoéthyle, méthacrylate de 3-isocyanatopropyle, méthacrylate de 1-méthyl-2-isocyanatoéthyle, et acrylate de 1,1-diméthyl-2-isocyanatoéthyle.

9. Copolymère selon la revendication 8, dans lequel le composé isocyanate est le méthacrylate de 2-isocyanatoéthyle.

10. Copolymère selon la revendication 3, dans lequel QV est $Q_4V$ et $V\text{-}R_6\text{-}$ est le radical obtenu en retirant le groupe

-NCO d'un éther vinylique de 2-isocyanatobutyle, d'un isocyanate de styrène, ou d'un isocyanate de m-isopropényl-alpha,alpha-diméthylbenzyle.

**11.** Copolymère selon la revendication 10, dans lequel l'isocyanate est l'isocyanate de m-isopropényl-alpha,alpha-diméthylbenzyle.

**12.** Copolymère selon la revendication 4, dans lequel QV est $Q_3V$ et V-COO-$R_5$- est le radical obtenu en retirant le groupe -NCO d'un composé isocyanate choisi dans l'ensemble constitué de méthacrylate de 2-isocyanatoéthyle, acrylate de 2-isocyanatoéthyle, méthacrylate de 3-isocyanatopropyle, méthacrylate de 1-méthyl-2-isocyanatoéthyle, et acrylate de 1,1-diméthyl-2-isocyanatoéthyle.

**13.** Copolymère selon la revendication 4, dans lequel QV est $Q_4V$ et V-$R_6$- est le radical obtenu en retirant le groupe -NCO d'un éther vinylique de 2-isocyanatobutyle, d'un isocyanate de styrène, ou d'un isocyanate de m-isopropényl-alpha,alpha-diméthylbenzyle.

**14.** Copolymère selon la revendication 5, dans lequel QV est $Q_3V$ et V-COO-$R_5$- est le radical obtenu en retirant le groupe -NCO d'un composé isocyanate choisi dans l'ensemble constitué de méthacrylate de 2-isocyanatoéthyle, acrylate de 2-isocyanatoéthyle, méthacrylate de 3-isocyanatopropyle, méthacrylate de 1-méthyl-2-isocyanatoéthyle, et acrylate de 1,1-diméthyl-2-isocyanatoéthyle.

**15.** Copolymère selon la revendication 5, dans lequel QV est $Q_4V$ et V-$R_6$- est le radical obtenu en retirant le groupe -NCO d'un éther vinylique de 2-isocyanatobutyle, d'un isocyanate de styrène, ou d'un isocyanate de m-isopropényl-alpha,alpha-diméthylbenzyle.

**16.** Copolymère selon la revendication 12, dans lequel le composé isocyanate est le méthacrylate de 2-isocyanatoéthyle.

**17.** Copolymère selon la revendication 13, dans lequel l'isocyanate est l'isocyanate de m-isopropényl-alpha,alpha-diméthylbenzyle.

**18.** Copolymère selon la revendication 14, dans lequel le composé isocyanate est le méthacrylate de 2-isocyanatoéthyle.

**19.** Copolymère selon la revendication 15, dans lequel l'isocyanate est l'isocyanate de m-isopropényl-alpha,alpha-diméthylbenzyle.

**20.** Copolymère selon la revendication 2, dans lequel PE est du poly(oxyde d'éthylène), poly(oxyde de propylène) ou poly(oxyde d'éthylène-co-oxyde de propylène) et QV est $Q_2V$, $Q_3V$ ou $Q_4V$.

**21.** Copolymère selon la revendication 20, dans lequel QV est $Q_3V$ ou $Q_4V$ et a est égal à 1.

**22.** Copolymère selon la revendication 1, dans lequel (B-1) est un monomère contenant du fluor contenant au moins trois atomes de fluor, choisi dans l'ensemble constitué d'acrylate et de méthacrylate d'hexafluoro-isopropyle, d'acrylate et de méthacrylate de perfluorocyclohexyle, de pentafluorostyrène et des esters ou amides d'acrylate ou de méthacrylate de formule

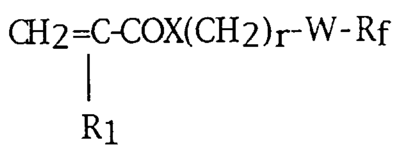

(I)

dans laquelle

$R_f$ représente $-(CF_2)_tCF_2L$ ou $-(CF_2CF_2)_qOCF(CF_3)_2$,
$R_1$ représente un atome d'hydrogène ou un groupe méthyle,
X représente un atome d'oxygène ou -$NR_7$- dans lequel $R_7$ représente un groupe alkyle avec 1 à 5 atomes de carbone,
r est un nombre entier de 1 à 4,

t est un nombre entier de 0 à 14,
q est un nombre entier de 1 à 3 ;
L représente un atome d'hydrogène ou de fluor, à la condition que, quand t est égal à 0, L représente un atome de fluor ; et
W représente une liaison directe ou un groupe divalent de structure $-NR_7-CO-$ ; $-NR_7SO_2-(CH_2)_r$ ; $-NR_7SO_2-$ ; $-S-(CH_2)_r-$; $-NR_7-(CH_2)_r-NR_7SO_2-$ ou -NHCO-.

**23.** Copolymère selon la revendication 1, dans lequel (B-1) est un monomère fluoré choisi dans l'ensemble constitué d'acrylate d'hexafluoro-isopropyle, de méthacrylate d'hexafluoro-isopropyle ou un composé de structure (I), comme défini dans la revendication 22, dans lequel W représente une liaison directe et L représente un atome de fluor.

**24.** Copolymère selon la revendication 23, dans lequel, dans le composé de formule (I), $R_1$ représente un atome d'hydrogène, r est égal à 2, t est compris entre 6 et 10 ; ou dans lequel $R_1$ représente un atome d'hydrogène, r est égal à 1 ou 2, t est compris entre 1 et 4, ou dans lequel $R_1$ représente un groupe méthyle, r est égal à 2, t est compris entre 4 et 10.

**25.** Copolymère selon la revendication 23, dans lequel r est égal à 1 ou 2, t est compris entre 4 et 8.

**26.** Copolymère selon la revendication 23, dans lequel R représente un groupe méthyle, r est égal à 2, et t est compris entre 4 et 10.

**27.** Copolymère selon la revendication 1, dans lequel (B-2) est un monomère vinylique contenant du silicone, qui est un acrylate ou un méthacrylate d'oligosiloxanyl-silyl-alkyle contenant de 2 à 10 atomes de silicium.

**28.** Copolymère selon la revendication 27, dans lequel le monomère est choisi dans l'ensemble constitué de (méth)acrylate de tris(triméthylsiloxy) -silylpropyle, (méth)acrylate de triphényldiméthyl-disiloxanylméthyle, acrylate de pentaméthyl-disiloxanylméthyle, (méth)acrylate de tertiobutyl-tétraméthyldisiloxanyléthyle, (méth)acrylate de méthyl-di(triméthylsiloxy) silylpropyl-glycéryle ; méthacrylate de pentaméthyldi-siloxanyl-méthyle, méthacrylate d'heptaméthyl-cyclotétra-siloxyméthyle, méthacrylate d'heptaméthyl-cyclotétrasiloxy-propyle ; méthacrylate de (triméthylsilyl)-decaméthyl-pentasiloxy-propyle ; et méthacrylate de undécaméthyl-pentasiloxypropyle.

**29.** Copolymère selon la revendication 28, dans lequel le monomère est le méthacrylate de tris(triméthylsiloxy)-silylpropyle.

**30.** Copolymère selon la revendication 1, dans lequel le composant (B) constitue 50 à 84,5 % en poids dudit copolymère, le composant (C) constitue 0 à 20 % en poids et le composant (D) constitue 0,5 à 7 % en poids.

**31.** Copolymère selon la revendication 2, dans lequel le composant (A) constitue 15 à 49,5 % en poids et le polymère PE est un poly(oxyde d'éthylène) de PM 1500 à 10000, ou un poly(oxyde d'éthylène-co-oxyde de propylène) de PM 1500 à 10000 et dans lequel est égal à 1 et $R_2$ représente $-CH_2-CHCH_3-$, dans lequel QV est $Q_3V$ ou $Q_4V$, et $V-COO-R_5-$ est le radical obtenu en retirant le groupe -NCO du méthacrylate de 2-isocyanatoéthyle ou de l'acrylate de 2-isocyanatoéthyle, et dans lequel $V-R_6-$ est le radical obtenu en retirant le groupe -NCO de l'isocyanate de styrène ou de l'isocyanate de m-isopropenyl-α,α-diméthylbenzyle; le composant (B) constitue 50 à 84,5 % en poids de composant (B-1), dans lequel (B-1) est un monomère contenant du fluor contenant au moins trois atomes de fluor choisi dans l'ensemble constitué d'acrylate et de méthacrylate d'hexafluoro-isopropyle, d'acrylate et de méthacrylate de perfluorocyclohexyle, de pentafluorostyrène et des esters d'acrylate et de méthacrylate de formule

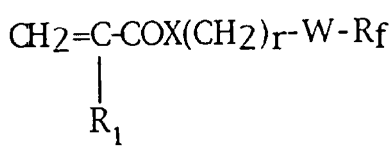

dans laquelle

W représente une liaison directe, X représente un atome d'oxygène et $R_f$ représente $-(CF_2)_tCF_2L$,
$R_1$ représente un atome d'hydrogène ou un groupe méthyle,
r est un nombre entier compris entre 1 et 4,
t est un nombre entier compris entre 0 à 10,

L représente un atome d'hydrogène ou de fluor, à la condition que,
quand t est égal à 0, L représente un atome de fluor ;
et le composant (C) constitue 0 à 20 % en poids et le composant (D) constitue de 0,5 à 7 % en poids.

**32.** Copolymère selon la revendication 30, dans lequel le composant (D) constitue 0,5 à 7 % en poids de diacrylates et diméthacrylates de 1,2-éthylèneglycol, 1,2- et 1,3-propanediol et de 1,3- et 1,4-butane-, 1,5-pentane- et 1,6-hexanediol ; diacrylates et diméthacrylates de diéthylène-, triéthylène- et tétraéthylèneglycol, et de néopentylglycol, di-(2-hydroxyéthyl)sulfone et thiodiéthylèneglycol; triacrylate et triméthacrylate de triméthylolpropane, tétraacrylate de di-triméthylolpropane, tétraacrylate et tétramétacrylate de pentaérythritol, monohydroxypentaacrylate de di-pentaérythritol ; diméthacryalte de bisphénol A et de bisphénol A éthoxylé, triacrylate de tris(2-hydroxyéthyl)-isocyanurate ; méthacrylate d'allyle ; méthylène-bisacrylamide, éthylène-bisacrylamide, divinylbenzène, méthacrylate d'allyle et éther divinylique de butanediol ; les produits de réaction de quantités équivalentes de diisocyanates aliphatiques, cycloaliphatiques et aromatiques ou de (mono)isocyanates à groupes vinyle insaturés avec des acrylates et des méthacrylates substitués par des groupes hydroxy ou amino.

**33.** Copolymère selon la revendication 1, dans lequel le composant (C) est choisi parmi l'acrylate de méthoxy-éthyle et le méthacrylate de méthoxy-éthyle, l'acrylate d'éthoxy-éthyle et le méthacrylate d'éthoxy-éthyle et l'acrylate d'éthoxy-éthoxy-éthyle ; le méthacylate de méthyle, l'acrylate de méthyle, le méthacrylate de 2--hydroxyéthyle; la N-vinylpyrrolidone ; le N,N-diméthylacrylamide et le styrène, ou des mélanges de ceux-ci, et le composant (D) est du diacrylate ou du méthacrylate d'éthylèneglycol, du triacrylate ou du méthacrylate de triméthylolpropane, du diacrylate ou du méthacrylate de néopentylglycol, du méthacrylate d'allyle ou du divinylbenzène.

**34.** Copolymère selon la revendication 1, dans lequel le composant (D) constitue entre 0,5 et 7 % en poids dudit copolymère.

**35.** Copolymère selon la revendication 1, dans lequel le composant (D) constitue entre 0,1 et 0,5 % en poids dudit copolymère.

**36.** Copolymère selon la revendication 1, qui a la forme d'une lentille de contact.

**37.** Copolymère selon la revendication 4, dans lequel la quantité de composant (C) est égale à zéro.

**38.** Copolymère selon la revendication 4, dans lequel le composant (A) constitue entre 15 et 30 % en poids dudit copolymère.

**39.** Copolymère selon la revendication 5, dans lequel le composant (A) constitue entre 30 et 60 % en poids dudit copolymère.

**40.** Copolymère selon la revendication 37, qui a la forme d'une lentille de contact.

**41.** Procédé pour la fabrication d'un copolymère selon la revendication 1, caractérisé par la copolymérisation conventionnelle du mélange de monomères en présence d'un initiateur qui génère des radicaux libres après application d'une énergie d'activation.

**42.** Utilisation d'un copolymère selon la revendication 1 pour la fabrication d'une lentille de contact.

**43.** Lentille de contact constituée d'un copolymère tel que défini dans la revendication 1.

**44.** Lentille de contact constituée essentiellement d'un copolymère tel que défini dans la revendication 1.

**Revendications pour l'Etat contractant suivant : ES**

**1.** Procédé pour la fabrication d'un copolymère qui est perméable à l'oxygène, souple, mouillable, biocompatible et convient à une utilisation dans des dispositifs ophtalmiques, tels que des lentilles de contact, ce copolymère étant constitué du produit de polymérisation de

(A) 15 à 69,9 % en poids d'un polyéther téléchélique vinylique, ou un mélange de celui-ci, ledit polymère ne

contenant pas de segments perfluoropolyalkyléther
(B) 30 à 84,9 % en poids de
(B-1) un monomère éthyléniquement insaturé fluoré, ou
(B-2) un monomère éthyléniquement insaturé contenant du silicone, ou un mélange de monomère (B-1) et de monomère (B-2), et
(C) 0 à 40 % en poids d'un monomère éthyléniquement insaturé ou d'un mélange de monomères autres que le monomère (B-1) ou le monomère (B-2), et
D) 0,1 à 10 % en poids d'un comonomère polyéthyléniquement insaturé de poids moléculaire de 200 à 1000.

caractérisé par la copolymérisation conventionnelle du mélange de monomères en présence d'un initiateur qui génèrent des radicaux libres après application d'une énergie d'activation.

**2.** Procédé selon la revendication 1, dans lequel le polyéther téléchélique vinylique (A) a la formule (A) :

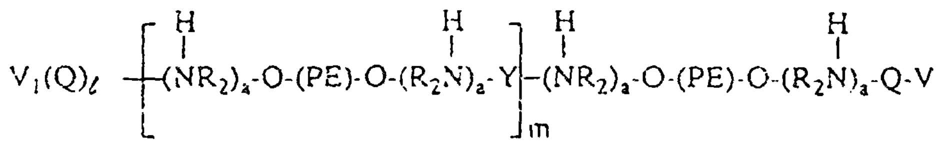
(A)

dans laquelle PE a un poids moléculaire moyen (PM) d'environ 500 à environ 15 000 et a la formule :

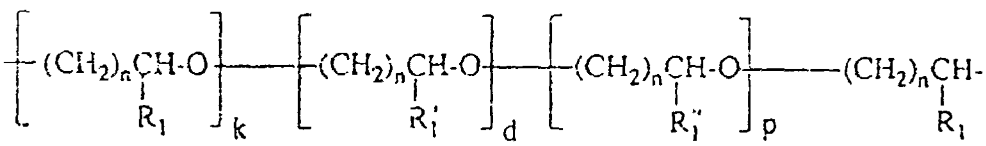
(PE)

dans laquelle

n est compris entre 1 et 3,
k, d et p sont des nombres entiers de 0 à 300, et la somme k+d+p est comprise entre 7 et 300,
$R_1$, $R_1$'et $R_1$" représentent indépendamment les uns des autres des atomes d'hydrogène ou des groupes méthyle, à la condition que si n est égal à 3, $R_1$, $R_1$' et $R_1$" représentent des atomes hydrogène,
a est égal à zéro ou 1,
m est un nombre entier de zéro à 2,
1 est égal à zéro ou 1
$R_2$ est un alkylène linéaire ou ramifié avec 2 à 4 atomes de carbone ;
Y représente

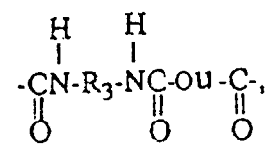

dans lequel $R_3$ représente un groupe aliphatique divalent avec 2 à 14 atomes de carbone, un groupe cycloaliphatique divalent à 5 ou 6 membres avec 5 à 15 atomes de C, ou un groupe arylène avec 6 à 14 atomes de C, à la condition que si Y représente

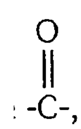

a est égal à 1 ;
Q est choisi parmi (présenté attaché à V)

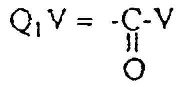

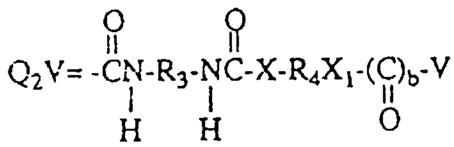

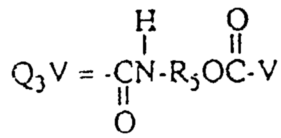

et

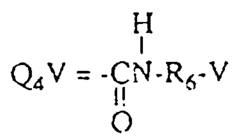

dans lesquels $R_4$ représente un groupe alkylène de 2 à 4 atomes de carbone,
$R_5$ représente un groupe alkylène de 2 à 10 atomes de carbone,
$R_6$ représente un groupe arylène ou arylène substitué par des groupes alkyle de 6 à 20 atomes de carbone,
X représente -O- ou $-NR_7-$, dans lequel $R_7$ est un alkyle de 1 à 5 atomes de carbone,
$X_1$ est -O-, -NH- ou $-NR_7-$,
b est égal à zéro ou 1
V représente

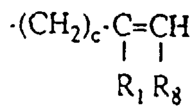

c est égal à zéro ou 1
$V_1$ a la même signification que V, ou représente H ou $R_9$, quand est égal à zéro,
$R_8$ représente H ou -COOH, à la condition que, si $R_8$ représente -COOH,
$R_1$ représente H, c est égal à zéro, et Q est $Q_1$ ;
$R_9$ représente un groupe alkyle de 1 à 18 atomes de carbone ;
avec la condition supplémentaire que
quand Q est $Q_2$, a est égal à zéro ;
quand Q est $Q_2$, $Q_3$ ou $Q_4$, $R_8$ représente H ;
quand c est égal à 1, b est égal à 0, Qest $Q_2$ et $R_1$ et $R_8$ représentent H ; et
quand $V_1$ est $R_9$, m est égal à zéro.

**3.** Procédé selon la revendication 2, dans lequel le polyéther PE est un poly(oxyde d'éthylène) (PEO) de PM 500 à 12 000, un poly(oxyde propylène) (PPO) de PM 500 à 15 000, un poly(oxyde d'éthylène-co-oxyde de propylène) de structure copolymère aléatoire ou bloc dans les rapports de PEO:PPO de 1:30 à 30:1 et de PM 500 à 15 000 ou un poly(oxyde de tétraméthylène) de PM 500 à 10 000.

**4.** Procédé selon la revendication 3, dans lequel le polyéther PE est un poly(oxyde d'éthylène) de PM 1500 à 10 000, ou un poly(oxyde d'éthvlène-co-oxyde de propylène) de PM 1500 à 12 000 et dans lequel a est égal à 1 et $R_2$ représente

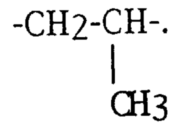

**5.** Procédé selon la revendication 3, dans lequel le polyéther est un poly(oxyde de propylène) de PM 1000 à 8000, a est égal à 1 et $R_2$ représente

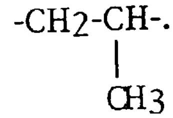

**6.** Procédé selon la revendication 3, dans lequel QV est $Q_2V$, dans lequel $Q_2R_3$ représente un radical divalent obtenu en retirant les deux groupes -NCO d'un diisocyanate choisi dans l'ensemble constitué de diisocyanate d'éthylène, 1,2-diisocyanatopropane, 1,3-diisocyanatopropane, 1,6-diisocyanatohexane, 1,2-diisocyanatocyclohexane, 1,3-diisocyanatocyclohexane, 1,4-diisocyanatobenzène, bis(4-isocyanatocyclohexyl)méthane, bis(4-isocyanatocyclohexényl)méthane, bis(4-isocyanatophényl)méthane, diisocyanate de 2,6- et 2,4-toluène, 3,3'-dichloro-4,4'-diisocyanatobiphényle ; 1,5-diisocyanatonaphtalène, diisocyanate de toluène hydrogéné ; 1 -isocyanatométhyl- 5 -isocyanato- 1,3,3-triméthylcyclohexane (= diisocyanate d'isophorone) ; 2,2,4-(2,4,4)-triméthylhexane- i ,6-diisocyanate, fumarate de 2,2'-diisocyanatodiéthyle; 1,5-diisocyanato-1-carboxypentane ; 1,2-, 1,3-, 1,6-, 1,7-, 1,8-, 2,7- et 2,3-diisocyanatonaphtalène ; 2,4- et 2,7-diisocyanato-1-méthylnaphtalène ; 4,4'-diisocyanatobiphényle ; 4,4'-diisocyanato-3,3'-diméthoxy-bisphényle ; 4,4'-diisocyanato-2,2'-diméthylbiphényle ; bis-(4-isocyanatophényl) éthane ; et bis(4-isocyanatophényl)éther, et $V-(CO)_b-X_1-R_4-X-$ est le radical obtenu en retirant l'atome d'hydrogène actif d'un groupe hydroxyle ou amino d'un composé choisi dans l'ensemble constitué d'acrylate et méthacrylate de 2-hydroxyéthyle, acrylate et méthacrylate de 2- et 3-hydroxypropyle ; acrylate et méthacrylate de 4-hydroxybutyle ; diméthacrylate de glycérol ; maléate et fumarate d'hydroxyéthyle ; éther vinylique de 2-hydroxyéthyle et 4-hydroxy-butyle ; méthacrylate de N-tertiobutylaminoéthyle, N-(3-hydroxypropyl)-méthacrylamide ; alcool vinylbenzylique ; et alcool allylique.

**7.** Procédé selon la revendication 6, dans lequel le diisocyanate est le diisocyanate d'isophorone, le 2,2,4-(2,4,4)-uùnéthylhexane-1,6-diisocyanate, le diisocyanate de 2,4-toluène ou le diisocyanate de 2,6-toluène, et le composé vinylique contenant l'hydrogène actif est le méthacrylate de 2-hydroxyéthyle, l'acrylate de 2-hydroxyéthyle ou le méthacrylate de N-tertiobutylaminoéthyle.

**8.** Procédé selon la revendication 3, dans lequel QV est $Q_3V$ et $V-COO-R_5-$ est le radical obtenu en retirant le groupe -NCO d'un composé isocyanate choisi dans l'ensemble constitué de méthacrylate de 2-isocyanatoéthyle, acrylate de 2-isocyanatoéthyle, méthacrylate de 3-isocyanatopropyle, méthacrylate de 1-méthyl-2-isocyanatoéthyle, et acrylate de 1,1-diméthyl-2-isocyanatoéthyle.

**9.** Procédé selon la revendication 8, dans lequel le composé isocyanate est le méthacrylate de 2-isocyanatoéthyle.

**10.** Procédé selon la revendication 3, dans lequel QV est $Q_4V$ et $V-R_6-$ est le radical obtenu en retirant le groupe -NCO d'un éther vinylique de 2-isocyanatobutyle, d'un isocyanate de styrène, ou d'un isocyanate de m-isopropényl-alpha,alpha-diméthylbenzyle.

**11.** Procédé selon la revendication 10, dans lequel l'isocyanate est l'isocyanate de m-isopropényl-alpha,alpha-diméthylbenzyle.

**12.** Procédé selon la revendication 4, dans lequel QV est $Q_3V$ et $V-COO-R_5-$ est le radical obtenu en retirant le groupe -NCO d'un composé isocyanate choisi dans l'ensemble constitué de méthacrylate de 2-isocyanatoéthyle, acrylate de 2-isocyanatoéthyle, méthacrylate de 3-isocyanatopropyle, méthacrylate de 1-méthyl-2-isocyanatoéthyle, et acrylate de 1,1-diméthyl-2-isocyanatoéthyle.

**13.** Procédé selon la revendication 4, dans lequel QV est $Q_4V$ et $V-R_6-$ est le radical obtenu en retirant le groupe -NCO d'un éther vinylique de 2-isocyanatobutyle, d'un isocyanate de styrène, ou d'un isocyanate de m-isopropényl-alpha,alpha-diméthylbenzyle.

**14.** Procédé selon la revendication 5, dans lequel QV est $Q_3V$ et $V\text{-}COO\text{-}R_5\text{-}$ est le radical obtenu en retirant le groupe -NCO d'un composé isocyanate choisi dans l'ensemble constitué de méthacrylate de 2-isocyanatoéthyle, acrylate de 2-isocyanatoéthyle, méthacrylate de 3-isocyanatopropyle, méthacrylate de 1-méthyl-2-isocyanatoéthyle, et acrylate de 1,1-diméthyl-2-isocyanatoéthyle.

**15.** Procédé selon la revendication 5, dans lequel QV est $Q_4V$ et $V\text{-}R_6\text{-}$ est le radical obtenu en retirant le groupe -NCO d'un éther vinylique de 2-isocyanatobutyle, d'un isocyanate de styrène, ou d'un isocyanate de m-isopropényl-alpha,alpha-diméthylbenzyle.

**16.** Procédé selon la revendication 12, dans lequel le composé isocyanate est le méthacrylate de 2-isocyanatoéthyle.

**17.** Procédé selon la revendication 13, dans lequel l'isocyanate est l'isocyanate de m-isopropényl-alpha,alpha-diméthylbenzyle.

**18.** Procédé selon la revendication 14, dans lequel le composé isocyanate est le méthacrylate de 2-isocyanatoéthyle.

**19.** Procédé selon la revendication 15, dans lequel l'isocyanate est l'isocyanate de m-isopropényl-alpha,alpha-diméthylbenzyle.

**20.** Procédé selon la revendication 2, dans lequel PE est du poly(oxyde d'éthylène), poly(oxyde de propylène) ou poly (oxyde d'éthylène-co-oxyde de propylène) et QV est $Q_2V$, $Q_3V$ ou $Q_4V$.

**21.** Procédé selon la revendication 20, dans lequel QV est $Q_2V$, $Q_3V$ ou $Q_4V$ et a est égal à 1.

**22.** Procédé selon la revendication 1, dans lequel (B-1) est un monomère contenant du fluor contenant au moins trois atomes de fluor, choisi dans l'ensemble constitué d'acrylate et de méthacrylate d'hexafluoro-isopropyle, d'acrylate et de méthacrylate de perfluorocyclohexyle, de pentafluorostyrène et des esters ou amides d'acrvlate ou de méthacrylate de formule

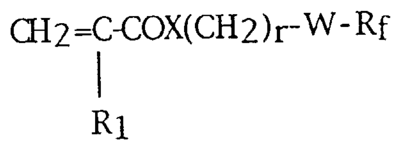

(I)

dans laquelle

$R_f$ représente $-(CF_2)_tCF_2L$ ou $-(CF_2CF_2)_qOCF(CF_3)_2$,
$R_1$ représente un atome d'hydrogène ou un groupe méthyle,
X représente un atome d'oxygène ou $-NR_7-$ dans lequel $R_7$ représente un groupe alkyle avec 1 à 5 atomes de carbone,
r est un nombre entier de 1 à 4,
t est un nombre entier de 0 à 14,
q est un nombre entier de 1 à 3 ;
L représente un atome d'hydrogène ou de fluor, à la condition que, quand t est égal à 0, L représente un atome de fluor ; et
W représente une liaison directe ou un groupe divalent de structure $-NR_7-CO-$ ; $-NR_7SO_2-(CH_2)_r-$; $-NR_7SO_2-$ ; $-S-(CH_2)_r$ ; $-NR_7-(CH_2)r-NR_7SO_2-$ ; ou -NHCO-.

**23.** Procédé selon la revendication 1, dans lequel (B-1) est un monomère fluoré choisi dans l'ensemble constitué d'acrylate d'hexafluoro-isopropyle, de méthacrylate d'hexafluoro-isopropyle ou un composé de structure (I), comme défini dans la revendication 22, dans lequel W représente une liaison directe et L représente un atome de fluor.

**24.** Procédé selon la revendication 23, dans lequel, dans le composé de formule (I), $R_1$ représente un atome d'hydrogène, r est égal à 2, t est compris entre 6 et 10, ou dans lequel $R_1$ représente un atome d'hydrogène, r est égal à 1 ou 2, t est compris entre 1 et 4, ou dans lequel $R_1$ représente un groupe méthyle, r est égal à 2, t est compris entre 4 et 10.

**25.** Procédé selon la revendication 23, dans lequel r est égal à 1 ou 2, t est compris entre 4 et 8.

**26.** Procédé selon la revendication 23, dans lequel $R_1$ représente un groupe méthyle, r est égal à 2 et t est compris entre 4 et 10.

**27.** Procédé selon la revendication 1, dans lequel (B-2) est un monomère vinylique contenant du silicone qui est un acrylate ou un méthacrylate d'oligosiloxanyl-silyl-alkyle contenant de 2 à 10 atomes de silicium.

**28.** Procédé selon la revendication 27, dans lequel le monomère est choisi dans l'ensemble constitué de (méth)acrylate de tris( triméthylsiloxy) -silylpropyle, (méth)acrylate de triphényldiméthyl-disiloxanylméthyle, acrylate de pentaméthyl-disiloxanylméthyle, (méth)acrylate de tertiobutyl-tétraméthyldisiloxanyléthyle, (méth)acrylate de méthyl-di(trbnéthylsiloxy)silylpropyl-glycéryle; méthacrylate de pentaméthyldi-siloxanyl-méthyle, méthacrylate d'heptaméthyl-cyclotétra-siloxyméthyle ; méthacrylate d'heptaméthyl-cyclotétrasiloxy-propyle; méthacrylate de (triméthylsilyl)-decaméthyl-pentasiloxy-propyle ; et méthacrylate de undécaméthylpentasiloxypropyle.

**29.** Procédé selon la revendication 28, dans lequel le monomère est le méthacrylate de tris( triméthylsiloxy) -silylpropyle.

**30.** Procédé selon la revendication 1, dans lequel le composant (B) constitue 50 à 84,5 % en poids dudit copolymère, le composant (C) constitue 0 à 20 % en poids et le composant (D) constitue 0,5 à 7 % en poids.

**31.** Procédé selon la revendication 2, dans lequel le composant (A) constitue 15 à 49,5 % en poids et le polymère PE est un poly(oxyde d'éthylène) de PM 1500 à 10000, ou un poly(oxyde d'éthylène-co-oxyde de propylène) de PM 1500 à 10000 et dans lequel est égal à 1 et $R_2$ représente $-CH_2-CHCH_3-$, dans lequel QV est $Q_3V$ ou $Q_4V$, et V-COO-$R_5$- est le radical obtenu en retirant le groupe -NCO du méthacrylate de 2-isocyanatoéthyle et l'acrylate de 2-isocyanatoéthyle, et dans lequel V-$R_6$- est le radical obtenu en retirant le groupe -NCO de l'isocyanate de styrène ou de l'isocyanate de m-isopropenyl-α,α-dbnéthylbenzyle; le composant (B) est constitué de 50 à 84,5 % en poids du composant (B-1), dans lequel (B-1) est un monomère contenant du fluor contenant au moins trois atomes de fluor, choisi dans l'ensemble constitué d'acrylate et de méthacrylate d'hexafluoro-isopropyle, d'acrylate ou de méthacrylate de perfluorocyclohexyle, de pentafluorostyrène et des esters d'acrylate ou de méthacrylate de formule

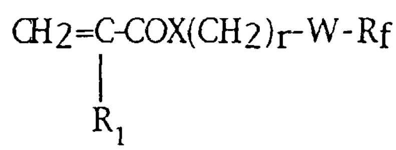

dans laquelle

W est une liaison directe, X représente un atome d'oxygène et $R_f$ représente $-(CF_2)_tCF_2L$,
$R_1$ représente un atome d'hydrogène ou un groupe méthyle,
r est un nombre entier compris entre 1 et 4,
t est un nombre entier compris entre 0 à 10,
L représente un atome d'hydrogène ou de fluor, à la condition que, quand t est égal à O, L représente un atome de fluor;
et le composant (C) constitue 0 à 20 % en poids et le composant (D) constitue 0,5 à 7 % en poids.

**32.** Procédé selon la revendication 30, dans lequel le composant (D) constitue 0,5 à 7 % en poids de diacrylates et diméthacrylates de 1,2-éthylèneglycol, 1,2- et 1,3-propanediol et de 1,3- et 1,4-butane-, 1,5-pentane- et 1,6-hexanediol ; diacrylates et diméthacrylates de diéthylène-, triéthylène- et tétraéthylèneglycol, et de néopentylglycol, di-(2-hydroxyéthyl)sulfone et thiodiéthylèneglycol; triacrylate et triméthacrylate de triméthylolpropane, tétraacrylate de di-Mméthylolpropane, tétraacrylate et tétrametacrylate de pentaérythritol, monohydroxypentaacrylate de di-pentaérythritol ; diméthacryalte de bisphénol A et de bisphénol A éthoxylé, triacrylate de tris(2-hydroxyéthyl)-isocyanurate ; méthacrylate d'allyle ; méthylène-bisacrylamide, éthylène-bisacrylamide, divylbenzène, méthacrylate d'allyle et éther divinylique de butanediol ; les produits de réaction de quantités équivalentes de diisocyanates aliphatiques, cycloaliphatiques et aromatiques ou de (mono)isocyanates à groupes vinyle insaturés avec des acrylates et des méthacrylates substitués par des groupes hydroxy ou amino.

**33.** Procédé selon la revendication 1, dans lequel le composant (C) est choisi parmi l'acrylate de méthoxy-éthyle et le méthacrylate de méthoxy-éthyle, l'acrylate d'éthoxy-éthyle et le méthacrylate d'éthoxy-éthyle et l'acrylate d'éthoxy-éthoxy-éthyle; le méthacylate de méthyle, l'acrylate de méthyle, le méthacrylate de 2--hydroxyéthyle ; la

N-vinylpyrrolidone ; le N,N-diméthylacrylamide et le styrène, ou des mélanges de ceux-ci, et le composant (D) est du diacrylate ou du méthacrylate d'éthylèneglycol du triacrylate ou du méthacrylate de triméthylolpropane, du diacrylate ou du méthacrylate de néopentylglycol, du méthacrylate d'allyle ou du divinylbenzène.

**34.** Procédé selon la revendication 1, dans lequel le composant (D) constitue entre 0,5 et 7 % en poids dudit copolymère.

**35.** Procédé selon la revendication 1, dans lequel le composant (D) constitue entre 0,1 et 0,5 % en poids dudit copolymère.

**36.** Procédé selon la revendication 1, dans lequel le copolymère résultant a la forme d'une lentille de contact.

**37.** Procédé selon la revendication 4, dans lequel la quantité de composant (C) est égale à zéro.

**38.** Procédé selon la revendication 4, dans lequel le composant (A) constitue entre 15 et 30 % en poids dudit copolymère.

**39.** Procédé selon la revendication 5, dans lequel le composant (A) constitue entre 30 et 60 % en poids dudit copolymère.

**40.** Copolymère selon la revendication 37, dans laquelle le copolymère résultant a la forme d'une lentille de contact.

**41.** Utilisation d'un copolymère tel que défini dans la revendication 1 pour la fabrication d'une lentille de contact.

**42.** Lentille de contact constituée un copolymère tel que défini dans la revendication 1.

**43.** Lentille de contact constituée essentiellement d'un copolymère tel que défini dans la revendication 1.